(19) Europäisches Patentamt

European Patent Office

Office européen des brevets

(11) EP 0 775 872 B1

(12) EUROPÄISCHE PATENTSCHRIFT

(45) Veröffentlichungstag und Bekanntmachung des Hinweises auf die Patenterteilung:
20.06.2001 Patentblatt 2001/25

(51) Int Cl.[7]: **F24D 12/02**, F28C 3/06, F24H 1/10

(21) Anmeldenummer: 96117405.9

(22) Anmeldetag: 30.10.1996

(54) **Verfahren und Vorrichtung zur Nutzung der restlichen fühlbaren und der latenten Wärme eines Abgases einer Feuerungsanlage**

Method and apparatus for recovering the remaining sensible and latent heat from the fumes of a furnace

Méthode et appareil pour récupérer la chaleur résiduaire sensible et latente dans les fumées d'un foyer

(84) Benannte Vertragsstaaten:
AT CH DE FR LI

(30) Priorität: 22.11.1995 DE 19543452

(43) Veröffentlichungstag der Anmeldung:
28.05.1997 Patentblatt 1997/22

(73) Patentinhaber: **Deutsches Zentrum für Luft- und Raumfahrt e.V.**
**53175 Bonn (DE)**

(72) Erfinder:
• **Farago, Zoltan**
**74747 Merchingen (DE)**

• **Buschulte, Winfried, Prof. Dr.**
**74196 Neuenstadt (DE)**

(74) Vertreter: **Beck, Jürgen, Dr. Dipl.-Phys.**
**Hoeger, Stellrecht & Partner**
**Uhlandstrasse 14c**
**70182 Stuttgart (DE)**

(56) Entgegenhaltungen:
EP-A- 0 102 480      DE-C- 147 655
DE-U- 29 517 702     FR-A- 2 543 663
GB-A- 1 066 321

**Beschreibung**

Die vorliegende Erfindung betrifft ein Verfahren zur Nutzung der restlichen fühlbaren und der latenten Wärme (Restwärme) eines Abgases einer Feuerungsanlage, bei dem das Abgas durch einen Restwärmetauscher strömt, im Abgas enthaltener Wasserdampf in dem Restwärmetauscher zumindest teilweise zu einem Kondensat kondensiert und das Kondensat in einem den Restwärmetauscher umfassenden Kondensatkreislauf geführt wird.

Ferner betrifft die vorliegende Erfindung eine Vorrichtung zur Nutzung der restlichen fühlbaren und der latenten Wärme (Restwärme) eines Abgases einer Feuerungsanlage mit einem Kondensatkreislauf, der einen von dem Abgas durchströmten Restwärmetauscher umfaßt, in dem in dem Abgas enthaltener Wasserdampf zumindest teilweise zu einem Kondensat kondensierbar ist.

Solche Verfahren und Vorrichtungen sind beispielsweise aus der FR-A-2 543 663 bekannt.

Insbesondere ist es bekannt, in dem Restwärmetauscher durch Versprühen einer Flüssigkeit aus einer Zerstäuberdüse ein Spray zu erzeugen, das eine hohe spezifische Oberfläche aufweist und somit eine große Wärmetauscherfläche für den Wärmeübergang von dem den Restwärmetauscher durchströmenden Abgas zu der versprühten Flüssigkeit bietet. Nachteilig ist dabei jedoch, daß beim Versprühen der Flüssigkeit aus der Düse ein großer Anteil kleiner Tröpfchen entsteht, die vom Abgasstrom mitgerissen werden. Um ein Entweichen dieser Flüssigkeitströpfchen aus dem Restwärmetauscher zu verhindern, ist es erforderlich, denselben mit einem Tropfenabscheider mit hohem Strömungswiderstand an einem Abgasaustritt zu versehen, an dem diese Tröpfchen zurückgehalten werden. Es ist also ein zusätzliches Bauteil erforderlich, was die Herstellungskosten einer so ausgestatteten Vorrichtung zur Nutzung der Restwärme eines Abgases einer Feuerungsanlage erhöht und den Wartungsbedarf steigert. Ferner verschlechtert sich die Energiebilanz der Restwärmenutzung, da gerade zur Erzeugung der kleinen Tröpfchen mit hoher spezifischer Oberfläche, die bevorzugt vom Abgasstrom mitgerissen werden, ein hoher Energiebetrag aufgewendet werden muß.

Es war daher Aufgabe der vorliegenden Erfindung, ein Verfahren und eine Vorrichtung der eingangs genannten Art derart zu verbessern, daß unter Erhaltung einer großen Wärmetauscherfläche im Restwärmetauscher der konstruktive Aufwand für den Restwärmetauscher und die Energieverluste bei der Bildung der Wärmetauscherfläche reduziert werden.

Diese Aufgabe wird durch das Verfahren nach Anspruch 1 gelöst.

Unter der im Restwärmetauscher durch Kondensation aus dem Abgas netto gebildeten Kondensatmenge ist dabei die Differenz aus der im Restwärmetauscher durch Kondensation aus dem Abgas insgesamt gebildeten Kondensatmenge und der im Restwärmetauscher durch das Abgas verdampften Kondensatmenge zu verstehen.

Ein monodisperses Kondensatspray wird in diesem Zusammenhang mit Hilfe des Tropfengrößenspektrums wie folgt definiert:

Es sei $d_{0,05}$ der Tropfendurchmesser, für den gilt, daß alle Tropfen des Kondensatsprays, deren Durchmesser kleiner ist als dieser Durchmesser, zusammen 5% des Flüssigkeitsvolumens des Sprays beinhalten.

Ferner sei $d_{0,95}$ der Tropfendurchmesser, für den gilt, daß alle Tropfen des Kondensatsprays, deren Durchmesser größer ist als dieser Durchmesser, zusammen 5% des Flüssigkeitsvolumens des Sprays beinhalten.

Dann soll ein Kondensatspray als monodispers gelten, wenn das Verhältnis des Durchmessers $d_{0,95}$ zu dem Durchmesser $d_{0,05}$ kleiner ist als ungefähr 1,2.

Ein monodisperses Kondensatspray weist also eine sehr schmale Tropfengrößenverteilung auf. Der mittlere Tropfendurchmesser kann daher so gewählt werden, daß er nur knapp oberhalb des Mindestdurchmessers liegt, ab dem ein Kondensattropfen nicht mehr vom Abgasstrom mitgerissen wird, weil es in dem Kondensatspray nur wenige Tropfen gibt, die einen wesentlich kleineren Durchmesser als den mittleren Tropfendurchmesser aufweisen.

Da es andererseits auch nur relativ wenige Tropfen mit einem deutlich größeren Durchmesser als dem mittleren Tropfendurchmesser in dem Kondensatspray gibt, bietet dieses monodisperse Kondensatspray überdies eine sehr große spezifische Wärmetauscheroberfläche.

Das erfindungsgemäße Konzept bietet den Vorteil, daß solche Kondensattropfen, die vom Abgasstrom mitgerissen werden und daher mittels eines Tropfenabscheiders unter Energieverlust aus dem Abgasstrom am Abgasaustritt des Restwärmetauschers abgetrennt werden müssen, überhaupt nicht oder nur in hinreichend kleiner Menge erzeugt werden.

Im Idealfall könnte daher auf einen Tropfenabscheider am Abgasaustritt verzichtet werden. In der Praxis kann allerdings eine zusätzliche unerwünschte Tropfenbildung direkt am Abgasaustritt auftreten.

Zum einen läßt sich nämlich in der Regel nicht vermeiden, daß sich an der Innenwand des Restwärmetauschers ein abwärts fließender Kondensatfilm ausbildet, der an einem oberen Rand der Mündungsöffnung des Abgasaustritts durch das Zusammenwirken der Massenträgheit und des Quanda-Effektes, aufgrund dessen der Film der Wandkrümmung in den Abgasaustritt hinein zu folgen versucht, in Tropfen zerfällt.

Zum anderen läßt sich in der Regel auch nicht vermeiden, daß Kondensattropfen aus dem Restwärmetauscher nahe eines unteren Randes der Mündungsöffnung des Abgasaustritts auf die Innenwand des Abgasaustritts aufprallen und dabei in kleinere Tropfen mit breitem Tropfengrößenspektrum zerfallen.

Um diese direkt am Abgasaustritt entstehenden Tropfen zurückzuhalten, wird in der Regel auch bei der erfindungsgemäßen Lösung ein Tropfenabscheider erforderlich sein. Wegen der im Vergleich zu den bekannten Spraywärmetauschern reduzierten Beladung des austretenden Abgases mit im Inneren des Restwärmetauschern erzeugten Kondensattropfen kann der Tropfenabscheider bei der erfindungsgemäßen Lösung jedoch ein- statt mehrstufig ausgelegt sein und einen geringeren Strömungswiderstand aufweisen.

Da erfindungsgemäß in dem Restwärmetauscher durch Kondensation aus dem Abgas netto mehr Kondensat gebildet, als von dem Abgasstrom zum Abgasaustritt des Restwärmetauschers mitgeführt wird, wird dem Kondensatkreislauf im zeitlichen Mittel stets zusätzliches Kondensat zugeführt, so daß für den Betrieb des Restwärmetauschers das aus dem Abgas kondensierte Wasser ausreicht und keine weitere Flüssigkeit dem Kondensatkreislauf zugeführt werden muß.

Um nach Durchlaufen des Restwärmetauschers ein besonders trockenes und damit wenig korrodierendes Abgas zu erhalten und so unter Umständen auf einen Temperaturwechsler in der Abgasleitung verzichten zu können, ist es besonders günstig, wenn im zeitlichen Mittel die in Form von in dem Restwärmetauscher aus dem Kondensatstrahl gebildeten Kondensattropfen mit dem Abgas zu einem Abgasaustritt des Restwärmetauschers mitgeführte Kondensatmenge kleiner ist als ungefähr 10%, vorzugsweise kleiner als ungefähr 4%, der im Restwärmetauscher durch Kondensation aus dem Abgas netto gebildeten Kondensatmenge. Dadurch lassen sich auch Kondensatverluste, beispielsweise aufgrund von Verdunstung, während längerer Standzeiten zwischen den Betriebsphasen des erfindungsgemäßen Verfahrens ausgleichen. In diesem Fall kann das Abgas durch einen herkömmlichen Schornstein ins Freie geleitet werden, da der Taupunkt des Abgases niedrig genug liegt, um eine Kondensatbildung aus dem Abgas im Schornstein zu verhindern, so daß kein teurer kondensatbeständiger Schornstein erforderlich ist.

Die konstruktiv einfachste Art zur Erzeugung des Kondensatstrahls besteht darin, den Kondensatstrahl durch Ausströmen des Kondensats aus einer Düsenbohrung mit einer Eintrittsöffnung und einer Austrittsöffnung zu erzeugen.

Bei geeigneter Ausgestaltung der Düsenbohrung und geeigneter Einstellung der Kondensatströmung zerfällt der erzeugte Kondensatstrahl durch Rayleigh-Zerfall in ein monodisperses Kondensatspray.

Um einen Rayleigh-Zerfall mit kurzer Zerfallslänge zu erhalten, ist es von Vorteil, wenn die Reynolds-Zahl der Kondensatströmung an einem Auslaß der Düsenbohrung auf einen Wert kleiner als ungefähr 5.000, vorzugsweise kleiner als ungefähr 2.500, eingestellt wird. Dabei ist die Reynolds-Zahl Re definiert als

$$Re = u\,D/\nu,$$

wobei u die Strömungsgeschwindigkeit des Kondensats an der Austrittsöffnung der Düsenbohrung, D den Durchmesser der

Austrittsöffnung und ν die kinematische Viskosität des Kondensats bezeichnet. Durch eine laminare Strömung bei den genannten Reynoldszahlen wird ein Rayleigh-Zerfall des Kondensatstrahls mit kurzer Zerfallslänge gefördert, so daß der Kondensatstrahl schon nach kurzer Fallstrecke in das monodisperse Kondensatspray zerfällt und dadurch die im Restwärmetauscher zur Verfügung stehende Wärmetauscherfläche maximiert wird.

Um zu verhindern, daß an einer Unterseite einer die Düsenbohrung enthaltenden Düsenplatte ein geschlossener Kondensatfilm entsteht, der die Ausbildung eines definierten Kondensatstrahls behindert, wird vorteilhafterweise die Reynolds-Zahl der Kondensatströmung an dem Auslaß der Düsenbohrung auf einen Wert größer als ungefähr 100, vorzugsweise größer als ungefähr 500, eingestellt.

Ferner ist es zum Erzielen eines Rayleigh-Zerfalls mit kurzer Zerfallslänge günstig, wenn eine Düsenbohrung mit einem Düsenkanal verwendet wird, dessen Länge mindestens dem ungefähr 3-fachen Durchmesser der Austrittsöffnung der Düsenbohrung entspricht. Dadurch wird eine dem Rayleigh-Zerfall förderliche gute Haftung zwischen der Kondensatströmung und der Wand der Düsenbohrung erreicht.

Um andererseits den Strömungswiderstand für das Durchströmen der Düsenbohrung nicht zu groß werden zu lassen, ist es von Vorteil, wenn eine Düsenbohrung mit einem Düsenkanal verwendet wird, dessen Länge höchstens dem ungefähr 5-fachen Durchmesser der Austrittsöffnung der Düsenbohrung entspricht.

Über die Form der Düsenbohrung wurden bislang noch keine näheren Angaben gemacht.

Am preisgünstigsten ist es, wenn eine Düsenbohrung mit einem im wesentlichen zylindrischen Düsenkanal verwendet wird.

Zur Förderung eines Rayleigh-Zerfalls mit kurzer Zerfallslänge hat es sich als günstig erwiesen, wenn eine im wesentlichen zylindrische Düsenbohrung einen konischen Einlauf mit einem Öffnungswinkel von weniger als ungefähr 60° und mit einer Länge, die mindestens dem ungefähren Durchmesser der Austrittsöffnung der Düsenbohrung entspricht, aufweist.

Alternativ oder ergänzend zu einem konischen Einlauf kann auch ein gerundeter Einlauf mit einem Krümmungsradius, der mindestens dem ungefähren Durchmesser der Austrittsöffnung der Düsenbohrung entspricht, verwendet werden.

Zur Vermeidung von Einlaufrezirkulation oder Kavitation in der Düsenbohrung, die jeweils einen erhöhten Strömungswiderstand und die Bildung einer großen Anzahl zu kleiner Tropfen zur Folge haben, ist es vorteilhaft, wenn eine Düsenbohrung mit einem Düsenkanal verwendet wird, der sich zu der Austrittsöffnung hin konisch verjüngt.

Günstig ist es, wenn der sich konisch verjüngende Düsenkanal einen Öffnungswinkel von weniger als ungefähr 10° aufweist.

Bei Verwendung einer sich konisch verjüngenden Düsenbohrung ist es von Vorteil, wenn diese Düsenbohrung einen konischen Einlauf mit einem Öffnungswinkel von weniger als ungefähr 60° und mit einer Länge, die mindestens einem Fünftel des ungefähren Durchmessers der Austrittsöffnung der Düsenbohrung entspricht, aufweist.

Für die Unterdrückung von Einlaufkavitation und Einlaufrezirkulation hat es sich als besonders günstig erwiesen, eine Düsenbohrung zu verwenden, die einen abgerundeten Einlauf mit einem Krümmungsradius, der mindestens einem Fünftel des ungefähren Durchmessers der Austrittsöffnung der Düsenbohrung entspricht, aufweist.

Zur Erhöhung der Wärmetauscherfläche im Restwärmetauscher werden vorteilhafterweise mehrere Kondensatstrahlen durch Ausströmen des Kondensats aus jeweils einer Düsenbohrung erzeugt.

Um zu verhindern, daß die aus verschiedenen Kondensatstrahlen erzeugten Tropfen koagulieren, ist es von Vorteil, wenn mehrere Düsenbohrungen verwendet werden, deren Mittelachsen jeweils einen Abstand voneinander aufweisen, der mindestens dem fünffachen, vorzugsweise mindestens dem achtfachen ungefähren Durchmesser der Austrittsöffnung einer Düsenbohrung entspricht.

Beim freien Fall durch das den Restwärmetauscher durchströmende Abgas könnten die aus dem Kondensatstrahl oder den Kondensatstrahlen erzeugten Tropfen unerwünschterweise weiter in kleinere Tröpfchen zerfallen, wenn ihre sogenannte Weberzahl zu hoch ist.

Die Weberzahl We ist definiert als

$$We = u_r^2 \, d \, \rho/\sigma,$$

wobei $u_r$ die Relativgeschwindigkeit zwischen dem Tropfen und der umgebenden Gasatmosphäre, d den Tropfendurchmesser, $\rho$ die Kondensatdichte in dem Tropfen und $\sigma$ die Oberflächenspannung des Kondensats bezeichnet.

Um einen unerwünschten weiteren Zerfall der Tropfen des durch Zerfall des Kondensatstrahls erzeugten Kondensatsprays weitgehend auszuschließen, wird die Weberzahl dieser Tropfen vorteilhafterweise auf einen Wert kleiner als ungefähr 10, vorzugsweise kleiner als ungefähr 5, insbesondere kleiner als ungefähr 2, eingestellt.

Wie aus der Definition der Weberzahl zu ersehen ist, kann dieselbe im wesentlichen durch Änderung der Relativgeschwindigkeit $u_r$ oder des mittleren Tropfendurchmessers geändert werden.

Die Relativgeschwindigkeit $u_r$ hängt von der Strömungsgeschwindigkeit des Kondensats an den Austrittsöffnungen der Düsenbohrungen und von der Strömungsgeschwindigkeit des Abgases im Restwärmetauscher ab, welche im wesentlichen umgekehrt proportional zur Querschnittsfläche des Restwärmetauschers ist. Ferner hängt die Relativgeschwindigkeit $u_r$ von der Ausrichtung des Abgasstromes relativ zur Fallrichtung des Kondensatsprays ab. Wird der Abgasstrom in entgegengesetzter Richtung zum Kondensatstrom durch den Restwärmetauscher geführt, also nach dem Gegenstromprinzip, wodurch ein besonders guter Wärmeübergang zwischen dem Abgas und dem Kondensat erreicht wird, so addieren sich die Fallgeschwindigkeit der Kondensattropfen und die Strömungsgeschwindigkeit des Abgases zu der Relativgeschwindigkeit $u_r$. Wird hingegen der Abgasstrom in derselben Richtung wie der Kondensatstrom durch den Restwärmetauscher geführt, so entspricht die Relativgeschwindigkeit $u_r$ der Differenz der Fallgeschwindigkeit der Kondensattropfen und der Strömungsgeschwindigkeit des Abgases. Bei dieser letzteren Möglichkeit verringert sich zwar das Temperaturgefälle zwischen dem Abgas und dem Kondensatstrom, was den Wärmeübergang zwischen denselben verlangsamt, doch verringern sich auch die Relativgeschwindigkeit $u_r$ und damit die Weberzahl, in welche die Relativgeschwindigkeit $u_r$ quadratisch eingeht, erheblich. Sind hohe Abgasströmungsgeschwindigkeiten zu erwarten, beispielsweise aufgrund einer kleinen Wärmetauscher-Querschnittsfläche, wird daher vorteilhafterweise das Abgas in derselben Richtung wie das Kondensat durch den Restwärmetauscher geführt.

Ferner wird die der Erfindung zugrundeliegende Aufgabe auch durch das Verfahren nach Anspruch 21 gelöst.

Da bei dieser Ausgestaltung des erfindungsgemäßen Verfahrens im wesentlichen gar keine Tropfen erzeugt werden, können erst recht keine Tropfen entstehen, die klein genug sind, um vom Abgasstrom mitgerissen zu werden.

Idealerweise wird der Kondensatstrahl so erzeugt, daß er nicht in Tropfen zerfällt, bis er auf einen am Boden des Restwärmetauschers angeordneten Kondensatsumpf auftrifft. Die Anzahl zum Abgasaustritt mitgerissener Kondensattropfen wird jedoch schon deutlich reduziert, wenn der Kondensatstrahl zumindest bis in die Höhe des Abgasaustritts intakt bleibt und erst unterhalb des Abgasaustritts in Tropfen zerfällt.

Am einfachsten ist es auch bei dieser Ausgestaltung, den Kondensatstrahl durch Ausströmen des Kondensats aus einer Düsenbohrung mit einer Eintrittsöffnung und einer Austrittsöffnung zu erzeugen.

Für die Erzeugung eines nicht in Tropfen zerfallenden Kondensatstrahls ist es günstig, wenn die Reynoldszahl der Kondensatströmung an der Austrittsöffnung der Düsenbohrung auf einen Wert kleiner als ungefähr 20.000, vorzugsweise kleiner als ungefähr 10.000, und größer als ungefähr 100 eingestellt wird.

Ferner ist es von Vorteil, wenn durch die Form der Düsenbohrung die Zerfallsneigung des erzeugten Kondensatstrahls weiter verringert wird.

Aus Kostengründen wird vorteilhafterweise eine Düsenbohrung mit einem im wesentlichen zylindrischen Düsenkanal verwendet.

Solche zylindrische Düsenkanäle werden am kostengünstigsten aus einer Düsenplatte herausgestanzt. Der kleinste Kanaldurchmesser, der durch Stanzen hergestellt werden kann, entspricht ungefähr der Plattenstärke. Die Stärke der Düsenplatte kann daher nicht größer sein als der Durchmesser der

Düsenkanäle, was bei Durchmessern kleiner als ungefähr 1 mm zu Problemen mit der mechanischen Stabilität der Düsenplatte führt. Diese Probleme können dadurch behoben werden, daß die Düsenplatte an ihrer Unterseite mit einer stärkeren Stützplatte verbunden, beispielsweise verklebt, wird, wobei die Stützplatte zu den Düsenkanälen der Düsenplatte koaxiale Kanäle aufweist, deren Durchmesser den der Düsenkanäle übertrifft. Durch das Vorsehen der Stützplatte wird ein Plattenverbund mit ausreichender Steifigkeit geschaffen, ohne die Ausbildung der Kondensatstrahlen zu beeinflussen.

Zur Erzeugung eines nicht zerfallenden Kondensatstrahls wird bei einem gestanzten Düsenkanal das Verhältnis des Durchmessers des Düsenkanals zur Dicke der Düsenplatte vorzugsweise ungefähr gleich eins gewählt.

Bei auf beliebige Weise hergestellten Düsenbohrungen ist es zur Vermeidung eines Zerfalls des Kondensatstrahls günstig, wenn der Kondensatstrahl nur eine geringe Haftung an den Wänden der Düsenbohrung aufweist. Es ist daher von Vorteil, wenn eine Düsenbohrung mit einem Düsenkanal verwendet wird, dessen Länge kleiner ist als das Zweifache, vorzugsweise kleiner ist als die Hälfte, des ungefähren Durchmessers der Eintrittsöffnung der Düsenbohrung.

Ferner ist es für die Erzeugung eines nicht zerfallenden Kondensatstrahls günstig, wenn eine Düsenbohrung verwendet wird, die einen scharfkantigen Einlauf mit einem Krümmungsradius, der kleiner ist als ein Viertel, vorzugsweise kleiner ist als ein Zehntel, des ungefähren Durchmessers der Eintrittsöffnung der Düsenbohrung, aufweist.

Zur weiteren Verringerung der Haftung zwischen dem Kondensatstrahl und der Wand der Düsenbohrung ist es ferner von Vorteil, wenn eine Düsenbohrung verwendet wird, die sich zu der Austrittsöffnung hin im wesentlichen konisch erweitert.

Um den Strömungswiderstand der Düsenbohrung und damit die erforderliche Leistung einer den Kondensatkreislauf in Gang haltenden Pumpe nicht zu groß werden zu lassen, wird vorzugsweise eine Düsenbohrung mit einer Austrittsöffnung, deren Durchmesser größer ist als ungefähr 0,2 mm, insbesondere größer als ungefähr 0,4 mm, verwendet.

Um andererseits eine möglichst große Wärmetauscherfläche an der Oberfläche des Kondensatstrahls oder der aus dem Kondensatstrahl hervorgegangenen Tropfen zu erhalten, wird vorteilhafterweise eine Düsenbohrung verwendet, deren Durchmesser kleiner ist als ungefähr 2,5 mm.

Wird in dem Restwärmetauscher lediglich ein frei fallender Kondensatstrahl erzeugt, der gegebenenfalls in ein monodisperses Kondensatspray zerfällt, so erfüllt dieser zwei Aufgaben:

Zum einen wird der Kondensatstrahl bzw. das aus demselben hervorgegangene Kondensatspray nahe eines Abgaseintritts in den Restwärmetauscher zumindest teilweise verdampft, wodurch das in den Restwärmetauscher gelangende heiße Abgas abgekühlt wird.

Zum anderen kondensieren in einem Bereich des Restwärmetauschers nahe einem Abgasaustritt der aus dem Kondensatstrahl bzw. dem monodispersen Kondensatspray verdampfte Wasserdampf und der beim Eintritt in den Restwärmetauscher bereits im Abgas vorhandene Wasserdampf an dem Kondensatstrahl bzw. dem daraus hervorgegangenen Kondensatspray, wobei die latente Wärme des Wasserdampfes in fühlbare Wärme des Kondensats gewandelt wird.

Da kleine Kondensattröpfchen leichter verdampft werden können als größere Kondensattropfen, ist es daher günstig, wenn das Kondensat im Bereich des Abgaseintritts in Form relativ kleiner Tropfen vorliegt, während das Kondensat im Bereich des Abgasaustritts vorzugsweise in Form größerer Tropfen oder als intakter Kondensatstrahl vorliegt, da an relativ großen Tropfen bzw. an einem intakten Kondensatstrahl die Kondensation des im Abgas enthaltenen Wasserdampfes erleichtert ist.

Bei einer bevorzugten Ausgestaltung des erfindungsgemäßen Verfahrens wird daher in dem Restwärmetauscher nahe eines Abgaseintritts, durch den das Abgas in den Restwärmetauscher strömt, ein Verdampfungs-Kondensatspray erzeugt, dessen Tropfen durch den Abgasstrom im wesentlichen vollständig verdampft werden. Das Tropfengrößenspektrum dieses zusätzlich erzeugten Verdampfungs-Kondensatsprays kann für eine möglichst einfache und rasche Verdampfung durch das in den Restwärmetauscher eintretende Abgas optimiert werden. Da das Verdampfungs-Kondensatspray vollständig durch den Abgasstrom verdampft wird, besteht keine Gefahr, daß Tropfen aus demselben vom Abgasstrom mitgerissen werden. Völlig unabhängig von dem Verdampfungs-Kondensatspray kann der frei durch den Restwärmetauscher fallende Kondensatstrahl oder das aus diesem hervorgehende monodisperse Kondensatspray für eine möglichst leichte Kondensation des im Abgas mitgeführten Wasserdampfes optimiert werden.

Um eine möglichst vollständige Verdampfung des Verdampfungs-Kondensatsprays zu gewährleisten, wird dieses vorteilhafterweise so erzeugt, daß es eine arithmetische mittlere Tropfengröße zwischen ungefähr 10 μm und ungefähr 100 μm aufweist.

Um den zusätzlichen Energieaufwand für die Erzeugung des Verdampfungs-Kondensatsprays gering zu halten, ist es günstig, wenn im zeitlichen Mittel die zur Erzeugung des Verdampfungs-Kondensatsprays verwendete Kondensatmenge höchstens ungefähr ein Zehntel, vorzugsweise höchstens ungefähr ein Hundertstel, der in den Restwärmetauscher eintretenden Kondensatmenge beträgt.

Ferner ist es von Vorteil, wenn im zeitlichen Mittel die zur Erzeugung des Verdampfungs-Kondensatsprays verwendete Kondensatmenge ungefähr der im Restwärmetauscher durch Kondensation aus dem Abgas netto gebildeten Kondensatmenge entspricht.

Über die Art der Erzeugung des Verdampfungs-Kondensatsprays wurden bislang noch keine näheren Angaben gemacht.

So kann vorgesehen sein, daß das Verdampfungs-Kondensatspray durch Versprühen aus einer Zerstäuberdüse erzeugt wird.

Durch Erhöhen des Kondensatdruckes, beispielsweise durch eine zusätzliche Flüssigkeitspumpe, in einer Kondensatzuleitung zu der Zerstäuberdüse, kann ein für die Verdampfung durch das Abgas besonders geeignetes Verdampfungs-Kondensatspray mit kleinem mittleren Tropfendurchmesser erzeugt werden.

Alternativ oder ergänzend zu einer Erzeugung des Verdampfungs-Kondensatsprays mittels einer Zerstäuberdüse kann vorgesehen sein, daß das Verdampfungs-Kondensatspray durch Auftreffen des Kondensatstrahls oder durch Auftreffen von Tropfen eines durch Zerfall des Kondensatstrahls entstandenen Kondensatsprays auf eine Zerstäuberplatte erzeugt wird. Beim Auftreffen auf die Zerstäuberplatte entstehen aus dem Kondensatstrahl bzw. aus dem Kondensatspray kleine Tröpfchen oder Ligamente, die das Verdampfungs-Kondensatspray bilden. Diese Art der Erzeugung des Verdampfungs-Kondensatsprays erfordert nur einen geringen konstruktiven Aufwand und keine zusätzliche Energiezufuhr.

Vorteilhaft ist es, wenn ein Lochblech als Zerstäuberplatte verwendet wird, da ein solches Lochblech sowohl für das durch den Restwärmetauscher strömende Abgas als auch für das Kondensat teilweise durchlässig ist, so daß weder der Abgasnoch der Kondensatstrom durch den Restwärmetauscher durch die Zerstäuberplatte unterbrochen werden.

Für die Erzeugung eines leicht verdampfbaren Verdampfungs-Kondensatsprays hat es sich als besonders vorteilhaft erwiesen, wenn eine unter einem Winkel von ungefähr 50° bis ungefähr 75° gegen die Richtung des frei fallenden Kondensatstrahls ausgerichtete Zerstäuberplatte verwendet wird.

Um eine Verdunstung von Kondensat aus einem unterhalb der Zerstäuberplatte angeordneten Kondensatreservoir während Betriebspausen der Feuerungsanlage zu minimieren, ist es von Vorteil, wenn ein Kondensatdurchlaß in der Zerstäuberplatte während des Betriebs der Feuerungsanlage geöffnet und während Betriebspausen der Feuerungsanlage geschlossen wird.

Für eine Optimierung der Wärme- und Stoffübertragungsvorgänge im Restwärmetauscher kann es von Vorteil sein, mehrere Zerstäuberplatten zur Erzeugung des Verdampfungs-Kondensatsprays zu verwenden.

Um den Brennstoffbedarf einer Heizwasser erwärmenden Feuerungsanlage zu minimieren, ist vorteilhafterweise vorgesehen, daß mittels eines in dem Kondensatkreislauf angeordneten Kondensat-Heizwasser-Wärmetauschers in dem Restwärmetauscher aus dem Abgas aufgenommene Wärme von dem Kondensat an Heizwasser in einem Heizwasserkreislauf abgegeben wird.

Alternativ oder ergänzend dazu kann vorgesehen sein, daß mittels eines in dem Kondensatkreislauf angeordneten Kondensat-Brauchwasser-Wärmetauschers in dem Restwärmetauscher aus dem Abgas aufgenommene Wärme von dem Kondensat an Brauchwasser in einer Brauchwasserzuführleitung abgegeben wird. In diesem Falle ist eine effektive Nutzung der Restwärme des Abgases der Feuerungsanlage auch während des Sommerbetriebs der Feuerungsanlage möglich, wenn der Heizwasserkreislauf stillgelegt ist und die Feuerungsanlage lediglich zur Erwärmung von Brauchwasser, beispielsweise nach dem Durchlauferhitzerverfahren, in Betrieb genommen wird.

Um möglichst die gesamte im Kondensat gespeicherte nutzbare Wärme an den Heizwasserkreislauf oder das Brauchwasser in der Brauchwasserzuführleitung abgeben zu können, ist es günstig, wenn eine Kondensatströmung durch den Kondensatkreislauf nach Abschalten der Feuerungsanlage während einer Nachlaufzeit aufrechterhalten wird. Während dieser Nachlaufzeit gibt dann das Kondensat in dem Kondensat-Heizwasser-Wärmetauscher und/oder in dem Kondensat-Brauchwasser-Wärmetauscher im Restwärmetauscher aus dem Abgas aufgenommene Wärme an das Heizwasser bzw. das Brauchwasser ab.

Da nach dem Abschalten der Feuerungsanlage kein heißes Abgas mehr in den Restwärmetauscher eintritt, braucht während der Nachlaufzeit kein frei fallender Kondensatstrahl in dem Restwärmetauscher mehr erzeugt zu werden. Vielmehr wird vorteilhafterweise während der Nachlaufzeit zumindest ein Teil des im Kondensatkreislauf umlaufenden Kondensats an einer Einrichtung zur Erzeugung des frei durch den Restwärmetauscher fallenden Kondensatstrahls, beispielsweise an der oder den Düsenbohrungen vorbeigeführt, um den Strömungswiderstand im Kondensatkreislauf zu verringern und Kondensatverluste im Restwärmetauscher zu vermeiden.

Die der Erfindung zugrundeliegende Aufgabe wird ferner durch die Vorrichtung nach Anspruch 49 und durch die Vorrichtung nach Anspruch 69 gelöst.

Die erfindungsgemäßen Vorrichtungen bieten den Vorteil, daß solche Kondensattropfen, die von dem Abgasstrom durch den Restwärmetauscher mitgerissen werden können, entweder gar nicht oder nur zu einem geringen Teil entstehen, so daß der zur Bildung unerwünscht kleiner Kondensattropfen erforderliche Energieaufwand vermieden wird und im Idealfall auf einen Tropfenabscheider am Abgasaustritt des Restwärmetauschers verzichtet werden, zumindest aber ein Tropfenabscheider mit geringerem Strömungswiderstand gewählt werden kann.

Bevorzugte Ausgestaltungen der erfindungsgemäßen Vorrichtungen sind Gegenstand der Ansprüche 50 bis 68 und 70 bis 96, deren Vorteile bereits im Zusammenhang mit den bevorzugten Ausgestaltungen des erfindungsgemäßen Verfahrens gemäß den Ansprüchen 2 bis 20 und 22 bis 48 erläutert wurden.

Weitere Merkmale und Vorteile der Erfindung sind Gegenstand der nachfolgenden Beschreibung und zeichnerischen Darstellung von Ausführungsbeispielen.

In der Zeichnung zeigen:

Fig. 1      eine schematische Gesamtdarstellung einer ersten Ausführungsform der erfindungsgemäßen Vorrichtung zur Nutzung der Restwärme eines Abgases einer Feuerungsanlage;

Fig. 2      eine schematische Darstellung eines Restwärmetauschers der ersten Ausführungsform der erfindungsgemäßen Vorrichtung, bei der frei fallende Kondensatstrahlen in ein monodisperses Kondensatspray zerfallen;

Fig. 3 bis 6      jeweils einen Längsschnitt durch eine in einer Düsenplatte des Restwärmetauschers der ersten Ausführungsform der erfindungsgemäßen Vorrichtung verwendbare Düsenbohrung;

Fig. 7      einen Rayleigh-Zerfall eines frei fallenden Kondensatstrahls in ein monodisperses Kondensatspray bei einer kleinen Zerfallslänge;

Fig. 8      einen Rayleigh-Zerfall eines frei fallenden Kondensatstrahls in ein monodisperses Kondensatspray bei einer gegenüber der Fig. 7 größeren Zerfallslänge;

Fig. 9      einen unerwünschten Membran-Zerfall eines frei fallenden Kondensatstrahls in ein Kondensatspray mit breitem Tropfengrößenspektrum;

Fig. 10      einen unerwünschten Fiber-Zerfall eines frei fallenden Kondensatstrahls in ein Kondensatspray mit breitem Tropfengrößenspektrum;

Fig. 11      einen schematischen Schnitt durch einen Restwärmetauscher einer zweiten Ausführungsform der erfindungsgemäßen Vorrichtung zur Nutzung der Restwärme eines Abgases einer Feuerungsanlage, in dem nicht zerfallende, frei fallende Kondensatstrahlen erzeugt werden;

Fig. 12      die Erzeugung eines nicht zerfallenden, frei fallenden Kondensatstrahls mittels einer kurzen, scharfkantigen Düsenbohrung;

Fig. 13      einen teilweisen Zerfall eines frei fallenden Kondensatstrahls in ein Kondensatspray mit breitem Tropfengrößenspektrum infolge von Kavitation in einer Düsenbohrung;

Fig. 14      einen schematischen Schnitt durch einen Restwärmetauscher einer dritten Ausführungsform der erfindungsgemäßen Vorrichtung zur Nutzung der Restwärme eines Abgases einer Feuerungsanlage, in dem ein monodisperses Kondensatspray und ein zusätzliches Verdampfungs-Kondensatspray im Bereich einer Abgaszufuhr durch Versprühen aus einer Zerstäuberdüse erzeugt werden;

Fig. 15      einen schematischen Schnitt durch einen Restwärmetauscher einer vierten Ausführungsform der erfindungsgemäßen Vorrichtung zur Nutzung der Restwärme eines Abgases einer Feuerungsanlage, in dem ein monodisperses Kondensatspray und mittels einer Zerstäubungsplatte ein zusätzliches Verdampfungs-Kondensatspray im Bereich einer Abgaszufuhr erzeugt werden, wobei ein in der Zerstäubungsplatte vorgesehener Durchlaß für das Kondensat geöffnet ist;

Fig. 16    einen schematischen Schnitt durch den Restwärmetauscher aus Fig. 15, wobei der Durchlaß für das Kondensat in der Zerstäubungsplatte geschlossen ist;

Fig. 17a bis 17d    schematische Schnitte durch den unteren Bereich des Restwärmetauschers aus Fig. 15, wobei die Zerstäubungsplatte der Fig. 15 jeweils durch eine Anordnung mehrerer Zerstäubungsplatten ersetzt ist;

Fig. 18    eine schematische Gesamtdarstellung einer fünften Ausführungsform einer erfindungsgemäßen Vorrichtung zur Nutzung der Restwärme eines Abgases einer Feuerungsanlage, die einen Kondensat-Heizwasser-Brauchwasser-Doppelwärmetauscher umfaßt; und

Fig. 19    einen schematischen Schnitt durch den Doppelwärmetauscher aus Fig. 18.

Gleiche oder funktional äquivalente Elemente sind in allen Figuren mit denselben Bezugszeichen bezeichnet.

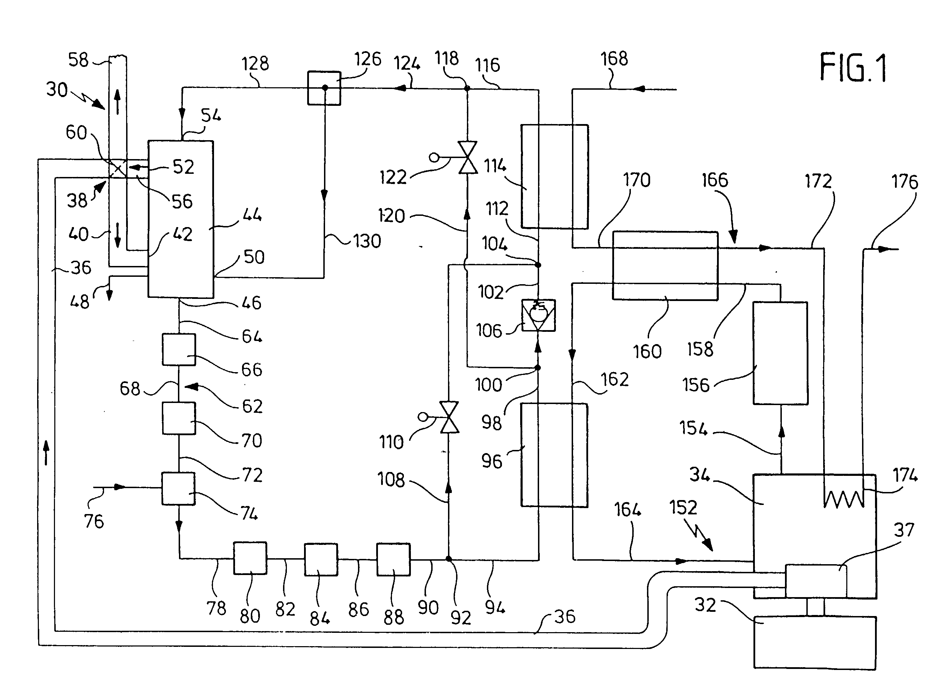

Eine in Fig. 1 insgesamt schematisch dargestellte und als Ganzes mit 30 bezeichnete erste Ausführungsform einer erfindungsgemäßen Vorrichtung zur Nutzung der Restwärme eines Abgases einer Feuerungsanlage umfaßt als Feuerungsanlage einen Brenner 32, der mit einem Heizwasserkessel 34 zur Erhitzung von in letzterem enthaltenem Heizwasser verbunden ist.

Der Brenner 32 kann mit beliebigen flüssigen und festen Brennstoffen, beispielsweise mit Heizöl, Erdgas oder Braunkohle, betrieben sein.

Eine Abgasleitung 36 für das bei dem Verbrennungsprozeß im Brenner 32 entstehende heiße Abgas führt von dem Brenner 32 durch einen Feuerraum 37 des Heizkessels 34 zu einem Temperaturwechsler 38, der als vierarmiges Rohrkreuz ausgebildet ist, wobei jeweils einer der Arme nach oben bzw. nach unten und zwei weitere Arme in horizontale Richtungen weisen. Die Abgasleitung 36 ist an einen der horizontal ausgerichteten Arme des Temperaturwechslers 38 angeschlossen.

An den nach unten weisenden Arm des Temperaturwechslers 38 ist ein Abgaszuführrohr 40 angeschlossen, das an seinem anderen Ende an einem Abgaseintritt 42 in einen unteren Bereich eines Restwärmetauschers 44 mündet.

Der Restwärmetauscher 44 wird weiter unten detailliert beschrieben werden. Er weist beispielsweise die Form eines aufrechtstehenden, an Ober- und Unterseite geschlossenen Hohlzylinders auf und ist in seinem unteren Bereich außer mit dem Abgaseintritt 42 mit einem Kondensataustritt 46, einem oberhalb desselben angeordneten Kondensatüberlauf 48 sowie einem zwischen dem Kondensataustritt 46 und dem Kondensatüberlauf 48 angeordneten unteren Kondensateintritt 50 versehen.

Ferner weist der Restwärmetauscher 44 in seinem oberen Bereich einen Abgasaustritt 52 sowie einen oberhalb desselben angeordneten oberen Kondensateintritt 54 auf.

Der Abgasaustritt 52 ist über ein Abgasabführrohr 56 mit dem der Abgasleitung 36 gegenüberliegenden horizontal ausgerichteten Arm des Temperaturwechslers 38 verbunden.

An den nach oben weisenden Arm des Temperaturwechslers 38 ist ein Schornsteinzuführrohr 58 angeschlossen, das zu einem (nicht dargestellten) Schornstein führt.

Der Temperaturwechsler 38 weist in einem zentralen Bereich, in dem die vier Rohrarme zusammentreffen, eine zwischen einer Durchleit- und einer Umleitstellung schwenkbare Umlenkplatte 60 auf.

In der in Fig. 1 durchgezogen dargestellten Durchleitstellung der Umlenkplatte 60 sind die Abgasleitung 36 und das Abgaszuführrohr 40 miteinander verbunden, jedoch gegenüber dem Abgasabführrohr 56 und dem Schornsteinzuführrohr 58 abgeschlossen. Andererseits sind in dieser Durchleitstellung auch das Abgasabführrohr 56 und das Schornsteinzuführrohr 58 miteinander verbunden.

Daher kann in der Durchleitstellung der Umlenkplatte 60 vom Brenner 32 durch die Abgasleitung 36 zum Temperaturwechsler 38 geführtes heißes Abgas durch das Abgaszuführrohr 40 in den Restwärmetauscher 44 gelangen, in dem es auf noch zu besprechende Weise gekühlt und gereinigt wird, worauf es den Restwärmetauscher 44 durch das Abgasabführrohr 56 wieder verläßt und schließlich in das Schornsteinzuführrohr 58 entweicht.

In der in Fig. 1 gebrochen dargestellten Umleitstellung der Umlenkplatte 60 sind dagegen die Abgasleitung 36 und das Schornsteinzuführrohr 58 miteinander verbunden und gegenüber dem Abgaszuführrohr 40 und dem Abgasabführrohr 56 abgeschlossen, so daß in dieser Stellung der Umlenkplatte 60 das heiße, vom Brenner 32 kommende Abgas direkt aus der Abgasleitung 36 in das Schornsteinzuführrohr 58 entweicht, ohne zuvor in den Restwärmetauscher 44 zu gelangen.

Der Restwärmetauscher 44 ist Bestandteil eines als Ganzes mit 62 bezeichneten Kondensatkreislaufs. Die Strömungsrichtung des Kondensats durch den Kondensatkreislauf 62 ist in Fig. 1 mittels Pfeilspitzen angegeben.

Der Kondensataustritt 46 des Restwärmetauschers 44 ist über eine Kondensatleitung 64 mit einem Neutralisator 66 verbunden, der der Neutralisierung saurer Kondensatkomponenten dient und zu diesem Zweck beispielsweise mit Hydrolit gefüllt ist, welches einen MgO-Gehalt von ungefähr 75% aufweist und als weitere Bestandteile Wasser, Kohlendioxid sowie Spuren von Kalzium-, Eisen-, Aluminium- und Siliziumoxid umfaßt. Der Neutralisator 66 ist vorzugsweise so an den Kondensatkreislauf 62 angeschlossen, daß er von oben nach unten von dem Kondensat durchströmt wird.

Von dem Neutralisator 66 führt eine weitere Kondensatleitung 68 zu einem Kondensatfilter 70, das eine Maschenweite von beispielsweise weniger als 100 μm aufweist.

Das Kondensatfilter 70 kann auch im Neutralisator 66 integriert sein, wobei dann die Kondensatleitung 68 entfällt.

Von dem Kondensatfilter 70 führt eine weitere Kondensatleitung 72 zu einem Luftinjektor 74.

Der Luftinjektor 74 dient der Oxidation von in dem Kondensat gelösten Sulfit-Ionen zu ungiftigen Sulfat-Ionen mittels Luft, die dem Luftinjektor 74 über eine an denselben angeschlossene Luftzuführleitung 76 zugeführt wird.

Der Luftinjektor 74 ist innerhalb des Kondensatkreislaufs 62 in Strömungsrichtung hinter dem Neutralisator 66 angeordnet, um eine Luftsiphonbildung im Neutralisator 66 durch im Luftinjektor 74 injizierte Oxidationsluft zu vermeiden.

Der Luftinjektor 74 ist über eine Kondensatleitung 78 mit einem saugseitigen Eingang einer Kondensatpumpe 80 verbunden, die der Erzeugung einer kontinuierlichen Kondensatströmung durch den Kondensatkreislauf 62 dient.

Von einem druckseitigen Ausgang der Kondensatpumpe 80 führt eine Kondensatleitung 82 zu einem Durchflußmesser 84, der der Bestimmung des Kondensatflusses im Kondensatkreislauf 62 dient.

Von dem Durchflußmesser 84 führt eine weitere Kondensatleitung 86 zu einem Druckmesser 88, der der Bestimmung des Druckes des durchströmenden Kondensates dient.

Von dem Druckmesser 88 führt eine weitere Kondensatleitung 90 zu einem Eingang einer ersten Verzweigung 92 des Kondensatkreislaufs 62.

Ein erster Ausgang der ersten Verzweigung 92 führt über eine Kondensatleitung 94 zu einem Kondensat-Eingang eines Kondensat-Heizwasser-Wärmetauschers 96.

Ein Kondensat-Ausgang des Kondensat-Heizwasser-Wärmetauschers 96 ist über eine weitere Kondensatleitung 98 mit einem Eingang einer zweiten Verzweigung 100 des Kondensatkreislaufs 62 verbunden.

Von einem ersten Ausgang der zweiten Verzweigung 100 führt eine Kondensatleitung 102 zu einem ersten Eingang einer ersten Zusammenführung 104 des Kondensatkreislaufs, wobei die Kondensatleitung 102 mit einem Rückschlagventil 106 versehen ist, das Kondensat nur in der Richtung von der zweiten Verzweigung 100 zu der ersten Zusammenführung 104 hin passieren läßt.

Von einem zweiten Ausgang der ersten Verzweigung 92 des Kondensatkreislaufs 62 führt eine erste Umgehungsleitung 108 zu einem zweiten Eingang der ersten Zusammenführung 104, wobei die erste Umgehungsleitung 108 mit einem ersten Sperrventil 110 versehen ist, durch das die erste Umgehungsleitung 108 geöffnet oder geschlossen werden kann.

Von einem Ausgang der ersten Zusammenführung 104 führt eine weitere Kondensatleitung 112 zu einem Kondensat-Eingang eines Kondensat-Brauchwasser-Wärmetauschers 114.

Von einem Kondensat-Ausgang des Kondensat-Brauchwasser-Wärmetauschers 114 führt eine Kondensatleitung 116 zu einem ersten Eingang einer zweiten Zusammenführung 118 des Kondensatkreislaufs 62.

Ein zweiter Ausgang der zweiten Verzweigung 100 des Kondensatkreislaufs 62 ist über eine zweite Umgehungsleitung 120, die ein zweites Sperrventil 122 aufweist, durch das die zweite Umgehungsleitung 120 geöffnet oder geschlossen werden kann, mit einem zweiten Eingang der zweiten Zusammenführung 118 verbunden.

Von einem Ausgang der zweiten Zusammenführung 118 des Kondensatkreislaufs 62 führt eine weitere Kondensatleitung 124 zu einem Eingang eines magnetisch betätigten Dreiwegeventils 126, dessen Eingang wahlweise mit einem von zwei Ausgängen verbunden werden kann.

Von einem ersten Ausgang des Dreiwegeventils 126 führt eine Kondensatleitung 128 zu dem oberen Kondensateintritt 54 des Restwärmetauschers 44.

Von dem zweiten Ausgang des Dreiwegeventils 126 führt eine weitere Kondensatleitung 130 zu dem unteren Kondensateintritt 50 des Restwärmetauschers 44.

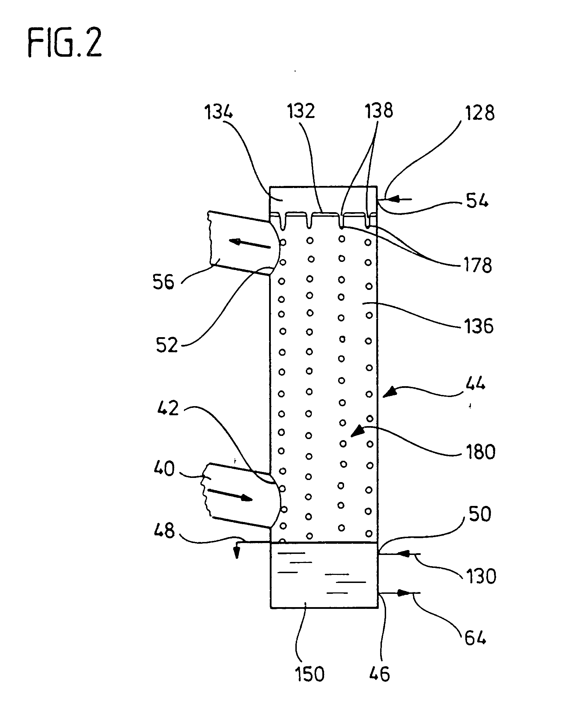

Der Restwärmetauscher 44 der ersten Ausführungsform der erfindungsgemäßen Vorrichtung ist ein Monodispers-Kondensatspray-Wärmetauscher, der in Fig. 2 schematisch dargestellt ist.

Der Monodispers-Kondensatspray-Wärmetauscher 44 umfaßt eine horizontal angeordnete zylindrische Düsenplatte 132, die den zylindrischen Innenraum des Kondensatspray-Wärmetauschers 44 in eine oberhalb der Düsenplatte 132 angeordnete Düsenvorkammer 134 und einen unterhalb der Düsenplatte 132 angeordneten Wärmetauscherraum 136 teilt.

Die Düsenplatte 132 wird in vertikaler Richtung von mehreren Düsenbohrungen 138 durchsetzt.

Die Mittelachsen einander benachbarter Düsenbohrungen 138 weisen einen Abstand voneinander auf, der vorzugsweise dem 15- bis 20-fachen des Durchmessers der Auslaßöffnung einer Düsenbohrung 138 entspricht.

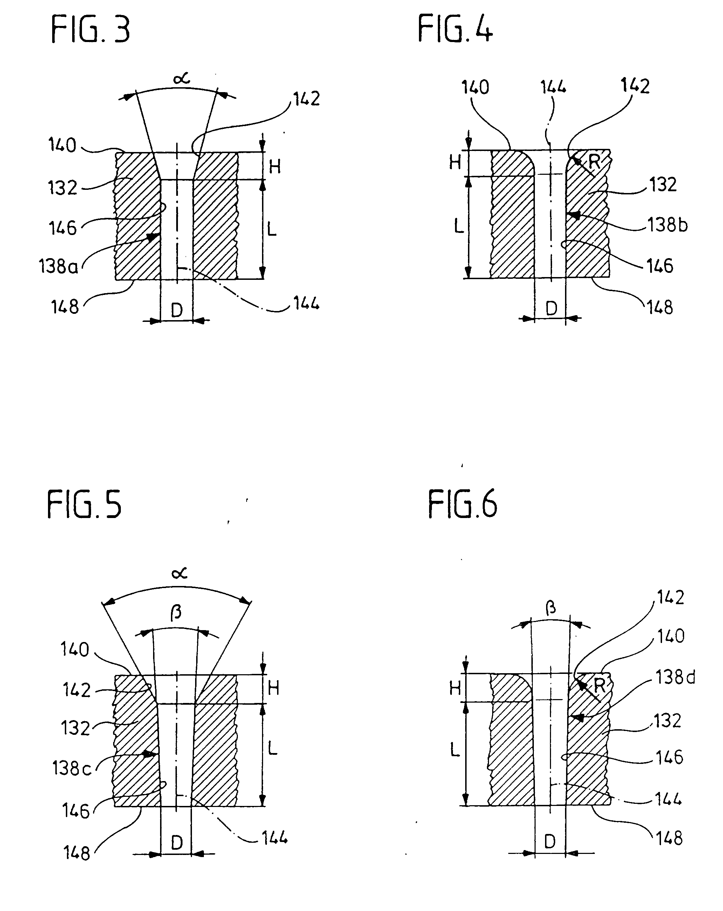

Eine in Fig. 3 dargestellte erste Ausführungsform 138a einer solchen Düsenbohrung 138 weist einen auf einer Oberseite 140 der Düsenplatte 132 mündenden Einlauf 142 in Form eines sich nach oben hin erweiternden Kegelstumpfes mit vertikaler Achse 144, Öffnungswinkel α und Länge H auf.

Der Einlauf 142 mündet an seiner Unterseite in einen zylindrischen, zu dem Einlauf 142 koaxialen Düsenkanal 146 mit der Länge L, dessen Durchmesser D dem kleinsten Durchmesser des kegelstumpfförmigen Einlaufs 142 entspricht und der auf einer Unterseite 148 der Düsenplatte 132 mündet.

Um zu erreichen, daß ein aus der Düsenbohrung 138a austretender Kondensatstrahl in ein monodisperses Kondensatspray zerfällt, werden vorzugsweise der Öffnungswinkel α kleiner als ungefähr 60°, die Länge H des Einlaufs 142 größer oder ungefähr gleich dem Durchmesser D des Düsenkanals 146 und die Länge L des Düsenkanals 146 größer als der ungefähr dreifache und kleiner als der ungefähr fünffache Durchmesser D des Düsenkanals 146 gewählt.

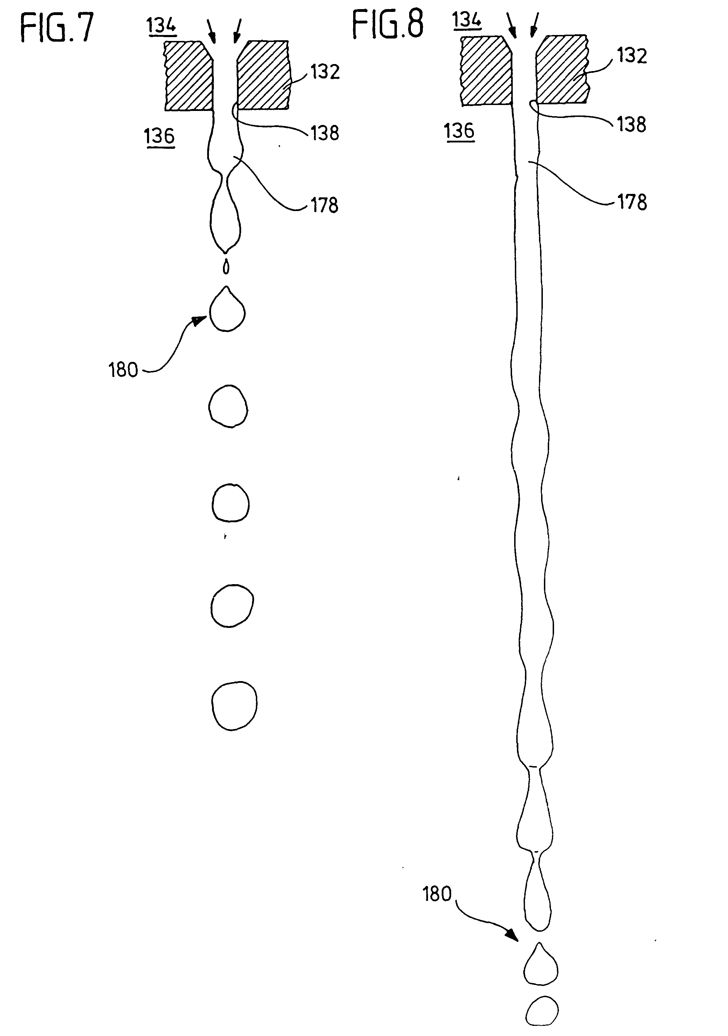

Eine in Fig. 4 dargestellte und als Ganzes mit 138b bezeichnete, alternative zweite Ausführungsform einer Düsenbohrung 138 in der Düsenplatte 132 unterscheidet sich von der in Fig. 3 dargestellten ersten Ausführungsform lediglich dadurch, daß der Einlauf 142 nicht durch die Mantelfläche eines Kegelstumpfs, sondern durch einen Ausschnitt aus der Mantelfläche eines Kreistorus mit Radius R begrenzt wird. Im übrigen stimmt die zweite Ausführungsform der Fig. 4 mit der in Fig. 3 dargestellten Ausführungsform überein.

Um zu erreichen, daß ein aus der Düsenbohrung 138b austretender Kondensatstrahl in ein monodisperses Kondensatspray zerfällt, wird der Radius R vorzugsweise größer oder ungefähr gleich dem Durchmesser des Düsenkanals 146 gewählt.

Eine in Fig. 5 dargestellte und als Ganzes mit 138c bezeichnete, alternative dritte Ausführungsform einer Düsenbohrung 138 in der Düsenplatte 132 unterscheidet sich von der in Fig. 3 dargestellten ersten Ausführungsform lediglich dadurch, daß der Düsenkanal 146 nicht zylindrisch ist, sondern die Form eines sich nach oben hin erweiternden Kegelstumpfes mit dem Öffnungswinkel β und der Länge L aufweist. Dabei stimmt der kleinste Durchmesser des kegelstumpfförmigen Einlaufs 142 mit dem größten Durchmesser des kegelstumpfförmigen Düsenkanals 146 überein und ist größer als der Mündungsdurchmesser D der Düsenbohrung 138c.

Im übrigen stimmt die dritte Ausführungsform 138c mit der in Fig. 3 dargestellten ersten Ausführungsform 138a überein.

Um zu erreichen, daß ein aus der Düsenbohrung 138c austretender Kondensatstrahl in ein monodisperses Kondensatspray zerfällt, werden vorzugsweise der Öffnungswinkel α kleiner als ungefähr 60°, der Öffnungswinkel β kleiner als ungefähr 10°, die Länge H des Einlaufs 142 größer als ungefähr 1/5 des Mündungsdurchmessers D und die Länge L des Düsenkanals 146 größer als ungefähr das dreifache des Mündungsdurchmessers D gewählt.

Eine in Fig. 6 dargestellte und als Ganzes mit 138d bezeichnete, alternative vierte Ausführungsform einer Düsenbohrung 138 in der Düsenplatte 132 unterscheidet sich von der in Fig. 5 dargestellten dritten Ausführungsform 138c lediglich dadurch, daß die Begrenzungsfläche des Einlaufs 142 nicht die Mantelfläche eines Kegelstumpfes, sondern ein Ausschnitt aus der Mantelfläche eines Kreistorus vom Radius R ist.

Im übrigen stimmt die vierte Ausführungsform 138d mit der dritten Ausführungsform 138c überein.

Um zu erreichen, daß ein aus der Düsenbohrung 138d austretender Kondensatstrahl in ein monodisperses Kondensatspray zerfällt, werden vorzugsweise der Öffnungswinkel β kleiner als ungefähr 10°, der Radius R größer als ungefähr 1/5 des Mündungsdurchmessers D und die Länge L des Düsenkanals 146 größer als ungefähr das dreifache des Mündungsdurchmessers D gewählt.

Wie in Fig. 2 zu sehen, mündet die Kondensatleitung 128 oberhalb der Düsenplatte 132 durch die Seitenwand des Restwärmetauschers 44 an dem oberen Kondensateintritt 54 in die Düsenvorkammer 134.

Im unteren Bereich des Restwärmetauschers 44 mündet der Kondensatüberlauf 48 durch die Seitenwand des Restwärmetauschers 44 in den Wärmetauscherraum 136. Der Raum vom Boden des Wärmetauscherraums 136 bis zur Höhe der Mündungsöffnung des Kondensatüberlaufs 48 ist mit Kondensat gefüllt, das einen Kondensatsumpf 150 bildet.

In diesen Kondensatsumpf mündet nahe des Bodens des Wärmetauscherraums 136 die Kondensatleitung 64 durch die Seitenwand des Restwärmetauschers 44 an dem Kondensataustritt 46.

Oberhalb des Kondensataustritts 46 mündet die Kondensatleitung 130 durch die Seitenwand des Restwärmetauschers 44 an dem unteren Kondensateintritt 50 in den Kondensatsumpf 150.

Wie in Fig. 1 zu sehen ist, umfaßt die erfindungsgemäße Vorrichtung 30 außer dem Kondensatkreislauf 62 einen Heizwasser-kreislauf 152, zu dem der von dem Brenner 32 beheizte Heizwasserkessel 34 zählt.

Ein Ausgang des Heizwasserkessels 34 ist über eine Heizwasservorlaufleitung 154 mit einer Heizkörperanordnung 156 verbunden, die beispielsweise der Wärmeabgabe an die Luft von Innenräumen dient.

Von der Heizkörperanordnung 156 führt eine Heizwasserleitung 158 zu einem Heizwasser-Eingang eines Heizwasser-Brauchwasser-Wärmetauschers 160.

Ein Heizwasser-Ausgang des Heizwasser-Brauchwasser-Wärmetauschers 160 ist über eine weitere Heizwasserleitung 162 mit einem Heizwasser-Eingang des Kondensat-Heizwasser-Wärmetauschers 96 verbunden. Das Heizwasser durchströmt den Kondensat-Heizwasser-Wärmetauscher 96 nach dem Gegenstromprinzip in einer der Strömungsrichtung des Kondensats entgegengesetzten Richtung.

Von einem Heizwasser-Ausgang des Kondensat-Heizwasser-Wärmetauschers 96 führt eine Heizwasser-Rücklaufleitung 164 zu einem Eingang des Heizwasserkessels 34.

Ferner umfaßt die erste Ausführungsform der erfindungsgemäßen Vorrichtung 30 eine als Ganzes mit 166 bezeichnete Brauchwasserzuführleitung, zu der eine Brauchwasserleitung 168 zählt, die von einer (nicht dargestellten) Frischwasserquelle, beispielsweise dem öffentlichen Trinkwassernetz, zu einem Brauchwasser-Eingang des Kondensat-Brauchwasser-Wärmetauschers 114 führt.

Das Brauchwasser durchströmt den Kondensat-Brauchwasser-Wärmetauscher 114 nach dem Gegenstromprinzip in einer zu der Strömungsrichtung des Kondensats entgegengesetzten Richtung.

Von einem Brauchwasser-Ausgang des Kondensat-Brauchwasser-Wärmetauschers 114 führt eine weitere Brauchwasserleitung 170 zu einem Brauchwasser-Eingang des Heizwasser-BrauchwasserWärmetauschers 160.

Das Brauchwasser durchströmt den Heizwasser-Brauchwasser-Wärmetauscher 160 nach dem Gegenstromprinzip in einer zu der Strömungsrichtung des Heizwassers entgegengesetzten Richtung.

Von einem Brauchwasser-Ausgang des Heizwasser-Brauchwasser-Wärmetauschers 160 führt eine Brauchwasserleitung 172 zu einem Eingang einer innerhalb des Heizwasserkessels 34 angeordneten Wärmetauscherschlange 174, die der Erwärmung des Brauchwassers durch das im Heizwasserkessel 34 befindliche Heizwasser nach dem Durchlauferhitzerverfahren dient.

Von einem Ausgang der Wärmetauscherschlange 174 schließlich führt eine weitere Brauchwasserleitung 176 zu (nicht dargestellten) Brauchwasserentnahmestellen, wie beispielsweise einem Warmwasserhahn.

Alternativ zu einer Erwärmung des Brauchwassers im Durchlauferhitzerverfahren kann auch vorgesehen sein, daß das Brauchwasser durch die Brauchwasserleitung 172 in einen (nicht dargestellten) Warmbrauchwasserspeicher gelangt, in dem eine Wärmetauscherschlange angeordnet ist, welche von Heizwasser aus dem Heizwasserkessel 34 durchströmt wird, so daß das im Warmbrauchwasserspeicher befindliche Brauchwasser erwärmt wird. Von einem Ausgang des Warmbrauchwasserspeichers führt eine weitere Brauchwasserleitung zu den Brauchwasserentnahmestellen.

Die vorstehend beschriebene erste Ausführungsform der erfindungsgemäßen Vorrichtung 30 funktioniert im Winterbetrieb, also bei bestehendem Heizwasserumlauf im Heizwasser-kreislauf 152, wie folgt:

Heizwasser aus dem Heizwasserkessel 34 gelangt durch die Heizwasser-Vorlaufleitung 154 in die Heizkörperanordnung 156, gibt beim Durchlaufen derselben Wärme ab und kehrt durch die Heizwasserleitung 158, den Heizwasser-Brauchwasser-Wärmetauscher 160, die Heizwasserleitung 162, den Kondensat-Heizwasser-Wärmetauscher 96 und die Heizwasser-Rücklaufleitung 164 in den Heizwasserkessel 34 zurück.

Da das Heizwasser durch das Durchlaufen des Heizwasserkreislaufes 152 Wärme verliert, nimmt die Durchschnittstemperatur des Heizwasserkessels 34 ab, bis sie unter eine Einschalttemperatur des Brenners 32 absinkt, bei der der Brenner 32 in Betrieb genommen wird, um das Heizwasser im Heizwasserkessel 34 wieder zu erwärmen. Erreicht das Wasser im Heizwasserkessel 34 eine Ausschalttemperatur des Brenners 32, so wird der Brenner 32 wieder abgeschaltet.

Außer durch die im wesentlichen kontinuierliche Wärmeentnahme durch den Heizwasserkreislauf 52 kann ein Absinken der Temperatur im Heizwasserkessel 34 auch durch eine während jeweils kurzer Zeitintervalle, die in unregelmäßigen Abständen aufeinanderfolgen, erfolgende Entnahme von Brauchwasser aus der Brauchwasserzuführleitung 166 bewirkt werden, da das Brauchwasser beim Durchströmen der Wärmetauscherschlange 174 dem Heizwasser im Heizwasserkessel 34 Wärme entzieht.

Während der Betriebsphasen des Brenners 32 entsteht durch Verbrennung des Brennstoffes (Öl, Kohle, Gas) im Brenner 32 ein Abgas, das durch die Abgasleitung 36 zum Temperaturwechsler 38 strömt.

In Perioden relativ häufigen Brennerbetriebs, also in der Regel während des Winterbetriebs, befindet sich die Umlenkplatte 60 des Temperaturwechslers 38 in der Durchleitstellung, so daß sie das von der Abgasleitung 36 her kommende Abgas durch das Abgaszuführrohr 40 zum Abgaseintritt 42 des Restwärmetauschers 44 lenkt.

Die Strömungsrichtung des Abgases ist in den Fig. 1 und 2 durch Pfeile angegeben.

Zu Beginn jeder Betriebsphase des Brenners 32 wird auch die Kondensatpumpe im Kondensatkreislauf 62 in Betrieb genommen, wobei sich das Dreiwegeventil 126 in einer Stellung befindet, in der es die Kondensatleitung 124 mit der Kondensatleitung 128 verbindet und die Kondensatleitung 130 vom Kondensatkreislauf 62 abgetrennt ist.

Infolgedessen strömt das Kondensat von der Kondensatleitung 124 durch die Kondensatleitung 128 und den oberen Kondensateintritt 54 in die Düsenvorkammer 134 des Restwärmetauschers 44.

Von dort wird das Kondensat unter einem geringen Überdruck von beispielsweise 0,1 bar durch die Düsenbohrungen 138 in der Düsenplatte 132 in den Wärmetauscherraum 136 gepreßt.

Wie in den Fig. 7 bis 10 dargestellt, tritt aus jeder der Düsenbohrungen 138 ein frei durch den Wärmetauscherraum 136 fallender Kondensatstrahl 178 aus, der nach Durchfallen einer Zerfallslänge in die Tropfen eines Kondensatsprays 180 zerfällt.

Der Zerfall eines Kondensatstrahls 178 mit rundem Querschnitt erfolgt nach einem der folgenden Zerfallsmechanismen: Rayleigh-Zerfall, Membran-Zerfall oder Fiber-Zerfall.

In Fig. 7 ist ein Rayleigh-Zerfall eines Kondensatstrahls 178 mit kurzer Zerfallslänge dargestellt. Beim Rayleigh-Zerfall entsteht aus dem Kondensatstrahl 178 eine monodisperse Tropfenkette, wobei der Durchmesser jeden Tropfens ungefähr das Doppelte des ursprünglichen Strahldurchmessers beträgt.

Der Rayleigh-Zerfall führt also zur Bildung eines monodispersen Kondensatsprays 180.

Um nach dem Durchströmen der vorstehend beschriebenen Düsenbohrungen 138a bis 138d einen Rayleigh-Zerfall zu erhalten, wird die Strömungsgeschwindigkeit des Kondensats durch die Düsenkanäle 146 mittels der Kondensatpumpe 80 so eingestellt, daß die Reynolds-Zahl der Kondensatströmung an den Mündungsöffnungen der Düsenkanäle 146 kleiner ist als ungefähr 5.000, vorzugsweise kleiner als ungefähr 2.500, und größer ist als ungefähr 100, vorzugsweise größer als ungefähr 500. Dabei ist die Reynolds-Zahl Re definiert als

$$Re = u\, D/\nu,$$

wobei u die Strömungsgeschwindigkeit des Kondensats an den Mündungsöffnungen der Düsenbohrungen 138, D den Durchmesser der Mündungsöffnungen der Düsenbohrungen 138 und ν die kinematische Viskosität des Kondensats bezeichnet. Die Strömungsgeschwindigkeit des Kondensats an den Mündungsöffnungen der Düsenbohrungen 138 entspricht dem Verhältnis aus dem Kondensat-Volumenstrom im Kondensatkreislauf 62 und der Gesamtfläche der Mündungsöffnungen aller Düsenbohrungen 138 der Düsenplatte 132.

Damit die durch den Rayleigh-Zerfall des Kondensatstrahls 178 entstandenen Kondensattropfen stabil bleiben und nicht ihrerseits weiter zerfallen, wird die Relativgeschwindigkeit zwischen den fallenden Tropfen und der dieselbe umgebenden Gasatmosphäre im Wärmetauscherraum 136 so eingestellt, daß die Weberzahl der Tropfen kleiner ist als 10, vorzugsweise kleiner als 5, insbesondere kleiner als 2. Dabei ist die Weberzahl We definiert als

$$We = u_r^2\, d\, \rho/\sigma,$$

wobei $u_r$ die Relativgeschwindigkeit zwischen den Tropfen und der umgebenden Gasatmosphäre, d den Tropfendurchmesser (d ungefähr gleich 2D), ρ die Kondensatdichte in den Tropfen und σ die Oberflächenspannung des Kondensats bezeichnet.

Wird, wie in Fig. 2 dargestellt, der Abgasstrom in entgegengesetzter Richtung zum Kondensatstrom durch den Restwärmetauscher 44 geführt, so entspricht die Relativgeschwindigkeit $u_r$ der Summe aus der Fallgeschwindigkeit der Kondensattropfen und der Strömungsgeschwindigkeit des Abgases im Restwärmetauscher 44, wobei letztere umgekehrt proportional zur Querschnittsfläche des Wärmetauscherraums 136 und damit im wesentlichen durch die Dimensionierung des Restwärmetauschers 44 vorgegeben ist.

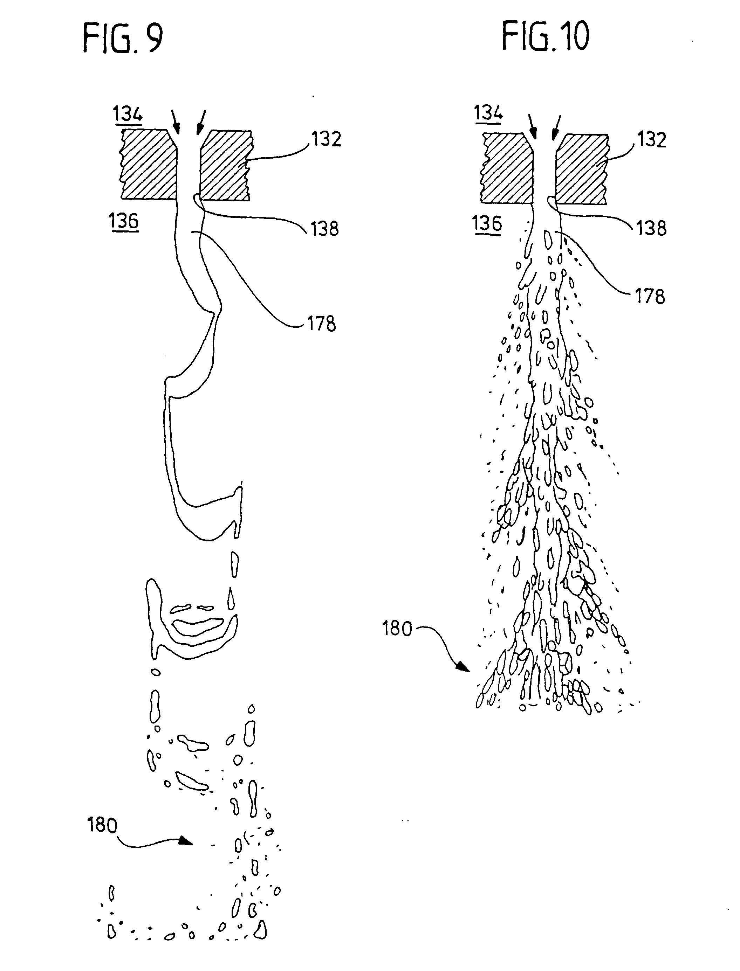

In Fig. 8 ist ebenfalls ein Rayleigh-Zerfall eines Kondensatstrahls 178 in ein monodisperses Kondensatspray 180 dargestellt, jedoch mit größerer Zerfallslänge als in Fig. 7.

Durch die größere Zerfallslänge ist zwar die Kondensatoberfläche im Wärmetauscherraum 136 reduziert, so daß zum Austausch einer vorgegebenen Wärmemenge zwischen dem Abgas und dem Kondensat ein höherer Wärmetauscherraum 136 benötigt wird; dafür sinkt aber, insbesondere im oberen Bereich des Wärmetauscherraums 136, wo der Abgasaustritt 52 angeordnet ist, die Gefahr, daß Kondensattröpfchen vom Abgasstrom mitgerissen und aus dem Restwärmetauscher 44 hinausgetragen werden.

In Fig. 9 ist ein unerwünschter Membran-Zerfall eines Kondensatstrahls 178 dargestellt.

Bei diesem Zerfallsmechanismus zerfällt der Kondensatstrahl 178 in ein Kondensatspray 180 mit sehr breitem Tropfengrößenspektrum. Ein breites Tropfengrößenspektrum ist von Nachteil, da es zum einen kleine Tröpfchen umfaßt, die vom Abgasstrom mitgerissen und aus dem Restwärmetauscher hinausgetragen werden, falls kein zusätzlicher nachgeschalteter Tropfenabscheider vorgesehen ist. Zum anderen umfaßt das Kondensatspray 180 mit breitem Tropfengrößenspektrum auch relativ große Tropfen oder Filamente, die nur eine geringe spezifische Oberfläche und damit eine kleine spezifische Wärmeaustauschfläche aufweisen.

Ferner wird beim Membran-Zerfallsmechanismus ein großer Anteil der kinetischen Energie der Kondensatströmung dissipiert, so daß eine höhere Pumpenleistung erforderlich ist.

Zum Membran-Zerfall des Kondensatstrahls 178 kann es kommen, wenn die Reynolds- oder die Weberzahl außerhalb des vorstehend genannten Bereiches liegen, oder bei ungünstiger Form der Düsenbohrungen 138, bei zu rauhen Bohrungswänden oder bei zu schwacher Haftung des Kondensats an den Wänden der Düsenbohrungen 138.

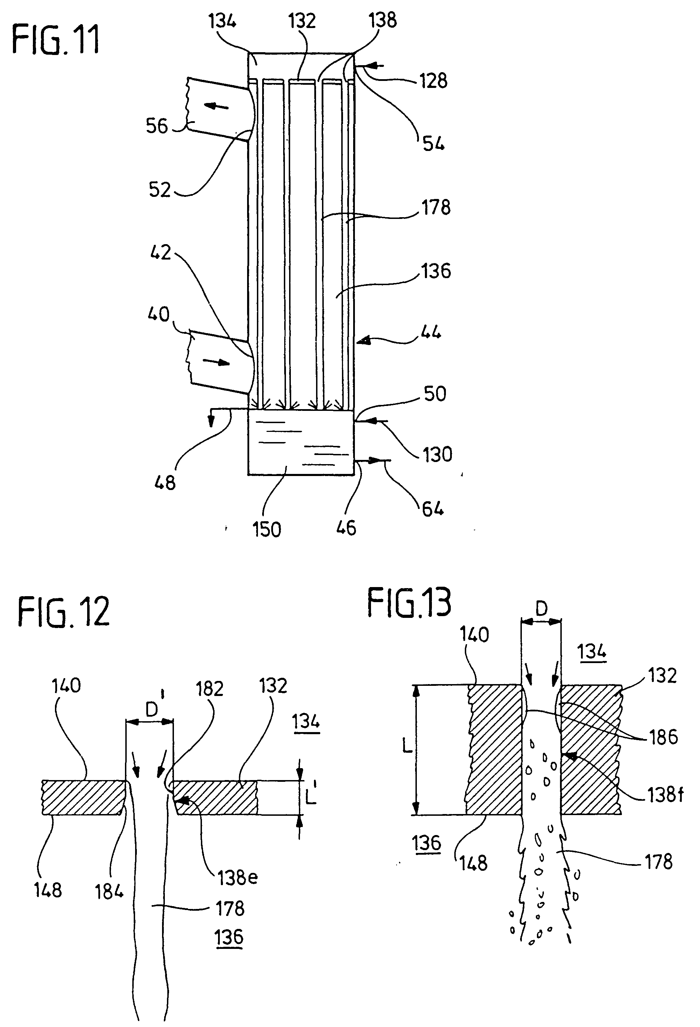

In Fig. 10 ist ein ebenfalls unerwünschter Fiber-Zerfall eines Kondensatstrahls 178 dargestellt.

Auch beim Fiber-Zerfall zerfällt der Kondensatstrahl 178 in ein Kondensatspray 180 mit breitem Tropfengrößenspektrum, das die bereits im Zusammenhang mit dem Membran-Zerfall genannten Nachteile aufweist und ebenfalls eine höhere Pumpenleistung erfordert.

Der Fiber-Zerfall kann ebenso wie der Membran-Zerfall dann auftreten, wenn der vorstehend genannte günstige Bereich der Reynolds- oder Weberzahlen verlassen wird oder die Düsenbohrungen 138 ungünstig geformt sind, die Wände der Düsenbohrungen 138 zu rauh sind oder das Kondensat zu schwach an den Wänden der Düsenbohrungen 138 haftet.

Das im Wärmetauscherraum 136 des Restwärmetauschers 44 gebildete monodisperse Kondensatspray bietet nicht nur eine große Wärmetauscherfläche für den Wärmeübergang von dem heißen Abgas aus dem Abgaszuführrohr 40 in das Kondensat, sondern auch eine hohe Wärmeübergangszahl aufgrund der Nutzung der latenten Wärme des im Abgas enthaltenen Wasserdampfs.

Unmittelbar nach Eintritt des heißen Abgases aus dem Abgaszuführrohr 40 durch den Abgaseintritt 42 in den knapp oberhalb des Kondensatsumpfes 150 liegenden Bereich des Wärmetauscherraums 136 kommt das Abgas mit den Tropfen des monodispersen Kondensatsprays 180 in Kontakt, verdampft dieses zumindest teilweise und wird dabei rasch abgekühlt. Dabei wandelt sich die fühlbare Abgaswärme in latente Wärme um.

Der durch partielle Verdampfung des Kondensatsprays 180 gebildete Wasserdampf strömt zusammen mit dem abgekühlten Abgas und dem darin bereits enthaltenen Wasserdampf gegen die Fallrichtung des Kondensatsprays 180 im Wärmetauscherraum 138 nach oben, wobei sich das Abgas weiter abkühlt, so daß im oberen, der Düsenplatte 132 benachbarten Bereich des Wärmetauscherraums 136 der im Abgas mitgeführte Wasserdampf an den Tropfen des Kondensatsprays 180 kondensiert, wobei der zirkulierende Kondensatmassenstrom die im Dampf enthaltene latente Wärme aufnimmt.

Die Menge des im oberen Bereich des Wärmetauscherraums 136 kondensierenden Wasserdampfes ist größer als die Menge des im unteren Bereich des Wärmetauscherraumes 136 verdampften Kondensats, so daß im Ergebnis der mit dem Abgas in den Restwärmetauscher 44 gelangte Wasserdampf zumindest teilweise kondensiert und dabei latente Wärme an den Kondensatmassenstrom im Kondensatkreislauf 62 abgibt.

Da das Kondensat demnach fühlbare und latente Wärme aus dem Abgasstrom aufnimmt, wirkt es als Kühlmedium für das Abgas des Brenners 32.

Die im Kondensatsumpf 150 am Boden des Wärmetauscherraums 136 eintreffende Kondensatmenge ist geringfügig größer als die durch die Düsenplatte 132 in den Wärmetauscherraum 136 eintretende Kondensatmenge. Typischerweise entspricht die pro Zeiteinheit im Wärmetauscherraum 136 aus dem Abgas zusätzlich kondensierte Kondensatmenge ungefähr einem Tausendstel bis zu einem Hundertstel der pro Zeiteinheit in den Wärmetauscherraum 136 durch die Düsenplatte 132 eintretenden Kondensatmenge, deren Masse wiederum vorzugsweise das ungefähr 10- bis 100-fache der Masse des pro Zeiteinheit in den Wärmetauscherraum 136 eintretenden Abgases beträgt.

Die durchschnittliche Tropfengröße des monodispersen Kondensatsprays 180 ist in Abhängigkeit von der Strömungsgeschwindigkeit des Abgases im Wärmetauscherraum 136 so gewählt, daß die Tropfen nicht durch den Abgasstrom aus dem Wärmetauscherraum 136 durch den Abgasaustritt 52 mitgerissen werden.

Das Abgas wird im Restwärmetauscher 44 nicht nur abgekühlt und getrocknet, sondern auch gereinigt, da im Abgas mitgeführte Schadstoffe im Kondensatstrom gelöst werden. Insbesondere wird bei Verwendung schwefelhaltiger Brennstoffe im Brenner 32 entstehendes $SO_2$ so aus dem Abgas ausgewaschen.

Das im Restwärmetauscher 44 abgekühlte Abgas gelangt durch das Abgasabführrohr 56 zum Temperaturwechsler 38, wo es durch die in der Durchleitstellung befindliche Umlenkplatte 60 in das Schornsteinzuführrohr 58 umgelenkt wird, so daß es schließlich durch den (nicht dargestellten) Schornstein in die Atmosphäre entweichen kann.

Im Temperaturwechsler 38 findet ein mäßiger Wärmeübergang von dem durch die Abgasleitung 36 eintretenden heißen Abgasstrom zu dem durch das Abgasabführrohr 56 eintretenden abgekühlten Abgasstrom statt, aufgrund dessen das abgekühlte Abgas über seinen Taupunkt hinaus erwärmt wird, also bei Austritt aus dem Temperaturwechsler 38 in das Schornsteinzuführrohr 58 trocken ("überhitzt") ist, so daß im Schornstein keine Kondensation stattfindet, die zu einer Korrosion des Schornsteins führen könnte.

Bei geeigneter Auslegung des Restwärmetauschers 44 kann erreicht werden, daß die Temperatur des aus dem Wärmetauscherraum 136 austretenden Abgases bereits oberhalb der Taupunkttemperatur desselben liegt, so daß auf den Temperaturwechsler 38 verzichtet werden und das Abgas direkt aus der Abgasleitung 36 in den Restwärmetauscher 44 und aus demselben direkt in das Schornsteinzuführrohr 58 geleitet werden kann.

Die Tropfen des Kondensatsprays 180 gelangen nach Durchfallen des Wärmetauscherraums 136 in den Kondensatsumpf 150.

Wird der Kondensatkreislauf 62 nach einer längeren Betriebspause des Brenners 32 wieder in Betrieb genommen, so wird der Flüssigkeitspegel des Kondensatsumpfes 150 in der Regel durch Verdunstung unter seinen Maximalstand abgesunken sein. Durch die Bildung zusätzlichen Kondensates aus dem Abgasstrom steigt dann der Pegel des Kondensatsumpfes 150 während des Brennerbetriebes wieder an, bis er seinen Maximalstand erreicht und überschüssiges Kondensat durch den Kondensatüberlauf 48 abfließt.

Um Startschwierigkeiten beim Ingangsetzen der Kondensatströmung durch den Kondensatkreislauf 62 nach einer Betriebspause zu vermeiden, beträgt das Kondensatvolumen in den unterhalb des Kondensatüberlaufs 48 angeordneten Teilen des Kondensatkreislaufs mindestens das Fünffache, vorzugsweise mindestens das Zehnfache, des Kondensatvolumens in den oberhalb desselben angeordneten Teilen des Kondensatkreislaufs 62.

Aus dem Kondensatsumpf 150 gelangt das im Kondensatkreislauf 62 umlaufende Kondensat zunächst in den Neutralisator 66, in dem durch Zugabe von Neutralisationsmitteln (beispielsweise Hydrolit) ein pH-Wert des Kondensats zwischen ungefähr 6 und ungefähr 7 eingestellt wird.

Dies ist insbesondere bei der Verwendung von schwefelhaltigen Brennstoffen im Brenner 32 von Vorteil, da das heiße Abgas in diesem Fall $SO_2$ enthält, das sich im Kondensat löst und dieses sauer und äußerst korrosiv macht. Saures Kondensat würde den Restwärmetauscher 44 und die übrigen Bestandteile des Kondensatkreislaufs 62 korrodieren und überdies von metallischen Spurenelementen herrührende Metalloxidkomponenten aus dem Abgas lösen, was zu einer hohen Metallkonzentration im Kondensat und zu einer Zerstörung des Restwärmetauschers 44 führen könnte.

Das neutralisierte Kondensat wird im Kondensatfilter 70 gefiltert und gelangt in den Luftinjektor 74, wo ihm durch die Luftzuführleitung 76 ein Luftstrom zugeführt wird, durch den gegebenenfalls im Kondensat gelöste Sulfit-Ionen zu ungiftigen Sulfat-Ionen oxidiert werden.

Vom Luftinjektor 74 gelangt das Kondensat in die Kondensatpumpe 80, die den Kondensatumlauf im Kondensatkreislauf 62 aufrechterhält, und weiter durch den Durchflußmesser 84 und den Druckmesser 88, die der Überwachung des Betriebszustandes des Kondensatkreislaufs 62 und gegebenenfalls der Regelung der Kondensatpumpe 80 dienen, zu der ersten Verzweigung 92.

Der weitere Strömungsweg des Kondensats im Kondensatkreislauf 62 ab der ersten Verzweigung 92 hängt vom jeweiligen Betriebszustand der Vorrichtung 30 ab, der durch die Temperatur $T_{Ko1}$ des umlaufenden Kondensates beim Verlassen des Kondensatsumpfes 150, die Temperatur $T_{rück}$ des Heizwassers im Heizwasserkreislauf 152 beim Eintritt in den Kondensat-Heizwasser-Wärmetauscher 96, die Temperatur $T_{brauch}$ des Brauchwassers in der Brauchwasserzuführleitung 166 beim Verlassen des Kondensat-Brauchwasser-Wärmetauschers 114, das Vorliegen einer Brauchwasserentnahme und das Bestehen eines Heizwasserumlaufs in dem Heizwasserkreislauf 152 bestimmt ist.

Die Temperatur $T_{Ko1}$ wird an einer beliebigen Stelle des Kondensatkreislaufs 62 zwischen dem Kondensataustritt 46 aus dem Restwärmetauscher 44 und der ersten Verzweigung 92 gemessen.

Die Temperatur $T_{rück}$ wird in der Heizwasser-Leitung 162 zwischen dem Heizwasser-Ausgang des Heizwasser-Brauchwasser-Wärmetauschers 160 und dem Heizwasser-Eingang des Kondensat-Heizwasser-Wärmetauschers 96 gemessen.

Die Temperatur $T_{brauch}$ wird in der Brauchwasserleitung 170 zwischen dem Brauchwasser-Ausgang des Kondensat-Brauchwasser-Wärmetauschers 114 und dem Brauchwasser-Eingang des Heizwasser-Brauchwasser-Wärmetauschers 160 gemessen.

Das Vorliegen einer Brauchwasserentnahme wird mittels eines in der Brauchwasserzuführleitung 166, vorzugsweise in der Brauchwasserleitung 176 angeordneten (nicht dargestellten) Sensors detektiert, der beispielsweise auf eine Strömung durch die Brauchwasserzuführleitung 166 oder auf einen Druckabfall in derselben anspricht.

Anhand der Temperaturen $T_{Ko1}$, $T_{Ko2}$ $T_{rück}$ und $T_{brauch}$ und des Vorliegens einer Brauchwasserentnahme werden drei Betriebszustände A, B und C im Winterbetrieb, also bei bestehendem Heizwasserumlauf in dem Heizwasserkreislauf 152, wie folgt definiert:

Betriebszustand A liegt vor, wenn kein Brauchwasser entnommen wird und die Temperatur $T_{brauch}$ kleiner ist als oder gleich groß ist wie die Temperatur $T_{rück}$ oder wenn Brauchwasser entnommen wird und die Temperatur $T_{Ko1}$ größer ist als oder gleich groß ist wie die Temperatur $T_{rück}$.

Der Betriebszustand B liegt vor, wenn Brauchwasser entnommen wird und die Temperatur $T_{Ko1}$ kleiner ist als die Temperatur $T_{rück}$.

Der Betriebszustand C liegt vor, wenn keiner der Betriebszustände A oder B vorliegt, wenn also kein Brauchwasser entnommen wird und die Temperatur $T_{brauch}$ größer ist als die Temperatur $T_{rück}$.

Eine (nicht dargestellte) Steuereinheit ermittelt aus den genannten Temperaturen und dem Vorliegen einer Brauchwasserentnahme den jeweiligen Betriebszustand und schaltet das erste Sperrventil 110 sowie das zweite Sperrventil 122 in Abhängigkeit vom ermittelten Betriebszustand.

Im Betriebszustand A sind sowohl das erste Sperrventil 110 als auch das zweite Sperrventil 122 geschlossen. Das Kondensat kann daher weder durch die erste Umgehungsleitung 108 noch durch die zweite Umgehungsleitung 120 strömen, sondern fließt statt dessen erst durch den Kondensat-Heizwasser-Wärmetauscher 96, wo es Wärme an das im Heizwasserkreislauf 152 umlaufende Heizwasser abgibt, und dann durch das Rückschlagventil 106 und den Kondensat-Brauchwasser-Wärmetauscher 114, wo es Wärme an das Brauchwasser in der Brauchwasserzuführleitung 166 abgibt.

Die Bedingungen für den Betriebszustand A gewährleisten dabei, daß das Kondensat in beiden Wärmetauschern 96, 114 Wärme abgibt und nicht etwa Wärme aufnimmt.

Im Betriebszustand B ist das erste Sperrventil 110 geöffnet und das zweite Sperrventil 122 geschlossen.

Da die erste Umgehungsleitung 108 einen geringeren Strömungswiderstand aufweist als der Kondensat-Heizwasser-Wärmetauscher 96 und das Rückschlagventil 106 mit den Kondensatleitungen 94, 98 und 102, strömt das Kondensat zum größten Teil unter Umgehung des Kondensat-Heizwasser-Wärmetauschers 96 durch die erste Umgehungsleitung 108 zur ersten Zusammenführung 104 und von dort weiter durch den Kondensat-Brauchwasser-Wärmetauscher 114, in dem es Wärme an das Brauchwasser in der Brauchwasserzuführleitung 166 abgibt.

Wegen des Rückschlagventils 106 kann das Kondensat nicht von der ersten Zusammenführung 104 in den Kondensat-Heizwasser-Wärmetauscher 96 fließen. Ferner kann das Kondensat auch nicht durch die zweite Umgehungsleitung 120 fließen, da diese durch das zweite Sperrventil 122 gesperrt ist.

Durch die vorstehend genannten Betriebsbedingungen des Betriebszustandes B ist gewährleistet, daß das Kondensat im Kondensat-Brauchwasser-Wärmetauscher 114 Wärme abgibt und nicht vom Heizwasser Wärme aufnimmt.

Im Betriebszustand C ist das erste Sperrventil 110 geschlossen, während das zweite Sperrventil 122 geöffnet ist. Die erste Umgehungsleitung 108 ist somit für das Kondensat gesperrt, so daß es von der ersten Verzweigung 92 aus durch den Kondensat-Heizwasser-Wärmetauscher 96, in dem es Wärme an das Heizwasser im Heizwasser-Kreislauf 152 abgibt, zur zweiten Verzweigung 100 strömt.

Da die zweite Umgehungsleitung 120 einen geringeren Strömungswiderstand aufweist als das Rückschlagventil 106, der Kondensat-Brauchwasser-Wärmetauscher 114 und die Kondensatleitungen 102, 112 und 116, strömt das Kondensat von der zweiten Verzweigung 100 unter Umgehung des Kondensat-Brauchwasser-Wärmetauschers 114 durch die zweite Umgehungsleitung 120 zur zweiten Zusammenführung 118.

Durch die vorstehend genannten Betriebsbedingungen des Betriebszustandes C ist in der Regel gewährleistet, daß das Kondensat im Kondensat-Heizwasser-Wärmetauscher 96 Wärme an das Heizwasser abgibt und keine Wärme aus dem Brauchwasser aufnimmt.

Mittels der vorstehend beschriebenen Steuerung des ersten Sperrventils 110 und des zweiten Sperrventils 122 ist somit eine optimale Nutzung der im Restwärmetauscher 44 vom Brennerabgas in den Kondensatstrom gelangten Restwärme möglich, ohne daß kostspielige und reparaturanfällige Mehrwegeventile benötigt werden.

Im Prinzip ist jedoch auch eine entsprechende Steuerung des Kondensatweges mittels Mehrwegventilen möglich.

In jedem der Betriebszustände A, B und C gelangt das Kondensat von der zweiten Zusammenführung 118 zum Dreiwegeventil 126.

Das Dreiwegeventil 126 ist während des Brennerbetriebes so geschaltet, daß das Kondensat durch die Kondensatleitung 128 zum oberen Kondensateintritt 54 des Restwärmetauschers 44 gelangt, so daß im Wärmetauscherraum 136 des Restwärmetauschers 44 das monodisperse Kondensatspray 180 gebildet werden kann

Nach Abschluß der Betriebsphase des Brenners 32, wenn also kein heißes Abgas mehr in den Wärmetauscherraum 136 des Restwärmetauschers 44 eintritt, wird das Dreiwegeventil 126 so geschaltet, daß das Kondensat von der Kondensatleitung 124 durch die Kondensatleitung 130 und den unteren Kondensateintritt 50 direkt in den Kondensatsumpf 150 gelangt. Der Kondensatumlauf durch den so verkürzten Kondensatkreislauf 62 wird nach dem Abschalten des Brenners 32 (mit verminderter Leistung der Kondensatpumpe 80) noch eine Zeitlang fortgesetzt, um die in dem gesamten umlaufenden Kondensat gespeicherte nutzbare Wärme möglichst vollständig in den Wärmetauschern 96 und/oder 114 an das Heizwasser bzw. das Brauchwasser abzugeben.

Der direkte Eintritt des Kondensats in den Kondensatsumpf 150 unter Umgehung der Düsenvorkammer 134 und der Düsenplatte 132 verringert dabei den Strömungswiderstand und somit die benötigte Pumpenleistung und vermeidet unnötige Kondensatverluste im Wärmetauscherraum 136.

Wie bereits erwähnt, gelangt das während des Brennerbetriebes im Heizwasserkessel 34 erhitzte Heizwasser in die Heizkörperanordnung 156, wo es Wärme an die Umgebungsluft, beispielsweise eines zu beheizenden Innenraums, abgibt.

Von dort gelangt das Heizwasser in den Heizwasser-Brauchwasser-Wärmetauscher 160, in dem das Heizwasser Wärme an das Brauchwasser in der Brauchwasserzuführleitung 166 abgibt.

Von dort gelangt das Heizwasser in den Kondensat-Heizwasser-Wärmetauscher 96, in dem das Heizwasser Wärme aus dem Kondensat im Kondensatkreislauf 62 aufnimmt, sofern einer der Betriebszustände A oder C vorliegt.

Schließlich kehrt das Heizwasser durch die Heizwasser-Rücklaufleitung 164 in den Heizwasserkessel 34 zurück.

Das Brauchwasser in der Brauchwasserzuführleitung 166 wird in der Wärmetauscherschlange 174 des Heizwasserkessels 34 durch das Heizwasser, im Heizwasser-Brauchwasser-Wärmetauscher 160 ebenfalls durch das Heizwasser und, sofern einer der Betriebszustände A oder B vorliegt, im Kondensat-Brauchwasser-Wärmetauscher 114 erwärmt.

Die Brauchwasserzuführleitung 166 wird nur dann von Brauchwasser durchströmt, wenn eine der (nicht dargestellten) Brauchwasserentnahmestellen geöffnet ist. Um eine ausreichende Wärmekapazität zur Aufnahme von Wärme aus dem Kondensatkreislauf 62 oder dem Heizwasserkreislauf 152 zur Verfügung zu stellen, ist es von Vorteil, den Heizwasser-Brauchwasser-Wärmetauscher 160 und/oder den Kondensat-Brauchwasser-Wärmetauscher 114 als Brauchwasserspeicher mit einem großen Brauchwasservolumen auszubilden, der vom Heizwasser bzw. dem Kondensat durchströmt wird.

Der Sommerbetrieb der Vorrichtung 30 unterscheidet sich vom bislang beschriebenen Winterbetrieb dadurch, daß der Umlauf des Heizwassers im Heizwasserkreislauf 152 stillgelegt ist.

Im Sommerbetrieb wird daher eine Betriebsphase des Brenners 32 nur durch die Entnahme von Brauchwasser aus der Brauchwasserzuführleitung 166 und eine daraus resultierende Abnahme der Temperatur im Heizwasserkessel 34 ausgelöst.

Da der Heizwasserumlauf im Heizwasserkreislauf 152 stillgelegt ist, bleibt das erste Sperrventil 110 stets geöffnet, so daß das Kondensat unter Umgehung des Kondensat-Heizwasser-Wärmetauschers 96 zur ersten Zusammenführung 104 strömt, während das zweite Sperrventil 122 stets geschlossen bleibt. Im Sommerbetrieb liegt also unabhängig von den Temperaturen $T_{Ko1}$, $T_{rück}$ und $T_{brauch}$ sowie vom Vorliegen einer Brauchwasserentnahme stets der Betriebszustand B vor.

Im übrigen entspricht die Funktionsweise der ersten Ausführungsform der erfindungsgemäßen Vorrichtung 30 im Sommerbetrieb derjenigen im Winterbetrieb.

Falls während des Sommer- oder Winterbetriebs zumindest zeitweise keine Restwärmenutzung gewünscht wird (beispielsweise bei sehr seltener Inbetriebnahme des Brenners 32 oder bei einer Störung des Kondensatkreislaufs 62) oder möglich ist (beispielsweise an besonders kalten Wintertagen, wenn die Heizungsrücklauftemperatur wegen der extremen Kälte derart ansteigt, daß im Restwärmetauscher 44 der Abgastaupunkt nicht mehr unterschritten werden kann), kann die Umlenkplatte 60 im Temperaturwechsler 38 in die Umleitstellung gebracht werden, in der sie das heiße, vom Brenner 32 kommende Abgas aus der Abgasleitung 36 unter Umgehung des Restwärmetauschers 44 direkt in das Schornsteinzuführrohr 58 lenkt.

Falls bei hinreichend hohem Brauchwasserverbrauch mit der beschriebenen Vorrichtung 30 eine ganzjährige Restwärmenutzung durch Abgabe von Wärme aus dem Kondensat an Brauchwasser in der Brauchwasserzuführleitung 166 möglich ist, kann statt der beweglichen Umlenkplatte 60 auch eine in der Durchleitstellung fixierte Platte verwendet werden, wodurch Kosten eingespart und eine geringere Störanfälligkeit erreicht werden.

Eine zweite Ausführungsform der erfindungsgemäßen Vorrichtung 30 zur Nutzung der Restwärme eines Abgases einer Feuerungsanlage unterscheidet sich von der vorstehend beschriebenen ersten Ausführungsform lediglich hinsichtlich der Ausgestaltung des Restwärmetauschers 44.

Wie in Fig. 11 dargestellt, wird in dem Wärmetauscherraum 136 des Restwärmetauschers 44 der zweiten Ausführungsform kein monodisperses Kondensatspray erzeugt, sondern es werden nicht zerfallende, von der Düsenplatte 132 bis zum Kondensatsumpf 150 frei fallende Kondensatstrahlen 178 erzeugt, deren Oberfläche als Wärmetauscherfläche dient.

Nicht zerfallende, idealerweise bis hinunter zum Kondensatsumpf 150 intakte Kondensatstrahlen 178 lassen sich mit kurzen, scharfkantigen Düsenbohrungen 138 erreichen, von denen eine in Fig. 12 im Längsschnitt gezeigt ist.

Die in Fig. 12 dargestellte Düsenbohrung 138e umfaßt einen im wesentlichen zylindrischen Einlaufbereich 182, der auf der Oberseite 140 der Düsenplatte 132 mündet und dessen Achse senkrecht zu der Oberseite 140 ausgerichtet ist, und einen im wesentlichen kegelstumpfförmigen, sich nach unten an den Einlaufbereich 182 anschließenden und zu diesem koaxialen Auslaufbereich 184, dessen kleinster Durchmesser mit dem Durchmesser D' des Einlaufbereiches übereinstimmt, der sich nach unten hin weitet und auf der Unterseite 148 der Düsenplatte 132 mündet.

Die Summe der Längen des Einlaufbereichs 182 und des Auslaufbereichs 184 wird mit L' bezeichnet.

Zur Erzeugung nicht zerfallender Kondensatstrahlen 178 wird das Verhältnis der Länge L' zum Durchmesser D' vorteilhafterweise kleiner als ungefähr 2, vorzugsweise kleiner als ungefähr 1/2, gewählt.

Die Einlauföffnung des Einlaufbereichs 182 ist vorzugsweise scharfkantig ausgebildet, wobei unter "scharfkantig" zu verstehen sein soll, daß der Kantenradius weniger als ungefähr 1/4 des Durchmessers D' des Einlaufbereichs 182 beträgt. Besonders günstig ist es, wenn der Kantenradius weniger als ungefähr 1/10 des Durchmessers D' beträgt.

Die Strömungsgeschwindigkeit des Kondensats durch die Düsenbohrung 138e wird zur Erzeugung eines intakten Kondensatstrahls 178 durch die Wahl einer geeigneten Förderleistung der Kondensatpumpe 80 so eingestellt, daß sich eine Reynolds-Zahl von weniger als ungefähr 20.000, vorzugsweise von weniger als ungefähr 10.000, und von mehr als ungefähr 100 ergibt.

Der in Fig. 11 dargestellte Restwärmetauscher 44 der zweiten Ausführungsform der erfindungsgemäßen Vorrichtung 30 bietet gegenüber dem in Fig. 2 dargestellten Monodispers-Kondensatspray-Wärmetauscher bei gleicher Bauhöhe eine geringere Wärmetauscherfläche, muß also in der Regel höher ausgelegt werden. Er bietet jedoch gegenüber dem Monodispers-Kondensatspray-Wärmetauscher den Vorteil, daß auch bei hohen Strömungsgeschwindigkeiten des Abgases im Wärmetauscherraum 136 keine Tropfen gebildet werden, die vom Abgasstrom aus dem Restwärmetauscher 44 hinausgetragen werden können, während beim Monodispers-Kondensatspray-Wärmetauscher für die Tropfen des Kondensatsprays bei Überschreiten einer gewissen Relativgeschwindigkeit zwischen den fallenden Kondensattropfen und dem aufsteigenden Abgas die Weberzahl zu groß wird, so daß die Tropfen des Sprays in kleinere Tröpfchen zerfallen, welche vom Abgasstrom mitgerissen werden können.

Da bei dem Restwärmetauscher 44 mit intakten Kondensatstrahlen 178 hohe Relativgeschwindigkeiten zwischen Abgas und fallendem Kondensat zulässig sind, kann der Restwärmetauscher 44 mit intakten Kondensatstrahlen 178 eine geringere Querschnittsfläche als der Kondensatspray-Wärmetauscher der ersten Ausführungsform aufweisen.

Wird eine lange Düsenbohrung 138 zusammen mit einem scharfkantigen Einlauf verwendet, so kann dies zu Kavitation in der Düsenbohrung führen, welche wiederum die Abspaltung von Tröpfchen aus dem Kondensatstrahl 178 zur Folge hat. Ein solcher Fall ist in Fig. 13 für eine zylindrische Düsenbohrung 138f mit scharfkantiger Einlauföffnung und einer Länge L, die größer ist als das ungefähr Dreifache des Durchmessers D der Düsenbohrung 138f, dargestellt. Im Einlaufbereich entstehende Kavitationsblasen sind mit dem Bezugszeichen 186 bezeichnet.

Kavitation in der Düsenbohrung kann insbesondere bei warmem Kondensat und niedrigem Flüssigkeitsdruck im Kondensat auftreten.

Neben dem Entstehen unerwünscht kleiner Tropfen hat die Kavitation eine Erhöhung der erforderlichen Pumpenleistung der Kondensatpumpe 80 zur Folge.

Denen der Kavitation vergleichbare negative Auswirkungen hat das Entstehen einer Einlaufrezirkulation in der Düsenbohrung, die ebenfalls durch eine scharfkantige Einlauföffnung in Verbindung mit zu großer Bohrungslänge L bedingt sein kann.

Abgesehen von den beschriebenen Unterschieden im Restwärmetauscher 44 stimmt die zweite Ausführungsform der erfindungsgemäßen Vorrichtung 30 mit der ersten Ausführungsform in Aufbau und Funktion überein.

Eine dritte Ausführungsform der erfindungsgemäßen Vorrichtung zur Nutzung der Restwärme eines Abgases einer Feuerungsanlage unterscheidet sich von der ersten Ausführungsform ebenfalls nur hinsichtlich des Aufbaus des Restwärmetauschers 44.

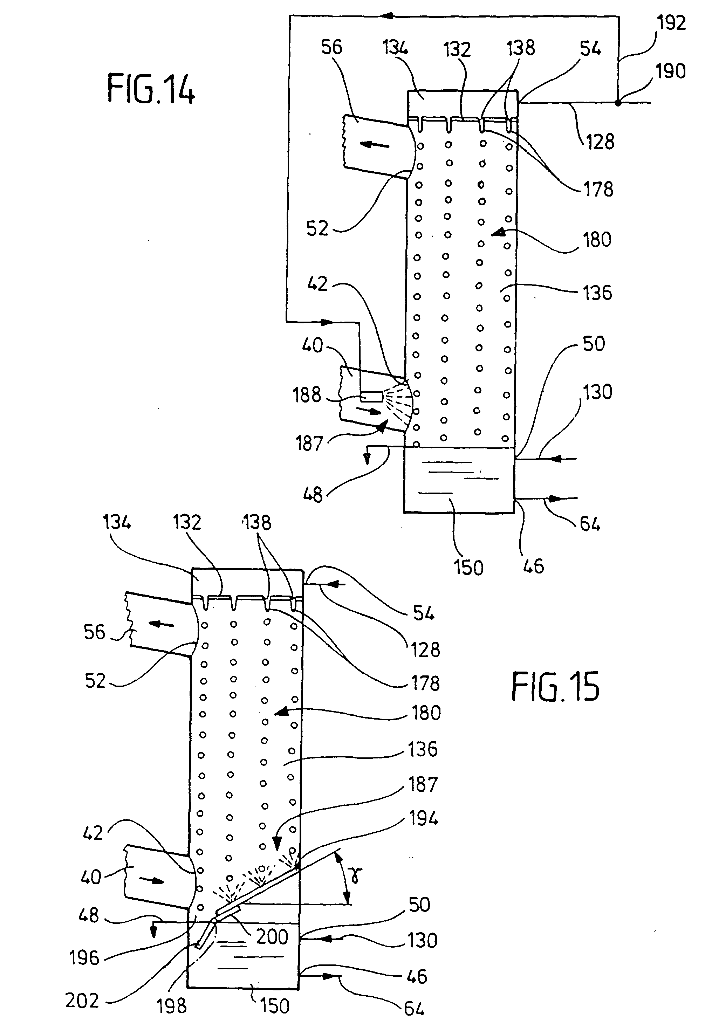

Wie in Fig. 14 dargestellt, wird auch in dem Restwärmetauscher 44 der dritten Ausführungsform der erfindungsgemäßen Vorrichtung 30 ein monodisperses Kondensatspray 180 erzeugt.

Zusätzlich wird jedoch ein Verdampfungs-Kondensatspray 187 mittels einer nahe des Abgaseintritts 42 im Wärmetauscherraum 136 oder, wie in Fig. 14 dargestellt, im Abgaszuführrohr 40 angeordneten Zerstäuberdüse 188 erzeugt. Die Zerstäuberdüse 188 wird durch eine an einer dritten Verzweigung 190 von der Kondensatleitung 128 abzweigende Kondensatzweigleitung 192 mit Kondensat gespeist.

Die Verzweigung 190 ist so ausgebildet, daß nur ungefähr ein Tausendstel bis ein Hundertstel des gesamten Kondensatstroms durch die Kondensatleitung 128 in die Kondensatzweigleitung 192 gelangt und durch die Zerstäuberdüse 188 versprüht wird.

Die versprühte Kondensatmenge entspricht im zeitlichen Mittel ungefähr der im Restwärmetauscher 44 durch Kondensation aus dem Abgas netto gebildeten Kondensatmenge.

Die Menge des durch die Zerstäuberdüse 188 gebildeten Verdampfungs-Kondensatsprays 187 wird ferner so gewählt, daß sämtliche Tröpfchen des Verdampfungs-Kondensatsprays 187 durch den heißen Abgasstrom vollständig verdampft werden. Das Verdampfungs-Kondensatspray 187 braucht daher nicht notwendigerweise monodispers zu sein.

Die arithmetische mittlere Tropfengröße des Verdampfungs-Kondensatsprays 187 beträgt vorzugsweise nur ungefähr 10 bis 100 μm, die größten Tropfen in diesem Verdampfungs-Kondensatspray 187 sollten einen Durchmesser von weniger als ungefähr 200 μm aufweisen.

Um die Tropfen des zweiten Kondensatsprays 187 klein zu halten, kann der Druck des Kondensatstromes an der Zerstäuberdüse 188 durch eine (nicht dargestellte) in der Kondensatzweigleitung 192 angeordnete zusätzliche Kondensatförderpumpe erhöht werden.

Die Durchmesser D der Düsenkanäle 146 der Düsenbohrungen 138 in der Düsenplatte 132 werden so gewählt, daß die Tropfen des monodispersen Kondensatsprays 180 einen Durchmesser von ungefähr 0,4 mm bis ungefähr 5 mm aufweisen, also relativ grob sind.

Die Tropfen des monodispersen Kondensatsprays 180 sind daher zu groß, um vom in den Wärmetauscherraum 136 eintretenden Abgas verdampft zu werden. Dafür kondensiert der im Abgasstrom mitgeführte Wasserdampf an den großen Tropfen leichter als an kleineren.

Während also bei dem Monodispers-Kondensatspray-Wärmetauscher der ersten Ausführungsform Kondensattropfen derselben Größe für Verdampfung und Rekondensation verwendet werden, werden bei der dritten Ausführungsform die Tröpfchen des Verdampfungs-Kondensatsprays 187 ausschließlich verdampft, während die Tropfen des monodispersen Kondensatsprays 180 lediglich der Abkühlung des Abgasstroms und der Anlagerung von kondensiertem Wasserdampf aus dem Abgasstrom dienen.

Die Verwendung zweier unterschiedlicher Kondensatsprays erlaubt es daher, die mittlere Tropfengröße oder das Tropfengrößenspektrum, einerseits für eine möglichst einfache und rasche Verdampfung, andererseits für eine möglichst leichte Kondensation, getrennt zu optimieren.

Im übrigen entspricht die dritte Ausführungsform der erfindungsgemäßen Vorrichtung 30 hinsichtlich Aufbau und Funktion der ersten Ausführungsform.

Eine vierte Ausführungsform der erfindungsgemäßen Vorrichtung zur Nutzung der Restwärme eines Abgases einer Feuerungsanlage unterscheidet sich von der vorstehend beschriebenen ersten Ausführungsform wiederum hinsichtlich des Aufbaus des Restwärmetauschers 44.

Wie in Fig. 15 dargestellt, wird auch bei der vierten Ausführungsform zusätzlich zu einem mittels der Düsenplatte 132 erzeugten monodispersen Kondensatspray 180 ein Verdampfungs-Kondensatspray 187 in einem Bereich des Wärmetauscherraumes 136 nahe dem Abgaseintritt 42 erzeugt. Dazu wird aber im Gegensatz zur dritten Ausführungsform keine Zerstäuberdüse, sondern eine oberhalb des Kondensatsumpfes 150 im Wärmetauscherraum 136 angeordnete, unter einem Winkel γ gegen die Horizontale geneigte Zerstäuberplatte 194 verwendet.

Die relativ großen Tropfen des monodispersen Kondensatsprays 180 treffen auf die geneigte Zerstäuberplatte 194 auf und zerfallen dabei in kleinere Tröpfchen und Ligamente, die vom in den Wärmetauscherraum 136 eintretenden heißen Abgas leicht verdampft werden können. Der nicht verdampft werdende Anteil des auf die Zerstäuberplatte 194 auftreffenden Kondensats läuft an der Zerstäuberplatte 194 herab und gelangt durch einen Durchlaß 196 zwischen einem Rand der Zerstäuberplatte 194 und der Innenwand des Wärmetauscherraumes 136 in den Kondensatsumpf 150.

Der Durchlaß 196 ist mittels einer um eine horizontale Achse 198 schwenkbaren und mit einem Anschlag 200 versehenen Verschlußplatte 202 verschließbar.

In der in Fig. 15 gezeigten Offenstellung der Verschlußplatte 202 liegt der Anschlag 200 an einer Unterseite der Zerstäuberplatte 194 an, und der Durchlaß 196 ist für den Durchtritt von Kondensat geöffnet. In diese Offenstellung wird die Verschlußplatte 202 während des Betriebes des Brenners 32 gebracht, während das monodisperse Kondensatspray 180 erzeugt wird.

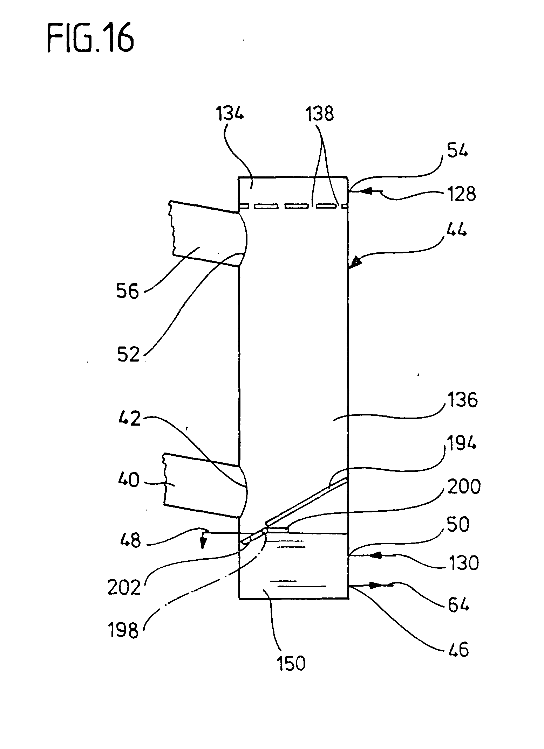

Während der Betriebspausen des Brenners 32, in denen kein monodisperses Kondensatspray 180 erzeugt wird, wird die Verschlußplatte 202 in die in Fig. 16 gezeigte Geschlossenstellung gebracht, in der ein dem Anschlag 200 abgewandter Rand der Verschlußplatte 202 an einer Innenwand des Wärmetauscherraums 136 anliegt und der Durchlaß 196 verschlossen ist.

Durch das Verschließen des Durchlasses 196 wird erreicht, daß während der Betriebspausen des Brenners 32 wenig oder gar kein Kondensat aus dem Kondensatsumpf 150 verdunstet.

Der Neigungswinkel γ der Zerstäuberplatte 194 wird vorzugsweise zwischen ungefähr 15° und ungefähr 40° gewählt.

Das Verhältnis der auf den Querschnitt des Wärmetauscherraums 136 parallel projizierten Fläche des Durchlasses 196 zu der auf den Querschnitt des Wärmetauscherraums 136 parallel projizierten Fläche der Zerstäuberplatte 194 wird vorzugsweise zwischen ungefähr 1/20 und ungefähr 1/5 gewählt.

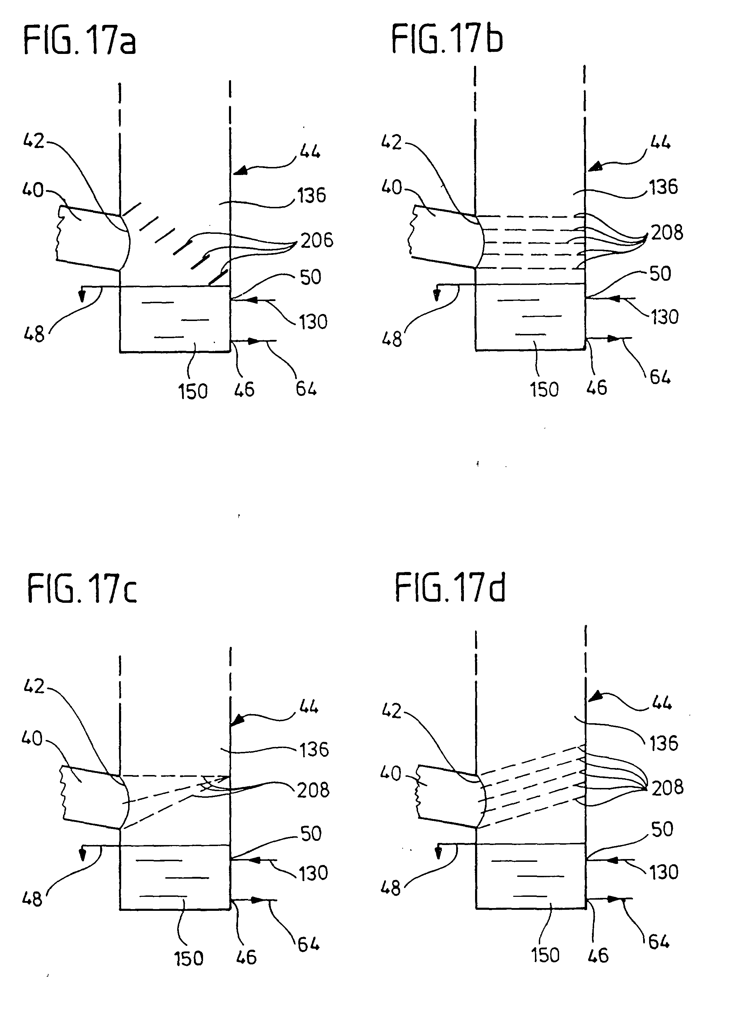

Statt einer einzelnen Zerstäuberplatte 194, wie in den Fig. 15 und 16 dargestellt, können bei der vierten Ausführungsform der erfindungsgemäßen Vorrichtung 30 zur Erzeugung des Verdampfungs-Kondensatsprays 187 auch Anordnungen aus mehreren Zerstäuberplatten oder Prallblechen verwendet werden, von denen einige schematisch in den Fig. 17a bis 17d dargestellt sind.

Fig. 17a zeigt eine gestaffelte Anordnung von mehreren, beispielsweise sechs geschlossenen Prallblechen 206, die parallel zueinander und gegen die Horizontale geneigt im unteren Bereich des Wärmetauscherraums 136 des Restwärmetauschers 44 nahe des Abgaseintritts 42 angeordnet sind.

Die Prallbleche 206 überdecken einzeln jeweils nur einen Teilbereich des Querschnitts des Wärmetauscherraums 136, zusammen jedoch den gesamten Querschnitt des Wärmetauscherraums 136.

Der dem Abgaseintritt 42 abgewandte Rand jeden Prallblechs 206 liegt höher als der dem Abgaseintritt 42 zugewandte Rand des Prallblechs 206, so daß die Prallbleche 206 als Leitbleche für die im Wärmetauscherraum 136 aufwärts gerichtete Abgasströmung dienen.

Von den unten liegenden Rändern der Prallbleche 206 abtropfendes Kondensat gelangt ungehindert in den Kondensatsumpf 150.

Fig. 17b zeigt eine Anordnung aus mehreren, beispielsweise fünf übereinander angeordneten, zueinander parallelen und horizontal ausgerichteten Lochblechen 208, die auf der Höhe des Abgaseintritts 42 im unteren Bereich des Wärmetauscherraums 136 angeordnet sind.

Jedes der Lochbleche 208 überdeckt einzeln den gesamten Querschnitt des Wärmetauscherraums 136. Jedes der Lochbleche, die beispielsweise aus Edelstahl gefertigt sein können, weist einen Durchlaß von ungefähr 55 bis 75% auf. Das heiße Abgas, das aus dem Abgaszuführrohr 40 durch den Abgaseintritt 42 in den Wärmetauscherraum 136 eintritt, kann durch die Löcher in den Lochblechen 208 nach oben strömen.

Kondensattropfen, die auf eines der Lochbleche 208 fallen, zerfallen in kleinere Tröpfchen und Ligamente, die durch das Abgas verdampft werden. Kondensattropfen, die durch die Öffnungen eines der Lochbleche 208 fallen, erreichen das jeweils darunter liegende Lochblech 208.

Werden die Löcher in einem Lochblech 208 jeweils versetzt zu den Löchern in dem darüber- und in dem darunterliegenden Lochblech 208 angeordnet, so läßt sich erreichen, daß jeder durch den Wärmetauscherraum 136 fallende Kondensattropfen mindestens einmal auf ein Lochblech 208 auftrifft und in kleinere Tröpfchen zerfällt, bevor er den Kondensatsumpf 150 erreicht. Dadurch werden die Wärme- und Stoffübertragungsvorgänge verbessert.

In Fig. 17c ist eine Abwandlung der Lochblechanordnung der Fig. 17b zu sehen, bei der mehrere, beispielsweise drei, Lochbleche 208 der im Zusammenhang mit Fig. 17b beschriebenen Art unter verschiedenen Winkeln gegen die Horizontale ausgerichtet sind und an einem gemeinsamen Rand aneinanderstoßen.

In Fig. 17d schließlich ist eine weitere Abwandlung der Lochblechanordnung aus Fig. 17b zu sehen, bei der mehrere, beispielsweise fünf Lochbleche 208 der im Zusammenhang mit Fig. 17b beschriebenen Art parallel zueinander, jedoch geneigt gegen die Horizontale in einem unteren Bereich des Wärmetauscherraumes 136 auf Höhe des Abgaseintritts 42 angeordnet sind.

Dabei sind die Lochbleche 208 so angeordnet, daß sie zu einem dem Abgaseintritt 42 abgewandten Rand hin ansteigen, so daß die Lochbleche 208 als Leitbleche für die Strömung des heißen Abgases vom Abgaseintritt 42 nach oben zum Abgasaustritt 52 hin dienen können.

Mittels jeder der in den Fig. 17a bis 17d dargestellten Prallblech- bzw. Lochblechanordnungen wird aus einem mittels der Düsenplatte 132 erzeugten monodispersen Kondensatspray 180 ein Verdampfungs-Kondensatspray 187 aus kleineren Tröpfchen erzeugt, das durch das heiße Abgas, das in den Wärmetauscherraum 136 einströmt, vollständig verdampft wird.

Im übrigen stimmt die vierte Ausführungsform der erfindungsgemäßen Vorrichtung 30 hinsichtlich Aufbau und Funktion mit der vorstehend beschriebenen ersten Ausführungsform überein.

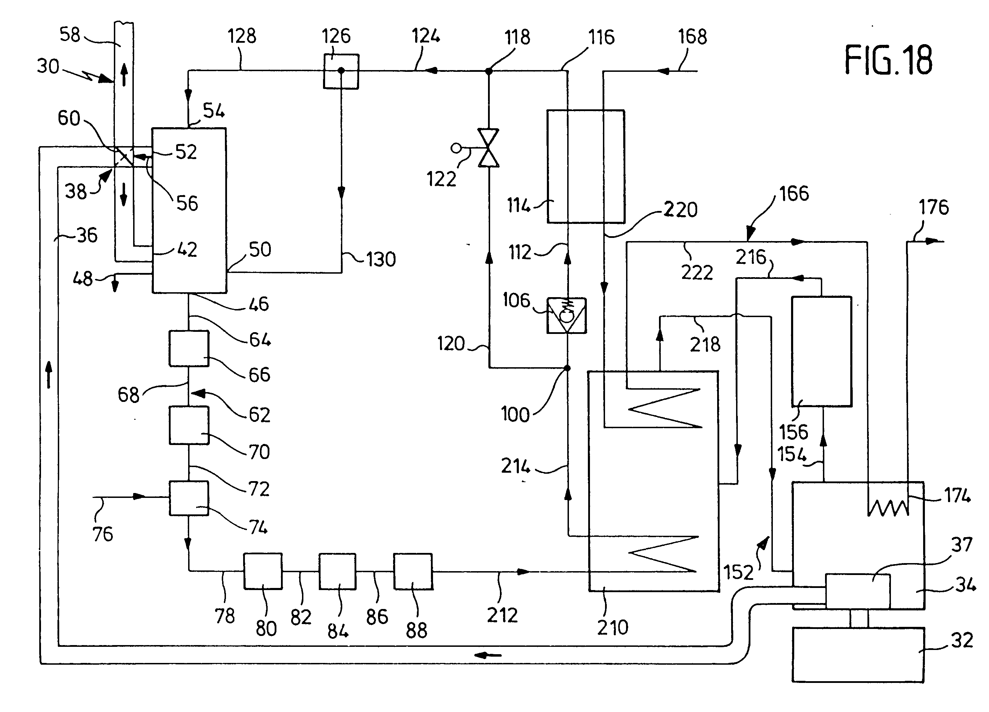

Eine in Fig. 18 schematisch dargestellte fünfte Ausführungsform der erfindungsgemäßen Vorrichtung zur Nutzung der Restwärme eines Abgases einer Feuerungsanlage unterscheidet sich von der ersten Ausführungsform dadurch, daß der Kondensat-Heizwasser-Wärmetauscher 96 und der Heizwasser-Brauchwasser-Wärmetauscher 160 der ersten Ausführungsform in einem Kondensat-Heizwasser-Brauchwasser-Doppelwärmetauscher 210 zusammengefaßt sind, der im Kondensatkreislauf 62 zwischen dem Druckmesser 88 und der Verzweigung 100 angeordnet ist.

Eine Kondensatleitung 212 führt vom Druckmesser 88 zu einem Kondensat-Eingang des Kondensat-Heizwasser-Brauchwasser-Doppelwärmetauschers 210.

Ein Kondensatausgang des Doppelwärmetauschers 210 ist über eine weitere Kondensatleitung 214 mit der Verzweigung 100 verbunden.

Der Kondensat-Heizwasser-Wärmetauscher 96, die erste Umgehungsleitung 108 mit dem ersten Sperrventil 110 sowie die Kondensatleitungen 90, 94 und 98 des Kondensatkreislaufs 62 der ersten Ausführungsform (siehe Fig. 1) entfallen.

Von der Heizkörperanordnung 156 im Heizwasserkreislauf 152 führt eine Heizwasserleitung 216 zu einem Heizwasser-Eingang des Doppelwärmetauschers 210.

Ein Heizwasser-Ausgang des Doppelwärmetauschers 210 ist über eine Heizwasser-Rücklaufleitung 218 mit dem Heizwasserkessel 34 verbunden.

Der Heizwasser-Brauchwasser-Wärmetauscher 160, der Kondensat-Heizwasser-Wärmetauscher 96, die Heizwasserleitungen 158 und 162 sowie die Heizwasser-Rücklaufleitung 164 des Heizwasserkreislaufs 152 der ersten Ausführungsform (siehe Fig. 1) entfallen.

Von einem Brauchwasser-Ausgang des Kondensat-Brauchwasser-Wärmetauschers 114 führt eine Brauchwasserleitung 220 zu einem Brauchwasser-Eingang des Kondensat-Heizwasser-Brauchwasser-Doppelwärmetauschers 210.

Ein Brauchwasser-Ausgang des Doppelwärmetauschers 210 ist über eine weitere Brauchwasserleitung 222 mit dem Brauchwasser-Eingang der Wärmetauscherschlange 174 verbunden.

Der Heizwasser-Brauchwasser-Wärmetauscher 160 sowie die Brauchwasserleitungen 170 und 172 der Brauchwasserzuführleitung 166 der ersten Ausführungsform (siehe Fig. 1) entfallen.

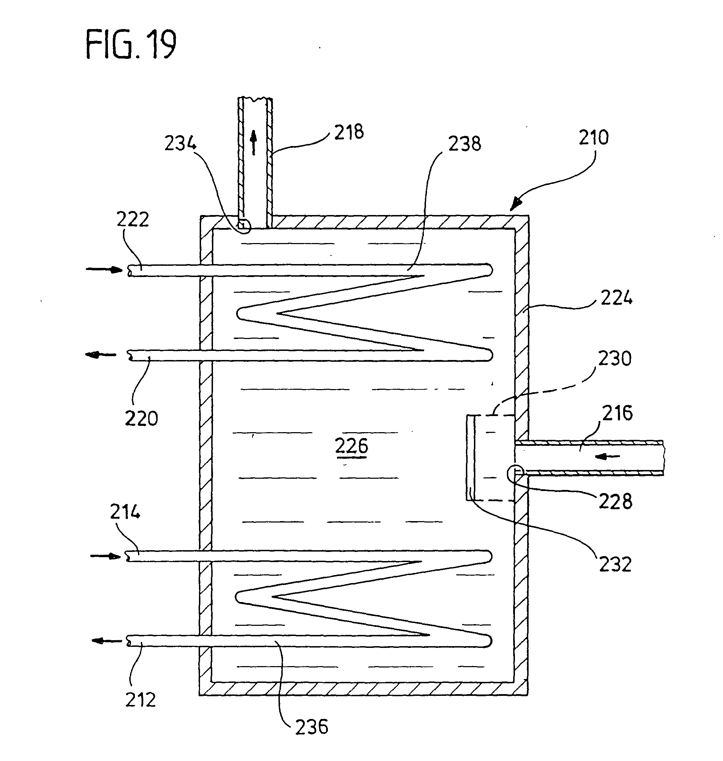

Der in Fig. 19 schematisch im einzelnen dargestellte Kondensat-Heizwasser-Brauchwasser-Doppelwärmetauscher 210 umfaßt einen beispielsweise aufrecht stehenden zylindrischen, wärmeisolierten Heißwasserspeicher 224, in dessen mit Heizwasser gefüllten Innenraum 226 die Heizwasserleitung 216 und die Heizwasser-Rücklaufleitung 218 münden.

Die Mündungsöffnung 228 der Heizwasserleitung 216 ist in der Wand des Heißwasserspeichers 224 auf ungefähr halber Höhe derselben angeordnet und von einem ringförmigen Siebblech 230 konzentrisch umgeben, welches ein zylindrisches Prallblech 232 trägt.

Die Mündungsöffnung 234 der Heizwasser-Rücklaufleitung 218 ist in der oberen Stirnwand des Heißwasserspeichers 224 angeordnet.

Im unteren Bereich des Innenraums 226 des Heißwasserspeichers 224 ist eine Kondensat-Wärmetauscherschlange 236 angeordnet, deren Enden wasserdicht durch die Seitenwand des Heißwasserspeichers 224 geführt und an die Kondensatleitung 212 bzw. an die Kondensatleitung 214 angeschlossen sind.

In einem oberen Bereich des Innenraums 226 des Heißwasserspeichers 224 ist nahe der Mündungsöffnung 234 der Heizwasser-Rücklaufleitung 218 eine Brauchwasser-Wärmetauscherschlange 238 angeordnet, deren Enden wasserdicht durch die Seitenwand des Heißwasserspeichers 224 geführt und an die Brauchwasserleitung 220 bzw. die Brauchwasserleitung 222 angeschlossen sind.

Die Funktionsweise des Kondensat-Heizwasser-Brauchwasser-Doppelwärmetauschers 210 ist die folgende:

Während des Umlaufs des Kondensats im Kondensatkreislauf 62, also während des Betriebes und kurz nach Abschalten des Brenners 32, wird die Kondensat-Wärmetauscherschlange 236 im Heißwasserspeicher 224 von im Restwärmetauscher 44 erwärmtem Kondensat durchströmt, das Wärme an das im unteren Bereich des Heizwasserspeichers 224 befindliche Heizwasser abgibt.

Bei Entnahme von Brauchwasser an einer der (nicht dargestellten) Brauchwasserentnahmestellen aus der Brauchwasser-Zuführleitung 166 wird die Brauchwasser-Wärmetauscherschlange 238 im Heizwasserspeicher 224 von vergleichsweise kaltem Brauchwasser durchströmt, das das im oberen Bereich des Innenraums 226 des Heizwasserspeichers 224 befindliche Heizwasser abkühlt.

Da die Dichte des Heizwassers mit steigender Temperatur abnimmt, bildet sich im Innenraum 226 des Heizwasserspeichers 224 eine vertikale Temperaturschichtung aus, wobei sich das wärmere Heizwasser im oberen Bereich und das kältere Heizwasser im unteren Bereich des Heizwasserspeichers 224 sammelt.

Aufgrund dieser vertikalen Temperaturschichtung wird erreicht, daß die Temperaturunterschiede zwischen dem erwärmten Kondensat und dem die Kondensat-Wärmetauscherschlange 236 umgebenden Heizwasser einerseits und zwischen dem Brauchwasser und dem die Brauchwasser-Wärmetauscherschlange 238 umgebenden Heizwasser andererseits stets so groß wie möglich sind.

Der Wärmeübergang vom Kondensatkreislauf 62 zum Heizwasser-kreislauf 152 bzw. vom Heizwasserkreislauf 152 zur Brauchwasserzuführleitung 166 wird daher durch kurzzeitige Schwankungen in den Kondensat-, Heizwasser- oder Brauchwassertemperaturen nur unwesentlich beeinträchtigt.

Ferner ist es durch die große heizwasserseitige Wärmekapazität des Heizwasserspeichers 224 möglich, eine optimale Restwärmenutzung auch dann zu erreichen, wenn die Brennerbetriebsphasen, während derer erwärmtes Kondensat im Kondensatkreislauf 62 umläuft, nur kurz sind.

Das im Heizwasserkreislauf 152 umlaufende Heizwasser trifft nach seinem Eintritt durch die Mündungsöffnung 228 auf das Prallblech 232, verliert dabei im wesentlichen seinen Impuls und strömt mit nur geringer Geschwindigkeit durch Löcher in dem Siebblech 230 in den Innenraum 226 des Heizwasserspeichers. Die vertikale Temperaturschichtung im Innenraum 226 des Heizwasserspeichers 224 wird daher durch das eintretende Heizwasser nicht gestört.

Durch die Mündungsöffnung 234 an der Oberseite des Innenraums 226 gelangt stets das wärmste Heizwasser aus dem Heizwasserspeicher 224 in die Heizwasser-Rücklaufleitung 218 zum Heizwasserkessel 32, so daß der Temperaturabfall im Heizwasserkessel 32 aufgrund des Umlaufs des Heizwassers im Heizwasserkreislauf 152 und somit die erforderliche Brennertätigkeit minimiert werden.

Die fünfte Ausführungsform der erfindungsgemäßen Vorrichtung 30 weist zwei verschiedene Betriebszustände A' und B' auf, die durch die Temperaturen $T_{Ko3}$ des Kondensats nach dem Austritt aus dem Kondensat-Heizwasser-Brauchwasser-Doppelwärmetauscher 210, durch die Temperatur $T_{brauch}$ des Brauchwassers bei Verlassen des Kondensat-Brauchwasser-Wärmetauschers 114, durch das Vorliegen einer Brauchwasserentnahme und durch das Bestehen eines Heizwasserumlaufs in dem Heizwasserkreislauf 152 bestimmt sind.

Die Temperatur $T_{Ko3}$ wird in der Kondensatleitung 214 gemessen.

Die Temperatur $T_{brauch}$ wird in der Brauchwasserleitung 220 gemessen.

Das Vorliegen einer Brauchwasserentnahme wird mittels eines in der Brauchwasserzuführleitung 166 angeordneten (nicht dargestellten) Strömungs- oder Drucksensors detektiert.

Der Betriebszustand A' liegt im Sommerbetrieb, d.h. bei stillgelegtem Heizwasserumlauf, stets vor.

Im Winterbetrieb, d.h. bei bestehendem Heizwasserumlauf im Heizwasserkreislauf 152, liegt der Betriebszustand A' vor, wenn Brauchwasser entnommen wird oder wenn kein Brauchwasser entnommen wird und die Temperatur $T_{Ko3}$ größer ist als oder gleich groß ist wie die Temperatur $T_{brauch}$.

Der Betriebszustand B' liegt vor, wenn der Betriebszustand A' nicht vorliegt.

Eine (nicht dargestellte) Steuereinheit ermittelt den jeweils vorliegenden Betriebszustand aus den Meßdaten für die Temperaturen $T_{Ko3}$ und $T_{brauch}$ und dem Vorliegen einer Brauchwasserentnahme und schaltet das Sperrventil 122 in Abhängigkeit vom ermittelten Betriebszustand.

Im Betriebszustand A' ist das Sperrventil 122 geschlossen, so daß die Umgehungsleitung 120 nicht vom Kondensat durchströmt werden kann.

Das Kondensat strömt daher durch den Kondensat-Brauchwasser-Wärmetauscher 114, wo es Wärme an das Brauchwasser in der Brauchwasser-Zuführleitung 166 abgibt, zur Zusammenführung 118.

Die vorstehend genannten Bedingungen für den Betriebszustand A' gewährleisten daher, daß das Kondensat im Kondensat-Brauchwasser-Wärmetauscher 114 Wärme an das Brauchwasser abgibt und nicht etwa selbst erwärmt wird.

Im Betriebszustand B' ist das Sperrventil 122 geöffnet. Da die Umgehungsleitung 120 einen geringeren Strömungswiderstand aufweist als der Kondensat-Brauchwasser-Wärmetauscher 114, strömt das Kondensat im wesentlichen unter Umgehung des Kondensat-Brauchwasser-Wärmetauschers 114 durch die Umgehungsleitung 120 zur Zusammenführung 118.

Durch die Steuerung des Sperrventils 122 auf die vorstehend beschriebene Weise wird somit eine optimale Ausnutzung der im Restwärmetauscher 44 vom Abgas des Brenners 32 auf das im Kondensatkreislauf 62 umlaufende Kondensat übertragenen Wärme erreicht.

**Patentansprüche**

1. Verfahren zur Nutzung der restlichen fühlbaren und der latenten Wärme (Restwärme) eines Abgases einer Feuerungsanlage, bei dem das Abgas durch einen Restwärmetauscher strömt, im Abgas enthaltener Wasserdampf in dem Restwärmetauscher zumindest teilweise zu einem Kondensat kondensiert und das Kondensat in einem den Restwärmetauscher umfassenden Kondensatkreislauf geführt wird,
**dadurch gekennzeichnet**, daß in dem Restwärmetauscher mindestens ein frei durch den Restwärmetauscher fallender Kondensatstrahl in der Weise erzeugt wird, daß er in dem Restwärmetauscher in ein monodisperses Kondensatspray zerfällt und daß im zeitlichen Mittel die in Form von in dem Restwärmetauscher aus dem Kondensatstrahl gebildeten Kondensattropfen mit dem Abgas zu einem Abgasaustritt des Restwärmetauschers mitgeführte Kondensatmenge kleiner ist als die im Restwärmetauscher durch Kondensation aus dem Abgas netto gebildete Kondensatmenge.

2. Verfahren nach Anspruch 1, dadurch gekennzeichnet, daß im zeitlichen Mittel die in Form von in dem Restwärmetauscher aus dem Kondensatstrahl gebildeten Kondensattropfen mit dem Abgas zu einem Abgasaustritt des Restwärmetauschers mitgeführte Kondensatmenge kleiner ist als ungefähr 10%, vorzugsweise kleiner als ungefähr 4% der im Restwärmetauscher durch Kondensation aus dem Abgas netto gebildeten Kondensatmenge.

3. Verfahren nach einem der Ansprüche 1 oder 2, dadurch gekennzeichnet, daß der Kondensatstrahl durch Ausströmen des Kondensats aus einer Düsenbohrung mit einer Eintrittsöffnung und einer Austrittsöffnung erzeugt wird.

4. Verfahren nach Anspruch 3, dadurch gekennzeichnet, daß die Reynolds-Zahl der Kondensatströmung an der Austrittsöffnung der Düsenbohrung auf einen Wert kleiner als ungefähr 5.000, vorzugsweise kleiner als ungefähr 2.500, eingestellt wird.

5. Verfahren nach einem der Ansprüche 3 oder 4, dadurch gekennzeichnet, daß die Reynolds-Zahl der Kondensatströmung an dem Auslaß der Düsenbohrung auf einen Wert größer als ungefähr 100, vorzugsweise größer als ungefähr 500, eingestellt wird.

6. Verfahren nach einem der Ansprüche 3 bis 5, dadurch gekennzeichnet, daß eine Düsenbohrung mit einem Düsenkanal, dessen Länge mindestens dem ungefähr dreifachen Durchmesser der Austrittsöffnung der Düsenbohrung entspricht, verwendet wird.

7. Verfahren nach einem der Ansprüche 3 bis 6, dadurch gekennzeichnet, daß eine Düsenbohrung mit einem Düsenkanal, dessen Länge höchstens dem ungefähr 5-fachen Durchmesser der Austrittsöffnung der Düsenbohrung entspricht, verwendet wird.

8. Verfahren nach einem der Ansprüche 1 bis 7, dadurch gekennzeichnet, daß eine Düsenbohrung mit einem im wesentlichen zylindrischen Düsenkanal verwendet wird.

9. Verfahren nach Anspruch 8, dadurch gekennzeichnet, daß eine Düsenbohrung verwendet wird, die einen konischen Einlauf mit einem Öffnungswinkel von weniger als ungefähr 60° und mit einer Länge, die mindestens dem ungefähren Durchmesser der Austrittsöffnung der Düsenbohrung entspricht, aufweist.

10. Verfahren nach Anspruch 8, dadurch gekennzeichnet, daß eine Düsenbohrung verwendet wird, die einen gerundeten Einlauf mit einem Krümmungsradius, der mindestens dem ungefähren Durchmesser der Austrittsöffnung der Düsenbohrung entspricht, aufweist.

11. Verfahren nach einem der Ansprüche 3 bis 7, dadurch gekennzeichnet, daß eine Düsenbohrung mit einem Düsenkanal, der sich zu einer Austrittsöffnung hin konisch verjüngt, verwendet wird.

12. Verfahren nach Anspruch 11, dadurch gekennzeichnet, daß eine Düsenbohrung verwendet wird, deren Düsenkanal einen Öffnungswinkel von weniger als ungefähr 10° aufweist.

13. Verfahren nach einem der Ansprüche 11 oder 12, dadurch gekennzeichnet, daß eine Düsenbohrung verwendet wird, die einen konischen Einlauf mit einem Öffnungswinkel von weniger als ungefähr 60° und mit einer Länge, die mindestens einem Fünftel des ungefähren Durchmessers der Austrittsöffnung der Düsenbohrung entspricht, aufweist.

14. Verfahren nach einem der Ansprüche 11 oder 12, dadurch gekennzeichnet, daß eine Düsenbohrung verwendet wird, die einen abgerundeten Einlauf mit einem Krümmungsradius, der mindestens einem Fünftel des ungefähren Durchmessers der Austrittsöffnung der Düsenbohrung entspricht, aufweist.

15. Verfahren nach einem der Ansprüche 3 bis 14, dadurch gekennzeichnet, daß mehrere Kondensatstrahlen durch Ausströmen des Kondensats aus jeweils einer Düsenbohrung erzeugt werden.

16. Verfahren nach Anspruch 15, dadurch gekennzeichnet, daß mehrere Düsenbohrungen verwendet werden, deren Mittelachsen jeweils einen Abstand voneinander aufweisen, der mindestens dem fünffachen ungefähren Durchmesser der Austrittsöffnung einer Düsenbohrung entspricht.

17. Verfahren nach Anspruch 16, dadurch gekennzeichnet, daß mehrere Düsenbohrungen verwendet werden, deren Mittelachsen jeweils einen Abstand voneinander aufweisen, der mindestens dem achtfachen ungefähren Durchmesser der Austrittsöffnung einer Düsenbohrung entspricht.

18. Verfahren nach einem der Ansprüche 3 bis 17, dadurch gekennzeichnet, daß die Weberzahl der Tropfen des durch Zerfall des Kondensatstrahles erzeugten Kondensatsprays auf einen Wert kleiner als ungefähr 10 eingestellt wird.

19. Verfahren nach Anspruch 18, dadurch gekennzeichnet, daß die Weberzahl der Tropfen des durch Zerfall des Kondensatstrahles erzeugten Kondensatsprays auf einen Wert kleiner als ungefähr 5 eingestellt wird.

20. Verfahren nach Anspruch 19, dadurch gekennzeichnet, daß die Weberzahl der Tropfen des durch Zerfall des Kondensatstrahles erzeugten Kondensatsprays auf einen Wert kleiner als ungefähr 2 eingestellt wird.

21. Verfahren zur Nutzung der restlichen fühlbaren und der latenten Wärme (Restwärme) eines Abgases einer Feuerungsanlage, bei dem das Abgas durch einen Restwärmetauscher strömt, im Abgas enthaltener Wasserdampf in dem Restwärmetauscher zumindest teilweise zu einem Kondensat kondensiert und das Kondensat in einem den Restwärmetauscher umfassenden Kondensatkreislauf geführt wird,
**dadurch gekennzeichnet**, daß in dem Restwärmetauscher mindestens ein frei durch den Restwärmetauscher fallender Kondensatstrahl in der Weise erzeugt wird, daß er während des freien Falls durch den Restwärmetauscher zumindest bis in die Höhe des Abgasaustritts im wesentlichen nicht in Tropfen zerfällt und daß im zeitlichen Mittel die in Form von in dem Restwärmetauscher aus dem Kondensatstrahl gebildeten Kondensattropfen mit dem Abgas zu einem Abgasaustritt des Restwärmetauschers mitgeführte Kondensatmenge kleiner ist als die im Restwärmetauscher durch Kondensation aus dem Abgas netto gebildete Kondensatmenge.

22. Verfahren nach Anspruch 21, dadurch gekennzeichnet, daß der Kondensatstrahl durch Ausströmen des Kondensats aus einer Düsenbohrung mit einer Eintrittsöffnung und einer Austrittsöffnung erzeugt wird.

23. Verfahren nach Anspruch 22, dadurch gekennzeichnet, daß die Reynolds-Zahl der Kondensatströmung an der Austrittsöffnung der Düsenbohrung auf einen Wert kleiner als ungefähr 20.000, vorzugsweise kleiner als ungefähr 10.000, eingestellt wird.

24. Verfahren nach einem der Ansprüche 22 oder 23, dadurch gekennzeichnet, daß die Reynolds-Zahl der Kondensatströmung an der Austrittsöffnung der Düsenbohrung auf einen Wert größer als ungefähr 100 eingestellt wird.

25. Verfahren nach einem der Ansprüche 22 bis 24, dadurch gekennzeichnet, daß eine Düsenbohrung mit einem im wesentlichen zylindrischen Düsenkanal verwendet wird.

26. Verfahren nach Anspruch 25, dadurch gekennzeichnet, daß eine Düsenbohrung mit einem Düsenkanal, dessen Länge kleiner ist als das zweifache des ungefähren Durchmessers der Eintrittsöffnung der Düsenbohrung, verwendet wird.

27. Verfahren nach Anspruch 25, dadurch gekennzeichnet, daß eine Düsenbohrung mit einem Düsenkanal, dessen Länge kleiner ist als die Hälfte des ungefähren Durchmessers der Eintrittsöffnung der Düsenbohrung, verwendet wird.

28. Verfahren nach einem der Ansprüche 25 bis 27, dadurch gekennzeichnet, daß eine Düsenbohrung verwendet wird, die einen scharfkantigen Einlauf mit einem Krümmungsradius, der kleiner ist als ein Viertel des ungefähren Durchmessers der Eintrittsöffnung der Düsenbohrung, aufweist.

29. Verfahren nach Anspruch 28, dadurch gekennzeichnet, daß eine Düsenbohrung verwendet wird, die einen scharfkantigen Einlauf mit einem Krümmungsradius, der kleiner ist als ein Zehntel des ungefähren Durchmessers der Eintrittsöffnung der Düsenbohrung, aufweist.

30. Verfahren nach einem der Ansprüche 22 bis 24, dadurch gekennzeichnet, daß eine Düsenbohrung verwendet wird, die sich zu der Austrittsöffnung hin im wesentlichen konisch erweitert.

31. Verfahren nach einem der Ansprüche 3 bis 20 oder 22 bis 30, dadurch gekennzeichnet, daß eine Düsenbohrung mit einer Austrittsöffnung, deren Durchmesser größer ist als ungefähr 0,2 mm, verwendet wird.

**32.** Verfahren nach Anspruch 31, dadurch gekennzeichnet, daß eine Düsenbohrung mit einer Austrittsöffnung, deren Durchmesser größer ist als ungefähr 0,4 mm, verwendet wird.

**33.** Verfahren nach einem der Ansprüche 3 bis 20 oder 22 bis 32, dadurch gekennzeichnet, daß eine Düsenbohrung mit einer Austrittsöffnung, deren Durchmesser kleiner ist als ungefähr 2,5 mm, verwendet wird.

**34.** Verfahren nach einem der voranstehenden Ansprüche, dadurch gekennzeichnet, daß in dem Restwärmetauscher nahe eines Abgaseintritts, durch den das Abgas in den Restwärmetauscher strömt, ein Verdampfungs-Kondensatspray erzeugt wird, dessen Tropfen durch den Abgasstrom im wesentlichen vollständig verdampft werden.

**35.** Verfahren nach Anspruch 34, dadurch gekennzeichnet, daß ein Verdampfungs-Kondensatspray mit einer arithmetischen mittleren Tropfengröße zwischen ungefähr 10 Am und ungefähr 100 µm erzeugt wird.

**36.** Verfahren nach einem der Ansprüche 34 oder 35, dadurch gekennzeichnet, daß im zeitlichen Mittel die zur Erzeugung des Verdampfungs-Kondensatsprays verwendete Kondensatmenge höchstens ungefähr ein Zehntel, vorzugsweise höchstens ungefähr ein Hundertstel, der in den Restwärmetauscher eintretenden Kondensatmenge beträgt.

**37.** Verfahren nach einem der Ansprüche 34 bis 36, dadurch gekennzeichnet, daß im zeitlichen Mittel die zur Erzeugung des Verdampfungs-Kondensatsprays verwendete Kondensatmenge ungefähr der in dem Restwärmetauscher durch Kondensation aus dem Abgas netto gebildeten Kondensatmenge entspricht.

**38.** Verfahren nach einem der Ansprüche 34 bis 37, dadurch gekennzeichnet, daß das Verdampfungs-Kondensatspray durch Versprühen aus einer Zerstäuberdüse erzeugt wird.

**39.** Verfahren nach einem der Ansprüche 34 bis 38, dadurch gekennzeichnet, daß das Verdampfungs-Kondensatspray durch Auftreffen des Kondensatstrahls auf eine Zerstäuberplatte erzeugt wird.

**40.** Verfahren nach einem der Ansprüche 34 bis 39, dadurch gekennzeichnet, daß das Verdampfungs-Kondensatspray durch Auftreffen von Tropfen eines durch Zerfall des Kondensatstrahls entstandenen Kondensatsprays auf eine Zerstäuberplatte erzeugt wird.

**41.** Verfahren nach einem der Ansprüche 39 oder 40, dadurch gekennzeichnet, daß ein Lochblech als Zerstäuberplatte verwendet wird.

**42.** Verfahren nach einem der Ansprüche 39 bis 41, dadurch gekennzeichnet, daß eine unter einem Winkel von ungefähr 50° bis ungefähr 75° gegen die Richtung des frei fallenden Kondensatstrahls ausgerichtete Zerstäuberplatte verwendet wird.

**43.** Verfahren nach einem der Ansprüche 39 bis 42, dadurch gekennzeichnet, daß ein Kondensatdurchlaß in der Zerstäuberplatte während des Betriebs der Feuerungsanlage geöffnet und während Betriebspausen der Feuerungsanlage geschlossen wird.

**44.** Verfahren nach einem der Ansprüche 39 bis 43, dadurch gekennzeichnet, daß mehrere Zerstäuberplatten verwendet werden.

**45.** Verfahren nach einem der voranstehenden Ansprüche, dadurch gekennzeichnet, daß mittels eines in dem Kondensatkreislauf angeordneten Kondensat-Heizwasser-Wärmetauschers in dem Restwärmetauscher aus dem Abgas aufgenommene Wärme von dem Kondensat an Heizwasser in einem Heizwasserkreislauf abgegeben wird.

**46.** Verfahren nach einem der voranstehenden Ansprüche, dadurch gekennzeichnet, daß mittels eines in dem Kondensatkreislauf angeordneten Kondensat-Brauchwasser-Wärmetauschers in dem Restwärmetauscher aus dem Abgas aufgenommene Wärme von dem Kondensat an Brauchwasser in einer Brauchwasserzuführleitung abgegeben wird.

**47.** Verfahren nach einem der Ansprüche 45 oder 46, dadurch gekennzeichnet, daß eine Kondensatströmung durch den Kondensatkreislauf nach Abschalten der Feuerungsanlage während einer Nachlaufzeit aufrechterhalten wird.

**48.** Verfahren nach Anspruch 47, dadurch gekennzeichnet, daß während der Nachlaufzeit zumindest ein Teil des im Kondensatkreislauf umlaufenden Kondensats an einer Einrichtung zum Erzeugen des frei durch den Restwärmetauscher fallenden Kondensatstrahls vorbeigeführt wird.

**49.** Vorrichtung zur Nutzung der restlichen fühlbaren und der latenten Wärme (Restwärme) eines Abgases einer Feuerungsanlage mit einem Kondensatkreislauf, der einen von dem Abgas durchströmten Restwärmetauscher (44) umfaßt, in dem in dem Abgas enthaltener Wasserdampf zumindest teilweise zu einem Kondensat kondensierbar ist,

dadurch gekennzeichnet, daß der Restwärmetauscher (44) eine Einrichtung zum Erzeugen eines Kondensatstrahls (178) umfaßt, durch die mindestens ein frei durch den Restwärmetauscher (44) fallender und in dem Restwärmetauscher (44) in ein monodisperses Kondensatspray (180) zerfallender Kondensatstrahl (178) in der Weise erzeugbar ist, daß im zeitlichen Mittel die in Form von in dem Restwärmetauscher (44) aus dem Kondensatstrahl (178) gebildeten Kondensattropfen mit dem Abgas zu einem Abgasaustritt (52) des Restwärmetauschers (44) mitgeführte Kondensatmenge kleiner ist als die im Restwärmetauscher (44) durch Kondensation aus dem Abgas netto gebildete Kondensatmenge.

50. Vorrichtung nach Anspruch 49, dadurch gekennzeichnet, daß mittels der Einrichtung zum Erzeugen eines Kondensatstrahls (178) mindestens ein frei durch den Restwärmetauscher (44) fallender Kondensatstrahl (178) in der Weise erzeugbar ist, daß im zeitlichen Mittel die in Form von in dem Restwärmetauscher (44) aus dem Kondensatstrahl (178) gebildeten Kondensattropfen mit dem Abgas zu dem Abgasaustritt (52) des Restwärmetauschers (44) mitgeführte Kondensatmenge kleiner ist als ungefähr 10%, vorzugsweise kleiner als ungefähr 4%, der im Restwärmetauscher (44) durch Kondensation aus dem Abgas netto gebildeten Kondensatmenge.

51. Vorrichtung nach Anspruch 50, dadurch gekennzeichnet, daß die Einrichtung zum Erzeugen eines Kondensatstrahls (178) eine von dem Kondensat durchströmbare Düsenbohrung (138) mit einer Eintrittsöffnung und einer Austrittsöffnung umfaßt.

52. Vorrichtung nach Anspruch 51, dadurch gekennzeichnet, daß die Reynolds-Zahl der Kondensatströmung an der Austrittsöffnung der Düsenbohrung (138) auf einen Wert kleiner als ungefähr 5.000, vorzugsweise kleiner als ungefähr 2.500, einstellbar ist.

53. Vorrichtung nach einem der Ansprüche 51 oder 52, dadurch gekennzeichnet, daß die Reynolds-Zahl der Kondensatströmung an der Austrittsöffnung der Düsenbohrung (138) auf einen Wert größer als ungefähr 100, vorzugsweise größer als ungefähr 500, einstellbar ist.

54. Vorrichtung nach einem der Ansprüche 51 bis 53, dadurch gekennzeichnet, daß die Düsenbohrung (138) einen Düsenkanal (146) umfaßt, dessen Länge mindestens dem ungefähr 3-fachen Durchmesser der Austrittsöffnung der Düsenbohrung (138) entspricht.

55. Vorrichtung nach einem der Ansprüche 51 bis 54, dadurch gekennzeichnet, daß die Düsenbohrung (138) einen Düsenkanal (146) umfaßt, dessen Länge höchstens dem ungefähr 5-fachen Durchmesser der Austrittsöffnung der Düsenbohrung (138) entspricht.

56. Vorrichtung nach einem der Ansprüche 51 bis 54, dadurch gekennzeichnet, daß die Düsenbohrung (138) einen im wesentlichen zylindrischen Düsenkanal (146) umfaßt.

57. Vorrichtung nach Anspruch 56, dadurch gekennzeichnet, daß die Düsenbohrung (138) einen konischen Einlauf (142) mit einem Öffnungswinkel von weniger als ungefähr 60° und mit einer Länge, die mindestens dem ungefähren Durchmesser der Austrittsöffnung der Düsenbohrung (138) entspricht, aufweist.

58. Vorrichtung nach Anspruch 56, dadurch gekennzeichnet, daß die Düsenbohrung (138) einen gerundeten Einlauf (142) mit einem Krümmungsradius, der mindestens dem ungefähren Durchmesser der Austrittsöffnung der Düsenbohrung (138) entspricht, aufweist.

59. Vorrichtung nach einem der Ansprüche 51 bis 55, dadurch gekennzeichnet, daß die Düsenbohrung (138) einen sich zu der Austrittsöffnung hin konisch verjüngenden Düsenkanal (146) aufweist.

60. Vorrichtung nach Anspruch 59, dadurch gekennzeichnet, daß der Düsenkanal (146) einen Öffnungswinkel von weniger als ungefähr 10° aufweist.

61. Vorrichtung nach einem der Ansprüche 59 oder 60, dadurch gekennzeichnet, daß die Düsenbohrung (138) einen konischen Einlauf (142) mit einem Öffnungswinkel von weniger als ungefähr 60° und mit einer Länge, die mindestens einem Fünftel des ungefähren Durchmessers der Austrittsöffnung der Düsenbohrung (138) entspricht, aufweist.

62. Vorrichtung nach einem der Ansprüche 59 oder 60, dadurch gekennzeichnet, daß die Düsenbohrung (138) einen abgerundeten Einlauf (142) mit einem Krümmungsradius, der mindestens einem Fünftel des ungefähren Durchmessers der Austrittsöffnung der Düsenbohrung (138) entspricht, aufweist.

63. Vorrichtung nach einem der Ansprüche 51 bis 62, dadurch gekennzeichnet, daß die Einrichtung zum Erzeugen eines Kondensatstrahls (178) mehrere von dem Kondensat durchströmbare Düsenbohrungen (138) umfaßt.

**64.** Vorrichtung nach Anspruch 63, dadurch gekennzeichnet, daß die Mittelachsen (144) einander benachbarter Düsenbohrungen (138) jeweils einen Abstand voneinander aufweisen, der mindestens dem 5-fachen ungefähren Durchmesser der Austrittsöffnung einer Düsenbohrung (138) entspricht.

**65.** Vorrichtung nach Anspruch 64, dadurch gekennzeichnet, daß die Mittelachsen (144) einander benachbarter Düsenbohrungen (138) jeweils einen Abstand voneinander aufweisen, der mindestens dem 8-fachen ungefähren Durchmesser der Austrittsöffnung einer Düsenbohrung (138) entspricht.

**66.** Vorrichtung nach einem der Ansprüche 51 bis 65, dadurch gekennzeichnet, daß die Weberzahl der Tropfen des durch Zerfall des Kondensatstrahles (178) erzeugten Kondensatsprays auf einen Wert kleiner als ungefähr 10 einstellbar ist.

**67.** Vorrichtung nach Anspruch 66, dadurch gekennzeichnet, daß die Weberzahl der Tropfen des durch Zerfall des Kondensatstrahles (178) erzeugten Kondensatsprays (180) auf einen Wert kleiner als ungefähr 5 einstellbar ist.

**68.** Vorrichtung nach Anspruch 67, dadurch gekennzeichnet, daß die Weberzahl der Tropfen des durch Zerfall des Kondensatstrahles (178) erzeugten Kondensatsprays (180) auf einen Wert kleiner als ungefähr 2 einstellbar ist.

**69.** Vorrichtung zur Nutzung der restlichen fühlbaren und der latenten Wärme (Restwärme) eines Abgases einer Feuerungsanlage mit einem Kondensatkreislauf, der einen von dem Abgas durchströmten Restwärmetauscher (44) umfaßt, in dem in dem Abgas enthaltener Wasserdampf zumindest teilweise zu einem Kondensat kondensierbar ist,
dadurch gekennzeichnet, daß der Restwärmetauscher (44) eine Einrichtung zum Erzeugen eines Kondensatstrahls (178) umfaßt, durch die mindestens ein frei durch den Restwärmetauscher (44) fallender und während des freien Falls durch den Restwärmetauscher (44) zumindest bis in die Höhe des Abgasaustritts (52) im wesentlichen nicht in Tropfen zerfallender Kondensatstrahl (178) in der Weise erzeugbar ist, daß im zeitlichen Mittel die in Form von in dem Restwärmetauscher (44) aus dem Kondensatstrahl (178) gebildeten Kondensattropfen mit dem Abgas zu einem Abgasaustritt (52) des Restwärmetauschers (44) mitgeführte Kondensatmenge kleiner ist als die im Restwärmetauscher (44) durch Kondensation aus dem Abgas netto gebildete Kondensatmenge.

**70.** Vorrichtung nach Anspruch 69, dadurch gekennzeichnet, daß die Einrichtung zum Erzeugen des Kondensatstrahls (178) eine von dem Kondensat durchströmbare Düsenbohrung (138) mit einer Eintrittsöffnung und einer Austrittsöffnung umfaßt.

**71.** Vorrichtung nach Anspruch 70, dadurch gekennzeichnet, daß die Reynolds-Zahl der Kondensatströmung an der Austrittsöffnung der Düsenbohrung (138) auf einen Wert kleiner als ungefähr 20.000, vorzugsweise kleiner als ungefähr 10.000, einstellbar ist.

**72.** Vorrichtung nach einem der Ansprüche 70 oder 71, dadurch gekennzeichnet, daß die Reynolds-Zahl der Kondensatströmung an der Austrittsöffnung der Düsenbohrung (138) auf einen Wert größer als ungefähr 100 einstellbar ist.

**73.** Vorrichtung nach einem der Ansprüche 70 bis 72, dadurch gekennzeichnet, daß die Düsenbohrung (138) einen im wesentlichen zylindrischen Düsenkanal (146) aufweist.

**74.** Vorrichtung nach Anspruch 73, dadurch gekennzeichnet, daß der Düsenkanal (146) eine Länge aufweist, die kleiner ist als das 2-fache des ungefähren Durchmessers der Eintrittsöffnung der Düsenbohrung (138).

**75.** Vorrichtung nach Anspruch 74, dadurch gekennzeichnet, daß der Düsenkanal (146) eine Länge aufweist, die kleiner ist als die Hälfte des ungefähren Durchmessers der Eintrittsöffnung der Düsenbohrung (138).

**76.** Vorrichtung nach einem der Ansprüche 73 bis 75, dadurch gekennzeichnet, daß die Düsenbohrung (138) einen scharfkantigen Einlauf (182) mit einem Krümmungsradius, der kleiner ist als ein Viertel des ungefähren Durchmessers der Eintrittsöffnung der Düsenbohrung (138), aufweist.

**77.** Vorrichtung nach Anspruch 76, dadurch gekennzeichnet, daß die Düsenbohrung (138) einen scharfkantigen Einlauf (182) mit einem Krümmungsradius, der kleiner ist als ein Zehntel des ungefähren Durchmessers der Eintrittsöffnung der Düsenbohrung (138), aufweist.

**78.** Vorrichtung nach einem der Ansprüche 70 bis 77, dadurch gekennzeichnet, daß sich die Düsenbohrung (138) zu der Austrittsöffnung hin im wesentlichen konisch erweitert.

**79.** Vorrichtung nach einem der Ansprüche 51 bis 68 oder 70 bis 78, dadurch gekennzeichnet, daß der Durchmesser der Austrittsöffnung der Düsenbohrung (138) größer ist als ungefähr 0,2 mm.

**80.** Vorrichtung nach Anspruch 79, dadurch gekennzeichnet, daß der Durchmesser der Austrittsöffnung der Düsenbohrung (138) größer ist als ungefähr 0,4 mm.

**81.** Vorrichtung nach einem der Ansprüche 51 bis 68 oder 70 bis 80, dadurch gekennzeichnet, daß der Durchmesser der Austrittsöffnung der Düsenbohrung (138) kleiner ist als ungefähr 2,5 mm.

**82.** Vorrichtung nach einem der Ansprüche 48 bis 81, dadurch gekennzeichnet, daß die Vorrichtung (30) eine Einrichtung zum Erzeugen eines Verdampfungs-Kondensatsprays, dessen Tropfen durch den Abgasstrom im wesentlichen vollständig verdampfbar sind, in dem Restwärmetauscher (44) nahe eines Abgaseintritts (52) umfaßt.

**83.** Vorrichtung nach Anspruch 82, dadurch gekennzeichnet, daß mittels der Einrichtung zum Erzeugen des Verdampfungs-Kondensatsprays ein Verdampfungs-Kondensatspray mit einer arithmetischen mittleren Tropfengröße zwischen ungefähr 10 μm und ungefähr 100 μm erzeugbar ist.

**84.** Vorrichtung nach einem der Ansprüche 82 oder 83, dadurch gekennzeichnet, daß mittels der Einrichtung zum Erzeugen des Verdampfungs-Kondensatsprays (187) ein Verdampfungs-Kondensatspray (187) aus einer Kondensatmenge erzeugbar ist, die im zeitlichen Mittel höchstens ungefähr ein Zehntel, vorzugsweise höchstens ungefähr ein Hundertstel, der in den Restwärmetauscher (44) eintretenden Kondensatmenge beträgt.

**85.** Vorrichtung nach einem der Ansprüche 82 bis 84, dadurch gekennzeichnet, daß mittels der Einrichtung zur Erzeugung des Verdampfungs-Kondensatsprays (187) ein Verdampfungs-Kondensatspray (187) aus einer Kondensatmenge erzeugbar ist, die im zeitlichen Mittel ungefähr der in dem Restwärmetauscher (44) durch Kondensation aus dem Abgas netto gebildeten Kondensatmenge entspricht.

**86.** Vorrichtung nach einem der Ansprüche 82 bis 85, dadurch gekennzeichnet, daß die Einrichtung zum Erzeugen des Verdampfungs-Kondensatsprays (187) eine Zerstäuberdüse (188) umfaßt.

**87.** Vorrichtung nach einem der Ansprüche 82 bis 86, dadurch gekennzeichnet, daß die Einrichtung zum Erzeugen des Verdampfungs-Kondensatsprays (187) mindestens eine Zerstäuberplatte (194) zum Zerstäuben eines auf dieselbe auftreffenden Kondensatstrahls (178) umfaßt.

**88.** Vorrichtung nach einem der Ansprüche 82 bis 87, dadurch gekennzeichnet, daß die Einrichtung zum Erzeugen des Verdampfungs-Kondensatsprays (187) mindestens eine Zerstäuberplatte (194) zum Zerstäuben von auf dieselbe auftreffenden Tropfen eines durch Zerfall des Kondensatstrahls (178) entstandenen Kondensatsprays (180) umfaßt.

**89.** Vorrichtung nach einem der Ansprüche 87 oder 88, dadurch gekennzeichnet, daß die Zerstäuberplatte als Lochblech (208) ausgebildet ist.

**90.** Vorrichtung nach einem der Ansprüche 87 bis 89, dadurch gekennzeichnet, daß die Zerstäuberplatte (194) unter einem Winkel von ungefähr 50° bis ungefähr 75° gegen die Richtung des frei fallenden Kondensatstrahls (178) ausgerichtet ist.

**91.** Vorrichtung nach einem der Ansprüche 87 bis 90, dadurch gekennzeichnet, daß die Zerstäuberplatte (194) einen verschließbaren Kondensatdurchlaß (196) umfaßt.

**92.** Vorrichtung nach einem der Ansprüche 87 bis 91, dadurch gekennzeichnet, daß die Einrichtung zum Erzeugen des Verdampfungs-Kondensatsprays (187) mehrere Zerstäuberplatten (206; 208) umfaßt.

**93.** Vorrichtung nach einem der Ansprüche 49 bis 92, dadurch gekennzeichnet, daß der Kondensatkreislauf (62) einen Kondensat-Heizwasser-Wärmetauscher (96) zur Abgabe von in dem Restwärmetauscher (44) aus dem Abgas aufgenommener Wärme von dem Kondensat an Heizwasser in einem Heizwasserkreislauf (152) umfaßt.

**94.** Vorrichtung nach einem der Ansprüche 49 bis 93, dadurch gekennzeichnet, daß der Kondensatkreislauf (62) einen Kondensat-Brauchwasser-Wärmetauscher (114) zur Abgabe von in dem Restwärmetauscher (44) aus dem Abgas aufgenommener Wärme von dem Kondensat an Brauchwasser in einer Brauchwasserzuführleitung (166) umfaßt.

**95.** Vorrichtung nach einem der Ansprüche 93 oder 94, dadurch gekennzeichnet, daß eine Kondensatströmung durch den Kondensatkreislauf (62) nach Abschalten der Feuerungsanlage (32) während einer Nachlaufzeit aufrechterhaltbar ist.

**96.** Vorrichtung nach Anspruch 95, dadurch gekennzeichnet, daß der Kondensatkreislauf (62) eine Kondensat-Umgehungsleitung (130) umfaßt, durch die zumindest ein Teil des im Kondensatkreislauf (62) umlaufenden Kondensats an der Einrichtung zum Erzeugen des Kondensatstrahls während der Nachlaufzeit vorbeiführbar ist.

## Claims

1. Method of utilising the residual sensible heat and latent heat (residual heat) in the waste gas of a furnace, in which method the waste gas flows through a residual-heat-exchanger, water vapour contained in the said waste gas is condensed in the residual-heat-exchanger, at least partially, to form a condensate, and the said condensate is conveyed in a condensate circuit comprising the said residual-heat-exchanger, **characterised in that** at least one jet of condensate, which falls freely through the residual-heat-exchanger, is produced in the latter in such a way that it breaks up, in the said residual-heat-exchanger, into a monodisperse spray of condensate, and that, on average over time, the quantity of condensate which, in the form of drops of condensate formed in the residual-heat-exchanger from the jet of condensate, is carried along with the waste gas to a waste-gas exit belonging to the said residual-heat-exchanger, is smaller than the quantity of condensate formed net in the residual-heat-exchanger by condensation from the waste gas.

2. Method according to claim 1, characterised in that, on average over time, the quantity of condensate which, in the form of drops of condensate formed in the residual-heat-exchanger from the jet of condensate, is carried along with the waste gas to a waste-gas exit belonging to the said residual-heat-exchanger, is smaller than approximately 10%, and preferably smaller than approximately 4%, of the quantity of condensate formed net in the residual-heat-exchanger by condensation from the waste gas.

3. Method according to one of claims 1 or 2, characterised in that the jet of condensate is produced by the flowing of the said condensate out of a nozzle bore with an entry aperture and an exit aperture.

4. Method according to claim 3, characterised in that the Reynolds number of the flow of condensate at the exit aperture of the nozzle bore is set to a value lower than approximately 5,000, and preferably lower than approximately 2,500.

5. Method according to one of claims 3 or 4, characterised in that the Reynolds number of the flow of condensate at the exit aperture of the nozzle bore is set to a value greater than approximately 100, and preferably greater than approximately 500.

6. Method according to one of claims 3 to 5, characterised in that use is made of a nozzle bore with a nozzle duct whose length corresponds to at least approximately three times the diameter of the exit aperture of the said nozzle bore.

7. Method according to one of claims 3 to 6, characterised in that use is made of a nozzle bore with a nozzle duct whose length corresponds, at the most, to approximately 5 times the diameter of the exit aperture of the said nozzle bore.

8. Method according to one of claims 1 to 7, characterised in that use is made of a nozzle bore with a substantially cylindrical nozzle duct.

9. Method according to claim 8, characterised in that use is made of a nozzle bore which has a conical inlet with an aperture angle of less than approximately 60° and with a length which corresponds to at least the approximate diameter of the exit aperture of the said nozzle bore.

10. Method according to claim 8, characterised in that use is made of a nozzle bore which has a rounded inlet with a radius of curvature which corresponds to at least the approximate diameter of the exit aperture of the said nozzle bore.

11. Method according to one of claims 3 to 7, characterised in that use is made of a nozzle bore with a nozzle duct which tapers conically towards an exit aperture.

12. Method according to claim 11, characterised in that use is made of a nozzle bore whose nozzle duct has an aperture angle of less than approximately 10°.

13. Method according to one of claims 11 or 12, characterised in that use is made of a nozzle bore which has a conical inlet with an aperture angle of less than approximately 60° and with a length which corresponds to at least one fifth of the approximate diameter of the exit aperture of the said nozzle bore.

14. Method according to one of claims 11 or 12, characterised in that use is made of a nozzle bore which has a rounded inlet with a radius of curvature which corresponds to at least one fifth of the approximate diameter of the exit aperture of the said nozzle bore.

15. Method according to one of claims 3 to 14, characterised in that a number of jets of condensate are produced by the flowing of the condensate out of one nozzle bore in each case.

16. Method according to claim 15, characterised in that use is made of a number of nozzle bores whose central axes are, in each case, at a distance from one another which corresponds to at least five times the approximate diameter of the exit aperture of a nozzle bore.

17. Method according to claim 16, characterised in that use is made of a number of nozzle bores whose central axes are, in each case, at a distance from one another which corresponds to at least eight times the approximate diameter of the exit aperture of a nozzle bore.

18. Method according to one of claims 3 to 17, characterised in that the Weber number of the drops of the spray of condensate produced by the breaking-up of the jet of condensate is set to a value lower than approximately 10.

19. Method according to claim 18, characterised in that the Weber number of the drops of the spray of condensate produced by the breaking-up of the jet of condensate is set to a value lower than approximately 5.

20. Method according to claim 19, characterised in that the Weber number of the drops of the spray of condensate produced by the breaking-up of the jet of condensate is set to a value lower than approximately 2.

21. Method of utilising the residual sensible heat and latent heat (residual heat) in the waste gas of a furnace, in which method the waste gas flows through a residual-heat-exchanger, water vapour contained in the said waste gas is condensed in the residual-heat-exchanger, at least partially, to form a condensate, and the said condensate is conveyed in a condensate circuit comprising the said residual-heat-exchanger, **characterised in that** at least one jet of condensate, which falls freely through the residual-heat-exchanger, is produced in the latter in such a way that, during its free fall through the said residual-heat-exchanger, it substantially does not break up into drops until at least the level of the waste-gas exit, and that, on average over time, the quantity of condensate which, in the form of drops of condensate formed in the residual-heat-exchanger from the jet of condensate, is carried along with the waste gas to a waste-gas exit belonging to the said residual-heat-exchanger, is smaller than the quantity of condensate formed net in the residual-heat-exchanger by condensation from the waste gas.

22. Method according to claim 21, characterised in that the jet of condensate is produced by the flowing of the said condensate out of a nozzle bore with an entry aperture and an exit aperture.

23. Method according to claim 22, characterised in that the Reynolds number of the flow of condensate at the exit aperture of the nozzle bore is set to a value lower than approximately 20,000, and preferably lower than approximately 10,000.

24. Method according to one of claims 22 or 23, characterised in that the Reynolds number of the flow of condensate at the exit aperture of the nozzle bore is set to a value greater than approximately 100.

25. Method according to one of claims 22 to 24, characterised in that use is made of a nozzle bore with a substantially cylindrical nozzle duct.

26. Method according to claim 25, characterised in that use is made of a nozzle bore with a nozzle duct whose length is smaller than twice the approximate diameter of the entry aperture of the said nozzle bore.

27. Method according to claim 25, characterised in that use is made of a nozzle bore with a nozzle duct whose length is smaller than half the approximate diameter of the entry aperture of the said nozzle bore.

28. Method according to one of claims 25 to 27, characterised in that use is made of a nozzle bore which has a sharp-edged inlet with a radius of curvature which is smaller than one quarter of the approximate diameter of the entry aperture of the said nozzle bore.

29. Method according to claim 28, characterised in that use is made of a nozzle bore which has a sharp-edged inlet with a radius of curvature which is smaller than one tenth of the approximate diameter of the entry aperture of the said nozzle bore.

30. Method according to one of claims 22 to 24, characterised in that use is made of a nozzle bore which widens towards the exit aperture in a substantially conical manner.

31. Method according to one of claims 3 to 20 or 22 to 30, characterised in that use is made of a nozzle bore with an exit aperture whose diameter is greater than approximately 0.2 mm.

32. Method according to claim 31, characterised in that use is made of a nozzle bore with an exit aperture whose diameter is greater than approximately 0.4 mm.

33. Method according to one of claims 3 to 20 or 22 to 32, characterised in that use is made of a nozzle bore with an exit aperture whose diameter is smaller than approximately 2.5 mm.

34. Method according to one of the preceding claims, characterised in that a spray of vaporising condensate, the drops of which are substantially completely vaporised by the flow of waste gas, is produced in the residual-heat-exchanger close to a waste-gas entry through which the waste gas flows into the said residual-heat-exchanger.

35. Method according to claim 34, characterised in that a spray of vaporising condensate with an arithmetic mean droplet size of between approximately 10 μm and approximately 100 μm is produced.

36. Method according to one of claims 34 or 35, characterised in that, on average over time, the quantity of condensate used for producing the spray of vaporising condensate amounts, at the most, to approximately one tenth, and preferably, at the most, to approximately one hundredth of the quantity of condensate entering the residual-heat-exchanger.

37. Method according to one of claims 34 to 36, characterised in that, on average over time, the quantity of condensate used for producing the spray of vaporising condensate approximately corresponds to the quantity of condensate formed net in the residual-heat-exchanger by condensation from the waste gas.

38. Method according to one of claims 34 to 37, characterised in that the spray of vaporising condensate is produced by spraying from an atomiser nozzle.

39. Method according to one of claims 34 to 38, characterised in that the spray of vaporising condensate is produced by the impingement of the jet of condensate on an atomiser plate.

40. Method according to one of claims 34 to 39, characterised in that the spray of vaporising condensate is produced by the impingement, on an atomiser plate, of drops of a spray of condensate resulting from the breaking-up of the jet of condensate.

41. Method according to one of claims 39 or 40, characterised in that a perforated metal sheet is used as the atomiser plate.

42. Method according to one of claims 39 to 41, characterised in that use is made of an atomiser plate orientated at an angle of approximately 50° to approximately 75° in relation to the direction of the freely falling jet of condensate.

43. Method according to one of claims 39 to 42, characterised in that a condensate passage in the atomiser plate is open during operation of the furnace and closed during intermissions in the operation of the furnace.

44. Method according to one of claims 39 to 43, characterised in that a number of atomiser plates are used.

45. Method according to one of the preceding claims, characterised in that, by means of a condensate/heating-water heat-exchanger disposed in the condensate circuit, heat absorbed in the residual-heat-exchanger from the waste gas is transferred from the condensate to heating water in a heating-water circuit.

46. Method according to one of the preceding claims, characterised in that, by means of a condensate/service-water heat-exchanger disposed in the condensate circuit, heat absorbed in the residual-heat-exchanger from the waste gas is transferred from the condensate to service water in a service-water feed line.

47. Method according to one of claims 45 or 46, characterised in that a flow of condensate through the condensate circuit is maintained, after the switching-off of the furnace, during an after-running period.

48. Method according to claim 47, characterised in that, during the after-running period, at least part of the condensate circulating in the condensate circuit is conveyed past an arrangement for producing the jet of condensate which falls freely through the residual-heat-exchanger.

49. Device for utilising the residual sensible heat and the latent heat (residual heat) in the waste gas of a furnace, the said device having a condensate circuit which comprises a residual-heat-exchanger (44) through which the waste gas flows and in which water vapour contained in the said waste gas can be condensed, at least partially, to form a condensate, characterised in that the residual-heat-exchanger (44) comprises an arrangement for producing a jet (178) of condensate, by which arrangement at least one jet of condensate (178), which falls freely through the residual-heat-exchanger (44) and breaks up in the latter into a monodisperse spray of condensate (180), can be produced in such a way that, on average over time, the quantity of condensate which, in the form of drops of condensate formed in the residual-heat-exchanger (44) from the jet of condensate (178), is carried along with the waste gas to a waste-gas exit (52) belonging to the said residual-heat-exchanger (44), is smaller than the quantity of condensate formed net in the residual-heat-exchanger (44) by condensation from the waste gas.

50. Device according to claim 49, characterised in that, by means of the arrangement for producing a jet of condensate (178), at least one jet of condensate (178), which falls freely through the residual-heat-exchanger (44), can be produced in such a way that, on average over time, the quantity of condensate which, in the form of drops of condensate formed in the residual-heat-exchanger (44) from the jet of condensate (178), is carried along with the waste gas to the waste-gas exit (52) belonging to the said residual-heat-exchanger (44), is smaller than approximately 10%, and preferably smaller than approximately 4%, of the quantity of condensate formed net in the residual-heat-exchanger (44) by condensation from the waste gas.

51. Device according to claim 50, characterised in that the arrangement for producing a jet of condensate (178) comprises a nozzle bore (138) through which the condensate can flow and which has an entry aperture and an exit aperture.

52. Device according to claim 51, characterised in that the Reynolds number of the flow of condensate at the exit aperture of the nozzle bore (138) can be set to a value lower than approximately 5,000, and preferably lower than approximately 2,500.

53. Device according to one of claims 51 or 52, characterised in that the Reynolds number of the flow of condensate at the exit aperture of the nozzle bore (138) can be set to a value greater than approximately 100, and preferably greater than approximately 500.

54. Device according to one of claims 51 to 53, characterised in that the nozzle bore (138) comprises a nozzle duct (146) whose length corresponds to at least approximately 3 times the diameter of the exit aperture of the said nozzle bore (138).

55. Device according to one of claims 51 to 54, characterised in that the nozzle bore (138) comprises a nozzle duct (146) whose length corresponds, at the most, to approximately 5 times the diameter of the exit aperture of the said nozzle bore (138).

56. Device according to one of claims 51 to 54, characterised in that the nozzle bore (138) comprises a substantially cylindrical nozzle duct (146).

57. Device according to claim 56, characterised in that the nozzle bore (138) has a conical inlet (142) with an aperture angle of less than approximately 60° and with a length which corresponds to at least the approximate diameter of the exit aperture of the said nozzle bore (138).

58. Device according to claim 56, characterised in that the nozzle bore (138) has a rounded inlet (142) with a radius of curvature which corresponds to at least the approximate diameter of the exit aperture of the said nozzle bore (138).

59. Device according to one of claims 51 to 55, characterised in that the nozzle bore (138) has a nozzle duct (146) which tapers conically towards the exit aperture.

60. Device according to claim 59, characterised in that the nozzle duct (146) has an aperture angle of less than approximately 10°.

61. Device according to one of claims 59 or 60, characterised in that the nozzle bore (138) has a conical inlet (142) with an aperture angle of less than approximately 60° and with a length which corresponds to at least one fifth of the approximate diameter of the exit aperture of the said nozzle bore (138).

62. Device according to one of claims 59 or 60, characterised in that the nozzle bore (138) has a rounded inlet (142) with a radius of curvature which corresponds to at least one fifth of the approximate diameter of the exit aperture of the said nozzle bore (138).

63. Device according to one of claims 51 to 62, characterised in that the arrangement for producing a jet of condensate (178) comprises a number of nozzle bores (138) through which the condensate can flow.

64. Device according to claim 63, characterised in that the central axes (144) of mutually adjacent nozzle bores (138) are, in each case, at a distance from one another which corresponds to at least 5 times the approximate diameter of the exit aperture of a nozzle bore (138).

65. Device according to claim 64, characterised in that the central axes (144) of mutually adjacent nozzle bores (138) are, in each case, at a distance from one another which corresponds to at least 8 times the approximate diameter of the exit aperture of a nozzle bore (138).

66. Device according to one of claims 51 to 65, characterised in that the Weber number of the drops of the spray of condensate produced by the breaking-up of the jet of condensate (178) can be set to a value lower than approximately 10.

67. Device according to claim 66, characterised in that the Weber number of the drops of the spray of condensate (180) produced by the breaking-up of the jet of condensate (178) can be set to a value lower than approximately 5.

**68.** Device according to claim 67, characterised in that the Weber number of the drops of the spray of condensate (180) produced by the breaking-up of the jet of condensate (178) can be set to a value lower than approximately 2.

**69.** Device for utilising the residual sensible heat and the latent heat (residual heat) in the waste gas of a furnace, the said device having a condensate circuit which comprises a residual-heat-exchanger (44) through which the waste gas flows and in which water vapour contained in the said waste gas can be condensed, at least partially, to form a condensate, characterised in that the residual-heat-exchanger (44) comprises an arrangement for producing a jet (178) of condensate, by which arrangement at least one jet of condensate (178), which falls freely through the residual-heat-exchanger (44) and, during its free fall through the said residual-heat-exchanger (44), does not break up into drops until at least the level of the waste-gas exit (52), can be produced in such a way that, on average over time, the quantity of condensate which, in the form of drops of condensate formed in the residual-heat-exchanger (44) from the jet of condensate (178), is carried along with the waste gas to a waste-gas exit (52) belonging to the said residual-heat-exchanger (44), is smaller than the quantity of condensate formed net in the residual-heat-exchanger (44) by condensation from the waste gas.

**70.** Device according to claim 69, characterised in that the arrangement for producing the jet of condensate (178) comprises a nozzle bore (138) through which the condensate can flow and which has an entry aperture and an exit aperture.

**71.** Device according to claim 70, characterised in that the Reynolds number of the flow of condensate at the exit aperture of the nozzle bore (138) can be set to a value lower than approximately 20,000, and preferably lower than approximately 10,000.

**72.** Device according to one of claims 70 or 71, characterised in that the Reynolds number of the flow of condensate at the exit aperture of the nozzle bore (138) can be set to a value greater than approximately 100.

**73.** Device according to one of claims 70 to 72, characterised in that the nozzle bore (138) has a substantially cylindrical nozzle duct (146).

**74.** Device according to claim 73, characterised in that the nozzle duct (146) has a length which is smaller than twice the approximate diameter of the entry aperture of the nozzle bore (138).

**75.** Device according to claim 74, characterised in that the nozzle duct (146) has a length which is smaller than half the approximate diameter of the entry aperture of the nozzle bore (138).

**76.** Device according to one of claims 73 to 75, characterised in that the nozzle bore (138) has a sharp-edged inlet (182) with a radius of curvature which is smaller than one quarter of the approximate diameter of the entry aperture of the said nozzle bore (138).

**77.** Device according to claim 76, characterised in that the nozzle bore (138) has a sharp-edged inlet (182) with a radius of curvature which is smaller than one tenth of the approximate diameter of the entry aperture of the said nozzle bore (138).

**78.** Device according to one of claims 70 to 77, characterised in that the nozzle bore (138) widens towards the exit aperture in a substantially conical manner.

**79.** Device according to one of claims 51 to 68 or 70 to 78, characterised in that the diameter of the exit aperture of the nozzle bore (138) is greater than approximately 0.2 mm.

**80.** Device according to claim 79, characterised in that the diameter of the exit aperture of the nozzle bore (138) is greater than approximately 0.4 mm.

**81.** Device according to one of claims 51 to 68 or 70 to 80, characterised in that the diameter of the exit aperture of the nozzle bore (138) is smaller than approximately 2.5 mm.

**82.** Device according to one of claims 48 to 81, characterised in that the said device (30) comprises an arrangement for producing, in the residual-heat-exchanger (44) close to a waste-gas entry (52), a spray of vaporising condensate, the drops of which can be substantially completely vaporised by the flow of waste gas.

**83.** Device according to claim 82, characterised in that a spray of vaporising condensate with an arithmetic mean droplet size of between approximately 10 µm and approximately 100 µm can be produced by means of the arrangement for producing the said spray of vaporising condensate.

**84.** Device according to one of claims 82 or 83, characterised in that a spray of vaporising condensate (187) can be produced, by means of the arrangement for producing the said spray of vaporising condensate (187), from a quantity of condensate which, on average over time, amounts, at the most, to approximately one tenth, and preferably, at the most, to approximately one hundredth of the quantity of condensate entering the residual-heat-exchanger (44).

85. Device according to one of claims 82 to 84, characterised in that a spray of vaporising condensate (187) can be produced, by means of the arrangement for producing the said spray of vaporising condensate (187), from a quantity of condensate which, on average over time, approximately corresponds to the quantity of condensate formed net in the residual-heat-exchanger (44) by condensation from the waste gas.

86. Device according to one of claims 82 to 85, characterised in that the arrangement for producing the spray of vaporising condensate (187) comprises an atomiser nozzle (188).

87. Device according to one of claims 82 to 86, characterised in that the arrangement for producing the spray of vaporising condensate (187) comprises at least one atomiser plate (194) for atomising a jet of condensate (178) which impinges on the said atomiser plate.

88. Device according to one of claims 82 to 87, characterised in that the arrangement for producing the spray of vaporising condensate (187) comprises at least one atomiser plate (194) for atomising drops, which impinge on the said atomiser plate, of a spray of condensate (180) resulting from the breaking-up of the jet of condensate (178).

89. Device according to one of claims 87 or 88, characterised in that the atomiser plate is constructed as a perforated metal sheet (208).

90. Device according to one of claims 87 to 89, characterised in that the atomiser plate (194) is orientated at an angle of approximately 50° to approximately 75° in relation to the direction of the freely falling jet of condensate (178).

91. Device according to one of claims 87 to 90, characterised in that the atomiser plate (194) comprises a closable condensate passage (196).

92. Device according to one of claims 87 to 91, characterised in that the arrangement for producing the spray of vaporising condensate (187) comprises a number of atomiser plates (206; 208).

93. Device according to one of claims 49 to 92, characterised in that the condensate circuit (62) comprises a condensate/heating-water heat-exchanger (96) for transferring heat absorbed in the residual-heat-exchanger (44) from the waste gas, from the condensate to heating water in a heating-water circuit (152).

94. Device according to one of claims 49 to 93, characterised in that the condensate circuit (62) comprises a condensate/service-water heat-exchanger (114) for transferring heat absorbed in the residual-heat-exchanger (44) from the waste gas, from the condensate to service water in a service-water feed line (166).

95. Device according to one of claims 93 or 94, characterised in that a flow of condensate through the condensate circuit (62) is maintained, after the switching-off of the furnace (32), during an after-running period.

96. Device according to claim 95, characterised in that the condensate circuit (62) comprises a condensate bypass line (130) by means of which at least part of the condensate circulating in the said condensate circuit (62) can be conveyed, during the after-running period, past the arrangement for producing the jet of condensate.

## Revendications

1. Procédé pour utiliser la chaleur sensible résiduelle et la chaleur latente (chaleur résiduelle) des gaz de fumée d'une installation de chauffage, selon lequel les gaz de fumée traversent un échangeur de chaleur résiduelle, de la vapeur d'eau contenue dans les gaz de fumée est condensée au moins partiellement sous la forme d'un condensat dans l'échangeur de chaleur résiduelle et le condensat est envoyé dans un circuit à condensat qui inclut l'échangeur de chaleur résiduelle, caractérisé en ce qu'au moins un jet de condensat, qui tombe en chute libre à travers l'échangeur de chaleur résiduelle, est produit dans l'échangeur de chaleur résiduelle de telle sorte qu'il se dissocie dans l'échangeur de chaleur résiduelle en une pulvérisation monodispersée du condensat et qu'en moyenne dans le temps, la quantité de condensat entraînée sous la forme de gouttes de condensat formées dans l'échangeur de chaleur résiduelle à partir du jet de condensat, conjointement avec les gaz de fumée en direction d'une sortie des gaz de fumée de l'échangeur de chaleur résiduelle, est inférieure à la quantité de condensat nette formée par condensation à partir des gaz de fumée dans l'échangeur de chaleur résiduelle.

2. Procédé selon la revendication 1, caractérisé en ce qu'en moyenne dans le temps la quantité de condensat entraînée sous la forme de gouttes de condensat formées dans l'échangeur de chaleur résiduelle à partir du jet de condensat, conjointement avec les gaz de fumée en direction d'une sortie des gaz de fumée de l'échangeur de chaleur résiduelle, est inférieure à environ 10 % et est de préférence inférieure à environ 4 % de la quantité de condensat nette formée par condensation à partir des gaz de fumée dans l'échangeur de chaleur résiduelle.

**3.** Procédé selon l'une des revendications 1 ou 2, caractérisé en ce que le jet de condensat est produit par une sortie du condensat hors d'un perçage de buse possédant une ouverture d'entrée et une ouverture de sortie.

**4.** Procédé selon la revendication 3, caractérisé en ce que le nombre de Reynolds du courant de condensat au niveau de l'ouverture de sortie du perçage de buse est réglé sur une valeur inférieure à environ 5000 et de préférence inférieure à environ 2500.

**5.** Procédé selon l'une des revendications 3 ou 4, caractérisé en ce que le nombre de Reynolds de l'écoulement du condensat au niveau de la sortie du perçage de buse est réglé sur une valeur supérieure à environ 100 et de préférence supérieure à environ 500.

**6.** Procédé selon l'une des revendications 3 à 5, caractérisé en ce qu'on utilise un perçage de buse comportant un canal de buse, dont la longueur correspond au moins approximativement au triple du diamètre de sortie du perçage de buse.

**7.** Procédé selon l'une des revendications 3 à 6, caractérisé en ce qu'on utilise un perçage de buse possédant un canal de buse, dont la longueur correspond au maximum approximativement au quintuple du diamètre de l'ouverture de sortie du perçage de buse.

**8.** Procédé selon l'une des revendications 1 à 7, caractérisé en ce qu'on utilise un perçage de buse possédant un canal de buse essentiellement cylindrique.

**9.** Procédé selon la revendication 8, caractérisé en ce qu'on utilise un perçage de buse, qui possède une entrée conique ayant un angle d'ouverture inférieur à environ 60° et une longueur qui correspond au moins approximativement au diamètre de l'ouverture de sortie du perçage de buse.

**10.** Procédé selon la revendication 8, caractérisé en ce qu'on utilise un perçage de buse, qui possède un rayon de courbure, qui correspond au moins approximativement au diamètre de l'ouverture de sortie du perçage de buse.

**11.** Procédé selon l'une des revendications 3 à 7, caractérisé en ce qu'on utilise un perçage de buse possédant un canal de buse, qui se rétrécit avec une forme conique en direction de l'ouverture de sortie.

**12.** Procédé selon la revendication 11, caractérisé en ce qu'on utilise un perçage de buse, dont le canal de buse possède un angle d'ouverture inférieur à environ 10°.

**13.** Procédé selon l'une des revendications 11 ou 12, caractérisé en ce qu'on utilise un perçage de buse qui possède une entrée conique avec un angle d'ouverture inférieur à environ 60° et une longueur qui correspond au moins à un cinquième du diamètre approximatif de l'ouverture de sortie du perçage de buse.

**14.** Procédé selon l'une des revendications 11 ou 12, caractérisé en ce qu'on utilise un perçage de buse qui comporte une entrée arrondie ayant un rayon de courbure qui correspond au moins à un cinquième du diamètre approximatif de l'ouverture de sortie du perçage de buse.

**15.** Procédé selon l'une des revendications 3 à 14, caractérisé en ce qu'on produit plusieurs jets de condensat par évacuation du condensat à partir d'un perçage de buse respectif.

**16.** Procédé selon la revendication 15, caractérisé en ce qu'on utilise plusieurs perçages de buses, dont les axes médians sont séparés les uns des autres par une distance qui correspond au moins approximativement au quintuple du diamètre de l'ouverture de sortie d'un perçage de buse.

**17.** Procédé selon la revendication 16, caractérisé en ce qu'on utilise plusieurs perçages de buses, dont les axes médians sont séparés les uns des autres respectivement par une distance qui correspond au quintuple du diamètre approximatif de l'ouverture de sortie d'un perçage de buse.

**18.** Procédé selon l'une des revendications 3 à 17, caractérisé en ce que le nombre de Weber des gouttes de pulvérisation du condensat produites par la dissociation du jet de condensat, est réglé à une valeur inférieure à environ 10.

**19.** Procédé selon la revendication 18, caractérisé en ce que le nombre de Weber des gouttes de pulvérisation de condensat produites par dissociation du jet de condensat est réglé à une valeur inférieure à environ 5.

**20.** Procédé selon la revendication 19, caractérisé en ce que le nombre de Weber des gouttes de la pulvérisation de condensat produite par dissociation du jet de condensat est réglé à une valeur inférieure à environ 2.

21. Procédé pour utiliser la chaleur sensible résiduelle et la chaleur latente (chaleur résiduelle) des gaz de fumée d'une installation de chauffage, selon lequel les gaz de fumée traversent un échangeur de chaleur résiduelle, de la vapeur d'eau contenue dans les gaz de fumée est condensée au moins partiellement sous la forme d'un condensat dans l'échangeur de chaleur résiduelle et le condensat est envoyé dans un circuit à condensat qui inclut l'échangeur de chaleur résiduelle, caractérisé en ce que dans l'échangeur de chaleur résiduelle, au moins un jet de condensat qui tombe en chute libre à travers l'échangeur de chaleur résiduelle, est produit de telle sorte que pendant la chute libre à travers l'échangeur de chaleur résiduelle, le jet de condensat pour l'essentiel ne se dissocie pas en gouttes au moins jusqu'à hauteur de la sortie des gaz de fumée et qu'en moyenne dans le temps, la quantité de condensat entraînée sous la forme de gouttes de condensat formées dans l'échangeur de chaleur résiduelle à partir du jet de condensat, conjointement avec les gaz de fumée en direction d'une sortie des gaz de fumée de l'échangeur de chaleur résiduelle, est inférieure à la quantité de condensat nette formée par condensation à partir des gaz de fumée, dans l'échangeur de chaleur résiduelle.

22. Procédé selon la revendication 21, caractérisé en ce que le jet de condensat est produit par une sortie du condensat hors d'un perçage de buse possédant une ouverture d'entrée et une ouverture de sortie.

23. Procédé selon la revendication 22, caractérisé le nombre de Reynolds du courant de condensat au niveau de l'ouverture de sortie du perçage de buse est réglé sur une valeur inférieure à environ 20 000 et de préférence inférieure à environ 10 000.

24. Procédé selon l'une des revendications 22 ou 23, caractérisé en ce que le nombre de Reynolds de l'écoulement du condensat au niveau de la sortie du perçage de buse est réglé à une valeur supérieure à environ 100.

25. Procédé selon l'une des revendications 22 à 24, caractérisé en ce qu'on utilise un perçage de buse comportant un canal de buse essentiellement cylindrique.

26. Procédé selon la revendication 25, caractérisé en ce qu'on utilise un perçage de buse comportant un canal de buse, dont la longueur est inférieure au double du diamètre approximatif de l'ouverture d'entrée du perçage de buse.

27. Procédé selon la revendication 25, caractérisé en ce qu'on utilise un perçage de buse comportant un canal de buse, dont la longueur est inférieure à la moitié du diamètre approximatif de l'ouverture d'entrée du perçage de buse.

28. Procédé selon l'une des revendications 25 à 27, caractérisé en ce qu'on utilise un perçage de buse, qui possède une entrée à arêtes vives, ayant un rayon de courbure qui est inférieur au quart du diamètre approximatif de l'ouverture d'entrée du perçage de buse.

29. Procédé selon la revendication 28, caractérisé en ce qu'on utilise un perçage de buse, qui possède une entrée à arêtes vives, ayant un rayon de courbure qui est inférieur au dixième du diamètre approximatif de l'ouverture d'entrée du perçage de buse.

30. Procédé selon l'une des revendications 22 à 24, caractérisé en ce qu'on utilise un perçage de buse, qui s'élargit avec une forme essentiellement conique en direction de l'ouverture de sortie.

31. Procédé selon l'une des revendications 3 à 20 ou 22 à 30, caractérisé en ce qu'on utilise un perçage de buse possédant une ouverture de sortie dont le diamètre est supérieur à environ 0,2 mm.

32. Procédé selon la revendication 31, caractérisé en ce qu'on utilise un perçage de buse possédant une ouverture de sortie dont le diamètre est supérieur à environ 0,4 mm.

33. Procédé selon l'une des revendications 3 à 20 ou 22 à 32, caractérisé en ce qu'on utilise un perçage de buse possédant une ouverture de sortie, dont le diamètre est inférieur à environ 2,5 mm.

34. Procédé selon l'une des revendications précédentes, caractérisé en ce que dans l'échangeur de chaleur résiduelle est produite, à proximité d'une entrée des gaz de fumée, par laquelle les gaz de fumée pénètrent dans l'échangeur de chaleur résiduelle, une pulvérisation de condensat d'évaporation, dont les gouttes sont essentiellement entièrement évaporées par le courant de gaz de fumée.

35. Procédé selon la revendication 34, caractérisé en ce qu'une pulvérisation de condensat d'évaporation est produite avec des gouttes d'une taille arithmétique moyenne comprise entre environ 10 µm et environ 100 µm.

36. Procédé selon l'une des revendications 34 ou 35, caractérisé en ce qu'en moyenne dans le temps, la quantité de condensat utilisée pour produire la pulvérisation de condensat d'évaporation, est égale au maximum approximativement à un dixième et au maximum approximativement à un centième de la quantité de condensat qui pénètre dans l'échangeur de chaleur résiduelle.

**37.** Procédé selon l'une des revendications 34 à 36, caractérisé en ce qu'en moyenne dans le temps, la quantité de condensat utilisée pour la production d'une pulvérisation de condensat d'évaporation correspond approximativement à la quantité de condensat nette formée par condensation à partir des gaz de fumée dans l'échangeur de chaleur résiduelle.

**38.** Procédé selon l'une des revendications 34 à 37, caractérisé en ce que la pulvérisation de condensat d'évaporation est produite par pulvérisation à partir d'une buse de pulvérisation.

**39.** Procédé selon l'une des revendications 34 à 38, caractérisé en ce que la pulvérisation de condensat d'évaporation est produite par projection du jet de condensat sur une plaque de pulvérisation.

**40.** Procédé selon l'une ou l'autre des revendications 34 à 39, caractérisé en ce que la pulvérisation de condensat d'évaporation est produite par l'impact de gouttes d'une pulvérisation de condensat, formée par dissociation du jet de condensat, sur une plaque de pulvérisation.

**41.** Procédé selon l'une des revendications 39 ou 40, caractérisé en ce qu'on utilise une tôle perforée en tant que plaque de pulvérisation.

**42.** Procédé selon l'une des revendications 39 à 41, caractérisé en ce qu'on utilise une plaque de pulvérisation orientée en faisant un angle d'environ 50° à environ 75° par rapport à la direction du jet de condensat tombant en chute libre.

**43.** Procédé selon l'une des revendications 39 à 42, caractérisé en ce qu'un passage pour le condensat dans la plaque de pulvérisation est ouvert pendant le fonctionnement de l'installation de chauffage et est fermé pendant des pauses de fonctionnement de l'installation de chauffage.

**44.** Procédé selon l'une des revendications 39 à 43, caractérisé en ce qu'on utilise plusieurs plaques de pulvérisation.

**45.** Procédé selon l'une des revendications précédentes, caractérisé en ce que de la chaleur prélevée des gaz de fumée dans l'échangeur de chaleur résiduelle est délivrée, au moyen d'un échangeur de chaleur condensat - eau chaude disposé dans le circuit à condensat, du condensat à l'eau chaude dans un circuit d'eau chaude.

**46.** Procédé selon l'une des revendications précédentes, caractérisé en ce que de la chaleur prélevée des gaz de fumée dans l'échangeur de chaleur résiduelle est délivrée, au moyen d'un échangeur de chaleur condensat - eau industrielle disposé dans le circuit du condensat, du condensat à l'eau chaude dans une canalisation d'amenée d'eau industrielle.

**47.** Procédé selon l'une des revendications 45 ou 46, caractérisé en ce qu'un écoulement du condensat dans le circuit à condensat est maintenu après le débranchement de l'installation de chauffage pendant une période de marche à vide.

**48.** Procédé selon la revendication 47, caractérisé en ce que pendant la période de marche à vide, au moins une partie du condensat circulant dans le circuit à condensat circule devant un dispositif servant à produire le jet de condensat qui tombe en chute libre à travers l'échangeur de chaleur résiduelle.

**49.** Dispositif pour utiliser la chaleur sensible résiduelle et de la chaleur latente (chaleur résiduelle) de gaz de fumée d'une installation de chauffage comportant un circuit à condensat qui comporte un échangeur de chaleur résiduelle (44), qui est traversé par les gaz de fumée et dans lequel de la vapeur d'eau contenue dans les gaz de fumée peut être condensée au moins en partie pour former un condensat, caractérisé en ce que l'échangeur de chaleur résiduelle (44) comprend un dispositif pour produire un jet de condensat (178), au moyen duquel au moins un jet de condensat (178), qui tombe en chute libre à travers l'échangeur de chaleur résiduelle (44) et est dissocié dans l'échangeur de chaleur résiduelle (44) en une pulvérisation monodispersée de condensat (180), peut être produit de telle sorte qu'en moyenne dans le temps, la quantité de condensat entraînée sous la forme de gouttes de condensat formées dans l'échangeur de chaleur résiduelle (44) à partir du jet de condensat (178), conjointement avec les gaz de fumée en direction d'une sortie des gaz de fumée (52) de l'échangeur de chaleur résiduelle (44), est inférieure à la quantité de condensat nette formée dans l'échangeur de chaleur résiduelle (44) par condensation à partir des gaz de fumée.

**50.** Dispositif selon la revendication 49, caractérisé en ce qu'au moins un jet de condensat (170), qui tombe en chute libre à travers l'échangeur de chaleur résiduelle (44), peut être produit au moyen du dispositif servant à produire un jet de condensat (178) de telle sorte qu'en moyenne dans le temps, la quantité de condensat entraînée sous la forme de gouttes de condensat formées dans l'échangeur de chaleur résiduelle (44) à partir du jet de condensat (178), conjointement avec les gaz de fumée en direction de la sortie (52) des gaz de fumée de l'échangeur de chaleur résiduelle (44), est inférieure à environ 10 %, de préférence est inférieure à environ 4 % de la quantité de condensat nette formée dans l'échangeur de chaleur résiduelle (44) par condensation à partir des gaz de fumée.

51. Dispositif selon la revendication 50, caractérisé en ce que le dispositif servant à produire un jet de condensat (178) comprend un perçage de buse (138), qui peut être traversé par le condensat et comporte une ouverture d'entrée et une ouverture de sortie.

52. Dispositif selon la revendication 51, caractérisé en ce que le nombre de Reynolds du courant de condensat au niveau de l'ouverture de sortie du perçage de buse (138) est réglé sur une valeur inférieure à environ 5000 et de préférence inférieure à environ 2500.

53. Dispositif selon l'une des revendications 51 ou 52, caractérisé en ce que le nombre de Reynolds de l'écoulement du condensat au niveau de la sortie du perçage de buse (138) est réglé à une valeur supérieure à environ 100 et de préférence supérieure à environ 500.

54. Dispositif selon l'une des revendications 51 à 53, caractérisé en ce qu'on utilise un perçage de buse (138) comportant un canal de buse (146), dont la longueur correspond au moins approximativement au triple du diamètre de l'ouverture de sortie du perçage de buse (138).

55. Dispositif selon l'une des revendications 51 à 54, caractérisé en ce que le perçage de buse (138) comprend un canal de buse (146), dont la longueur correspond au maximum approximativement au quintuple du diamètre de l'ouverture de sortie du perçage de buse (138).

56. Dispositif selon l'une des revendications 51 à 54, caractérisé en ce que le perçage de buse (138) comprend un canal de buse (146) essentiellement cylindrique.

57. Dispositif selon la revendication 56, caractérisé en ce que le perçage de buse (138) comporte une entrée conique (142) possédant un angle d'ouverture inférieur à environ 60° et une longueur qui correspond au moins au diamètre approximatif de l'ouverture de sortie du perçage de buse (138).

58. Dispositif selon la revendication 56, caractérisé en ce que le perçage de buse (138) possède une entrée arrondie (142) possédant un rayon de courbure, qui possède au moins approximativement le diamètre de l'ouverture de sortie du perçage de buse (138).

59. Dispositif selon l'une des revendications 51 à 55, caractérisé en ce que le perçage de buse (138) possède un canal de buse (146) qui se rétrécit avec une forme conique en direction de l'ouverture de sortie.

60. Dispositif selon la revendication 59, caractérisé en ce que le canal de buse (146) possède un angle d'ouverture inférieur à environ 10°.

61. Dispositif selon l'une des revendications 59 ou 60, caractérisé en ce que le perçage de buse (128) possède une entrée conique (142) comportant un angle d'ouverture inférieur à environ 60° et une longueur qui correspond au moins à un cinquième du diamètre approximatif de l'ouverture de sortie du perçage de buse (138).

62. Dispositif selon l'une des revendications 59 ou 60, caractérisé en ce que le perçage de buse (138) possède une entrée arrondie (142) comportant un rayon de courbure qui correspond au moins à un cinquième du diamètre approximatif de l'ouverture de passage du perçage de buse (138).

63. Dispositif selon l'une des revendications 51 à 62, caractérisé en ce que le dispositif pour produire un jet de condensat (178) comprend plusieurs perçages de buses (138) pouvant être traversés par le condensat.

64. Dispositif selon la revendication 63, caractérisé en ce que les axes médians (144) de perçage de buses voisins (138) sont séparés respectivement par une distance qui est égale au moins au quintuple du diamètre approximatif de l'ouverture de sortie d'un perçage de buse (138).

65. Dispositif selon la revendication 64, caractérisé en ce que les axes médians (144) de perçages de buses voisins (138) sont séparés par une distance qui correspond à 8 fois le diamètre approximatif de l'ouverture de sortie du perçage de buse (138).

66. Dispositif selon l'une des revendications 51 à 65, caractérisé en ce que le nombre de Weber des gouttes de la pulvérisation de condensat, qui est produite par la dissociation du jet de condensat (178) est réglable sur une valeur inférieure à environ 10.

**67.** Dispositif selon la revendication 66, caractérisé en ce que le nombre de Weber des gouttes de la pulvérisation de condensat (180) produite par dissociation du jet de condensat (178), est réglable à une valeur à environ 5.

**68.** Dispositif selon la revendication 67, caractérisé en ce que le nombre de Weber des gouttes du jet de condensat (180) produit par dissociation du jet de condensat (178), est réglable sur une valeur inférieure à environ 2.

**69.** Dispositif pour utiliser la chaleur sensible et latente résiduelle et la chaleur latente (chaleur résiduelle) de gaz de fumée d'une installation de chauffage comportant un circuit à condensat qui comporte un échangeur de chaleur résiduelle (44), qui est traversé par les gaz de fumée et dans lequel de la vapeur d'eau contenue dans les gaz de fumée peut être condensée au moins en partie pour former un condensat, caractérisé en ce que l'échangeur de chaleur résiduelle (44) comprend un dispositif pour produire un jet de condensat (178), à l'aide duquel un jet de condensat (178), qui tombe en chute libre à travers l'échangeur de chaleur résiduelle (44) et pour l'essentiel ne se dissocie pas en gouttes pendant la chute libre à travers l'échangeur de chaleur résiduelle (44) au moins jusqu'à hauteur de la sortie (52) des gaz de fumée, peut être produit de telle sorte qu'en moyenne dans le temps, la quantité de condensat entraînée sous la forme de gouttes de condensat formées dans l'échangeur de chaleur résiduelle (44) à partir du jet de condensat (178), conjointement avec les gaz de fumée en direction d'une sortie (52) des gaz de fumée de l'échangeur de chaleur résiduelle (44), est inférieure à la quantité de condensat nette formée dans l'échangeur de chaleur résiduelle (44), par condensation à partir des gaz de fumée.

**70.** Dispositif selon la revendication 69, caractérisé en ce que le dispositif servant à produire le jet de condensat (178) comprend un perçage de buse (138) pouvant être traversé par le condensat et une ouverture d'entrée et une ouverture de sortie.

**71.** Dispositif selon la revendication 70, le nombre de Reynolds du courant de condensat au niveau de l'ouverture de sortie du perçage de buse (138) est réglé sur une valeur inférieure à environ 20 000 et de préférence inférieure à environ 10 000.

**72.** Dispositif selon l'une des revendications 70 ou 71, caractérisé en ce que le nombre de Reynolds de l'écoulement du condensat au niveau de la sortie du perçage de buse (138) est réglé à une valeur supérieure à environ 100.

**73.** Dispositif selon l'une des revendications 70 à 72, caractérisé en ce qu'on utilise un perçage de buse (138) comporte un canal de buse essentiellement cylindrique (146).

**74.** Dispositif selon la revendication 73, caractérisé en ce que le canal de buse (146) possède une longueur qui est inférieure au double du diamètre approximatif de l'ouverture d'entrée du perçage de buse (138).

**75.** Dispositif selon la revendication 74, caractérisé en ce que le canal de buse (146) possède une longueur qui est inférieure à la moitié du diamètre approximatif de l'ouverture d'entrée du perçage de buse (138).

**76.** Dispositif selon l'une des revendications 73 à 75, caractérisé en ce que le perçage de buse (138) possède une entrée (182) à arêtes vives, ayant un rayon de courbure qui est inférieur au quart du diamètre approximatif de l'ouverture d'entrée du perçage de buse (138).

**77.** Dispositif selon la revendication 76, caractérisé en ce que le perçage de buse (138) possède une entrée à arêtes vives (182) comportant un rayon de courbure qui est inférieur à un dixième du diamètre approximatif de l'ouverture d'entrée du perçage de buse (138).

**78.** Dispositif selon l'une des revendications 70 à 77, caractérisé en ce que le perçage de buse (138) s'élargit avec une forme essentiellement conique en direction d'une ouverture de sortie.

**79.** Dispositif selon l'une des revendications 51 à 68 ou 70 à 78, caractérisé en ce que le diamètre de l'ouverture de sortie du perçage de buse (138) est supérieur à environ 0,2 mm.

**80.** Dispositif selon la revendication 79, caractérisé en ce que le diamètre de l'ouverture de sortie du perçage de buse (138) est supérieur à environ 0,4 mm.

**81.** Dispositif selon l'une des revendications 51 à 68 ou 70 à 80, caractérisé en ce que le diamètre de l'ouverture de sortie du perçage de buse (138) est inférieur à environ 2,5 mm.

**82.** Dispositif selon l'une des revendications 48 à 81, caractérisé en ce que le dispositif (30) comporte un dispositif pour produire une pulvérisation de condensat d'évaporation, dont les gouttes peuvent être essentiellement évaporées par le courant de gaz de fumée, dans l'échangeur de chaleur résiduelle (44) à côté d'une entrée (52) pour les gaz de fumée.

**83.** Dispositif selon la revendication 82, caractérisé en ce qu'un jet de condensat d'évaporation comportant des gouttes, ayant une taille arithmétique moyenne comprise entre environ 10 mm et environ 100 mm, peut être produit à l'aide du dispositif servant à produire la pulvérisation de condensat d'évaporation.

**84.** Dispositif selon l'une des revendications 82 ou 83, caractérisé en ce qu'au moyen du dispositif pour produire la pulvérisation de condensat d'évaporation (187) on peut produire une pulvérisation de condensat d'évaporation (187) à partir d'une quantité de condensat qui, en moyenne dans le temps, est égale au maximum approximativement à un dixième et de préférence au maximum approximativement à un centième de la quantité de condensat qui apparaît dans l'échangeur de chaleur résiduelle (44).

**85.** Dispositif selon l'une des revendications 82 à 84, caractérisé en ce qu'une pulvérisation de condensat d'évaporation (187) peut être produite au moyen du dispositif servant à produire la pulvérisation de condensat d'évaporation (187), à partir d'une quantité de condensat, qui correspond approximativement, en moyenne dans le temps, à la quantité de condensat nette formée par condensation à partir des gaz de fumée dans l'échangeur de chaleur résiduelle (44).

**86.** Dispositif selon l'une des revendications 82 à 85, caractérisé en ce que le dispositif servant à produire la pulvérisation de condensat d'évaporation (187) comprend une buse de pulvérisation (188).

**87.** Dispositif selon l'une des revendications 82 à 86, caractérisé par le fait que le dispositif servant à produire la pulvérisation de condensat d'évaporation (187) comprend au moins une plaque de pulvérisation (194) servant à pulvériser un jet de condensat (178) qui rencontre cette plaque.

**88.** Dispositif selon l'une des revendications 82 à 87, caractérisé en ce que le dispositif servant à produire la pulvérisation de condensat d'évaporation (186) comprend au moins une plaque de pulvérisation (194) servant à pulvériser des gouttes, qui rencontrent cette plaque, d'une pulvérisation de condensat (180) obtenue par dissociation du jet de condensat (178).

**89.** Dispositif selon l'une des revendications 87 ou 88, caractérisé en ce que la plaque de pulvérisation est agencée sous la forme d'une tôle perforée (208).

**90.** Dispositif selon l'une des revendications 87 à 89, caractérisé en ce que la plaque de pulvérisation (194) est dirigée sous un angle d'environ 50° à environ 75° par rapport à la direction du jet de condensat (178) qui tombe en chute libre.

**91.** Dispositif selon l'une des revendications 87 à 90, caractérisé en ce que la plaque de pulvérisation (194) comprend un passage (196) pour le condensat, qui peut être fermé.

**92.** Dispositif selon l'une des revendications 87 à 91, caractérisé en ce que le dispositif servant à produire la pulvérisation de condensat d'évaporation (187) comprend plusieurs plaques de pulvérisation (206; 208).

**93.** Dispositif selon l'une des revendications 49 à 92, caractérisé en ce que le circuit à condensat (62) comprend un échangeur de chaleur condensat - eau chaude (96) servant à délivrer de la chaleur, qui est prélevée du gaz de fumée dans l'échangeur de chaleur résiduelle (44), depuis le condensat à l'eau chaude dans un circuit d'eau chaude (152).

**94.** Dispositif selon l'une, des revendications 49 à 93, caractérisé en ce que le circuit à condensat (62) comporte un échangeur de chaleur condensat - eau industrielle (114) servant à délivrer de la chaleur prélevée du gaz de fumée dans l'échangeur de chaleur résiduelle (44), depuis le condensat à l'eau industrielle dans une canalisation (166) d'amenée de l'eau industrielle.

**95.** Dispositif selon l'une des revendications 93 ou 94, caractérisé en ce qu'un écoulement du condensat peut être maintenu dans le circuit à condensat (62) après interruption de l'installation de chauffage (32), pendant une période de marche à vide.

**96.** Dispositif selon la revendication 95, caractérisé en ce que le circuit à condensat (62) comprend une canalisation (130) de renvoi du condensat, au moyen de laquelle au moins une partie du condensat qui circule dans le circuit du condensat (62), peut passer devant le dispositif servant à produire le jet de condensat pendant la période de marche à vide.

FIG.1

EP 0 775 872 B1

# FIG.2

EP 0 775 872 B1

FIG. 3

FIG. 4

FIG. 5

FIG. 6

41

FIG.7

FIG.8

# FIG. 9

# FIG.10

FIG.11

FIG.12

FIG.13

FIG.14

FIG.15

FIG.16

FIG.17a

FIG.17b

FIG.17c

FIG.17d

FIG.18

EP 0 775 872 B1

FIG.19